(19) **Europäisches Patentamt**

**European Patent Office**

**Office européen des brevets**

(11) **EP 1 077 320 B1**

(12) **EUROPEAN PATENT SPECIFICATION**

(45) Date of publication and mention
of the grant of the patent:
**24.11.2004 Bulletin 2004/48**

(51) Int Cl.7: **F02D 41/38**, F02D 21/08,
F02B 37/24, F02D 33/02

(21) Application number: **00117728.6**

(22) Date of filing: **17.08.2000**

(54) **Control for diesel engine**

Regelung für einen Dieselmotor

Contrôle pour moteur diesel

(84) Designated Contracting States:
**DE FR GB**

(30) Priority: **19.08.1999 JP 23312499
25.11.1999 JP 33417099
19.08.1999 JP 23313799
19.08.1999 JP 23315299
19.08.1999 JP 23316599
31.08.1999 JP 24448099**

(43) Date of publication of application:
**21.02.2001 Bulletin 2001/08**

(73) Proprietor: **Nissan Motor Co., Ltd.
Yokohama-shi, Kanagawa 221-0023 (JP)**

(72) Inventors:
• **Itoyama, Hiroyuki
Yokohama-shi, Kanagawa 236-0057 (JP)**
• **Shirakawa, Takashi
Yokosuka-shi, Kanagawa 237-0062 (JP)**
• **Miura, Manabu
Zushi-shi, Kanagawa 249-0003 (JP)**
• **Miwa, Hiromichi
Yokohama-shi, Kanagawa 244-0801 (JP)**

(74) Representative: **Hager, Thomas J., Dipl.-Ing.
Hoefer & Partner
Patentanwälte
Gabriel-Max-Strasse 29
81545 München (DE)**

(56) References cited:
EP-A- 0 774 574        EP-A- 0 899 444
EP-A- 0 965 740        EP-A- 1 024 261
EP-A- 1 024 272        DE-A- 4 029 086
DE-A- 19 801 395

**EP 1 077 320 B1**

**Description**

The present invention relates to control technique for a diesel engine, in particular of a type having an EGR system and a supercharger such as a turbocharger.

A published Japanese Patent Application, (*KoKai*) Publication No. H07(1995)-139413 shows a control system for a diesel engine equipped with a turbocharger and an EGR valve. Control in a combination of a variable capacity turbocharger and an EGR valve is discussed in ImechE 1997 C524/127/97 and Collected Papers published by Society of Automotive Engineers of Japan (*Gakujutsu Koenkai Maezurishu* 965 1996-10, pages 193~196). Conventional systems are arranged to hold a turbocharger nozzle opening degree at a constant value during control of EGR and to hold an EGR valve opening degree at a constant value during control of boost pressure, to achieve optimum exhaust emission.

From the viewpoint of the boost pressure control, the EGR control plays a role in the boost pressure control. The boost pressure is influenced by a variation of the EGR quantity. On the other hand, a variation in the boost pressure varies the exhaust gas pressure and thereby varies the EGR quantity. Therefore, it is not possible to control the boost pressure and the EGR quantity independently. Moreover, the boost pressure and EGR quantity tend to act as a disturbance in the control of each other. The conventional control strategy is more or less the result of tradeoff.

When one is changed, one way to ensure the control accuracy is to adjust the other. However, the adjustment of one requires further adjustment of the other. Therefore, this method is not adequate to ensure the control accuracy during a transient period.

Thus, the boost pressure and EGR quantity exert influence on each other, and this complicates the control by imposing an additional requirement for adjusting the nozzle opening in response to a change in the EGR quantity. Specifically in the transient state, the control accuracy becomes poor in both quantities.

In the case of a diesel engine, each of the boost pressure and EGR quantity has sensitivity to the amount of harmful substance in exhaust gases, so that the reduction thereof requires optimum setting of the boost pressure and EGR quantity. Specifically in order to achieve desired values of the boost pressure and EGR quantity in a transient state, and thereby to attain both the exhaust emission control and driveability, it is desirable to vary both actively.

EP 0 774 574 A1 describes a diesel engine with an excess air rate detecting and controlling apparatus including an EGR passage, an EGR valve and a turbocharger. The turbocharger is controlled only by a waste gate valve which is opened and closed by a waste gate actuator operated in response to the pressure on the downstream side of the turbine. The waste gate actuator can not control the waste gate valve in accordance with the calculated EGR control target parameter and the calculated intake control target parameter.

EP 1 024 272 A1 refers to a control method for turbocharged diesel engines having an exhaust gas recirculation system and a variable geometry turbocharger which is provided with inlet guide vanes. A turbo charger control unit is produced in accordance with a variable geometry turbocharger parameter without regard to an EGR parameter.

DE 198 01 395 A1 shows a diesel engine including a turbocharger and an EGR system. A controller in an automatic control unit controls a turbine cross section of the turbocharger in accordance with an intake air flow rate sensed by an air flow sensor in a low load-rotational speed range and in accordance with a charging pressure in a higher load-speed range. Thus, the turbocharger is controlled without regard to a target of the EGR control.

It is an object of the present invention to improve the controllability of supercharger and EGR in steady and transient states.

According to the invention, the object is solved by the features of the independent claims. The sub-claims contain further preferred developments of the invention.

## BRIEF DESCRIPTION OF THE DRAWINGS

FIG. 1 is a schematic view showing a control system for a diesel engine according to one embodiment of the present invention.

FIG. 2 is a schematic view showing a common rail fuel injection system shown in FIG. 1.

FIG. 3 is a flowchart illustrating calculation of a target fuel injection quantity.

FIG. 4 is a graph showing a map characteristic of the target fuel injection quantity.

FIG. 5 is a flowchart illustrating calculation of an EGR valve opening area.

FIG. 6 is a graph showing a characteristic of an EGR drive signal with respect to the EGR valve opening area.

FIG. 7 is a flowchart illustrating calculation of a target EGR quantity.

FIG. 8 is a flowchart illustrating calculation of a cylinder intake air quantity.

FIG. 9 is a flowchart illustrating detection of the intake air quantity.

FIG. 10 is a graph showing a characteristic of the intake air quantity with respect to an air flowmeter output voltage.

FIG. 11 is a flowchart illustrating calculation of a target EGR rate.

FIG. 12 is a graph showing a map characteristic of a base target EGR rate.

FIG. 13 is a graph showing a table characteristic of a water temperature correction coefficient .

FIG. 14 is a flowchart illustrating detection of complete explosion.

FIG. 15 is a flowchart illustrating calculation of a control command duty ratio to a vacuum control valve for a turbocharger in a first practical example of the embodiment.

FIG. 16 is a flowchart illustrating calculation of the control command duty in a second practical example of the embodiment.

FIG. 17 is a flowchart illustrating calculation of an actual EGR rate.

FIG. 18 is a flowchart illustrating calculation of a collector volume time constant parameter.

FIG. 19 is a graph showing a map characteristic of a base volumetric efficiency parameter.

FIG. 20 is a flowchart illustrating calculation of a target intake air quantity.

FIG. 21 is a graph showing a map characteristic of a base target intake air quantity at the time of EGR operation.

FIG. 22 is a graph showing a map characteristic of a target intake air quantity correction coefficient.

FIG. 23 is a graph showing a map characteristic of the target intake air quantity at the time of EGR shutoff.

FIG. 24 is a flowchart illustrating calculation of an actual EGR quantity.

FIG. 25 is a flowchart illustrating calculation of a target opening ratio in the first practical example.

FIG. 26 is a graph showing a map characteristic of the target opening ratio.

FIG. 27 is a flowchart illustrating calculation of the target opening ratio in the second practical example.

FIG. 28 is a graph showing a map characteristic of the target opening ratio.

FIG. 29 is a flowchart illustrating calculation of a feedforward quantity of the target opening ratio.

FIG. 30 is a flowchart illustrating calculation of a feedback quantity of the target opening ratio.

FIG. 31 is a flowchart illustrating linearization.

FIG. 32 is a graph showing a table characteristic of the linearization.

FIG. 33 is a graph showing a characteristic between the opening area and boost pressure.

FIG. 34 is a flowchart illustrating signal transformation.

FIG. 35 is a flowchart illustrating setting of duty select signal flag.

FIG. 36 is a flowchart illustrating calculation of a duty ratio temperature correction quantity.

FIG. 37 is a graph showing a map characteristic of a base exhaust temperature.

FIG. 38 is a graph showing a temperature correction coefficient.

FIG. 39 is a graph showing a table characteristic of a temperature correction quantity.

FIG. 40 is a graph showing a temperature characteristic of a turbocharger driving actuator.

FIG. 41 is a graph showing a map characteristic of a duty ratio in a variable nozzle fully closed state.

FIG. 42 is a graph showing a map characteristic of the duty ratio in a variable nozzle fully open state.

FIG. 43 is a graph showing a map characteristic of the duty ratio in the variable nozzle fully closed state.

FIG. 44 is a graph showing a map characteristic of the duty ratio in the variable nozzle fully open state.

FIG. 45 is a graph showing hysteresis in conversion from a linearized command opening ratio to duty ratio.

FIG. 46 is a flowchart illustrating a verification control.

FIG. 47 is a flowchart illustrating setting of verification control command.

FIG. 48 is a graph showing a control pattern.

FIG. 49 is a graph showing a table characteristic of the duty ratio during the verification control.

FIG. 50 is a flowchart illustrating calculation of two feedback correction coefficients and learning correction coefficient in EGR control.

FIG. 51 is a flowchart illustrating setting of feedback permission flag.

FIG. 52 is a flowchart illustrating setting of learning reflection permission flag.

FIG. 53 is a flowchart illustrating setting of learning permission flag.

FIG. 54 is a flowchart illustrating calculation of EGR quantity feedback correction coefficient.

FIG. 55 is a graph showing a map characteristic of an EGR flow rate correction gain.

FIG. 56 is a graph showing a table characteristic of a temperature correction coefficient.

FIG. 57 is a flowchart illustrating calculation of EGR flow velocity feedback correction coefficient.

FIG. 58 is a graph showing a map characteristic of EGR flow velocity correction gain.

FIG. 59 is a graph showing a table characteristic of a water temperature correction coefficient.

FIG. 60 is a view showing a learning map of deviation ratio.

FIG. 61 is a flowchart illustrating update of learn value.

FIG. 62 is a graph showing a map characteristic of learning speed.

FIG. 63 is a flowchart illustrating calculation of EGR flow velocity.

FIG. 64 is a graph showing a map characteristic of the EGR flow velocity.

FIG. 65 is a graph showing waveforms when a change in the target intake air quantity is small.

FIG. 66 is a graph showing waveforms when a change in the target intake air quantity is large.

FIG. 67 is a flowchart illustrating calculation of the target opening ratio in a third practical example.

FIG. 68 is a graph showing a table characteristic of a opening ratio correction coefficient.

FIG. 69 is a flowchart illustrating calculation of the target opening ratio in a fourth practical example.

FIG. 70 is a graph showing a map characteristic of the target opening ratio at the time of low water temperature.

FIG. 71 is a graph showing a table characteristic of an interpolation ratio.

FIG. 72 is a graph showing an acceleration oriented map characteristic of the target opening ratio.

FIG. 73 is a graph showing characteristics of fuel consumption, exhaust emission, and intake air quantity with respect to the EGR rate and opening area.

FIG. 74 is a block diagram showing a variable nozzle control structure in a fifth practical example.

FIG. 75 is a flowchart illustrating calculation of the target opening ratio in the fifth practical example.

FIG. 76 is a view showing engine operating subregions and lattice points.

FIG. 77 is a view showing map characteristics of the target opening ratio.

FIG. 78 is a graph showing a characteristic of turbine efficiency in the fifth practical example.

FIG. 79 is a graph showing a turbine efficiency characteristic having a wide high efficiency band.

FIG. 80 is a graph showing a turbine efficiency characteristic having a narrow efficiency band.

FIG. 81 is a graph showing a relationship of the fuel consumption with respect to the opening ratio and EGR rate.

FIG. 82 is a graph showing a relationship of the fuel consumption with respect to the opening ratio and engine load.

FIG. 83 is a view showing a relationship between a cylinder intake air quantity Qac and cylinder intake EGR quantity Qec0 at different opening ratios in four different operating states.

FIG. 84 is a graph showing a map characteristic of the target opening ratio in an EGR shutoff region.

FIG. 85 is a flowchart illustrating calculation of the target opening ratio in a sixth practical example.

FIG. 86 is a view showing map characteristics of the target opening ratio.

FIG. 87 is a graph showing a map characteristic of a target common rail pressure.

FIG. 88 is a flowchart illustrating calculation of a common rail pressure correction ratio.

FIG. 89 is a graph showing a table characteristic of a common rail deviation correction coefficient.

FIG. 90 is a graph showing relationships of EGR quantity, EGR rate and EGR flow velocity.

FIGS. 91A~91D are graphs showing the results of simulation.

FIGS. 92A~92D are graphs showing the results of simulation.

FIG. 93 is a flowchart illustrating calculation of EGR flow velocity in a seventh practical example.

FIG. 94 is a flowchart illustrating calculation of a EGR flow rate learning correction coefficient in the seventh practical example.

FIG. 95 is a graph showing a map characteristic of a base target intake air quantity.

FIG. 96 is a graph showing a table characteristic of a target intake quantity correction coefficient.

FIG. 97 is a flowchart illustrating calculation of the EGR flow velocity learning correction coefficient in an eighth practical example.

FIG. 98 is a flowchart illustrating learning and updating.

FIG. 99 is a view showing a learning map of deviation ratio.

## DETAILED DESCRIPTION OF THE INVENTION

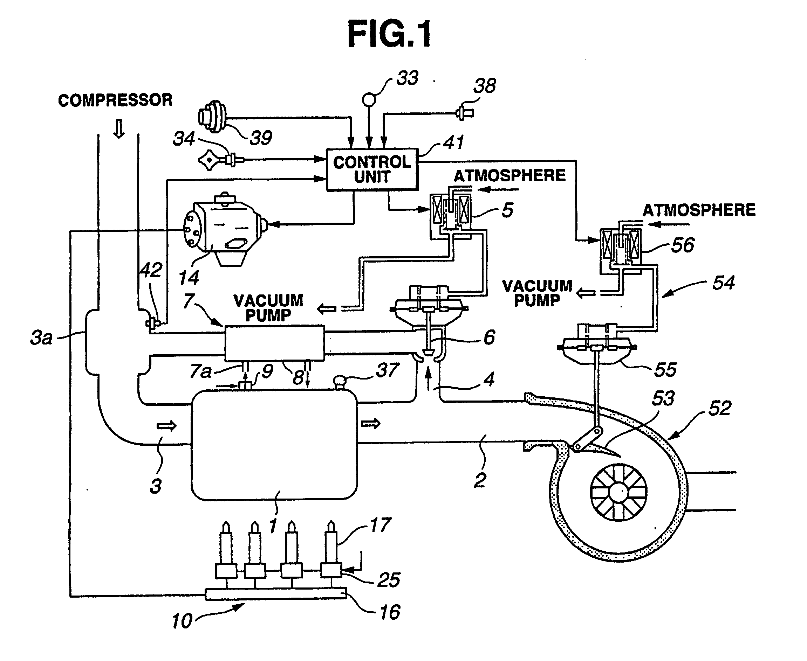

FIG. 1 shows a system of a diesel engine capable of performing low temperature premixed combustion generating heat in a pattern of single stage combustion. A similar diesel engine is disclosed in a published Japanese Patent Application, (*Kokai*) Publication No. H08(1996)-86251.

Generation of NOx is largely dependent on combustion temperature, and lowering the combustion temperature is effective for reduction of NOx. To achieve low temperature combustion by lowering of oxygen concentration with EGR, the low temperature premixed combustion engine system has, in an EGR passage 4 connecting an exhaust passage 2 and a collector section 3a of an intake passage 3, an EGR valve 6 of a diaphragm type responsive to a control vacuum (or negative pressure) supplied from a vacuum control valve 5.

Vacuum control valve 5 is driven by a duty control signal produced by a control unit 41. Thus, control unit 41 can control an EGR rate in accordance with operating conditions. For example, the EGR rate is set to the maximum of 100% in a low speed, low load region, and the EGR rate is decreased as the engine speed or load increases. When the load is high, the exhaust temperature increases, and the recirculation of the EGR gas in a large quantity increases the intake temperature, resulting in deterioration in the effect of NOx reduction, and shortening in the ignition delay of injected fuel to such an extent as to render unfeasible the premixed combustion. For these reasons, the EGR rate is decreased in a stepwise manner.

An EGR cooling device 7 is disposed in EGR passage 4. EGR gas cooling device 7 has a water jacket 8 formed around EGR passage 4, for circulation of part of the engine cooling water, and a cooling water flow control valve 9 provided at a cooling water inlet 7a of water jacket 7, for regulating the amount of circulation of the cooling water under the command of control unit 41. With flow control valve 9, control unit 41 can increase the cooling effect for the EGR gas by increasing the amount of circulation of the cooling water around EGR passage 4.

For promotion of combustion in each cylinder, there is further provided, in intake passage 3 near the intake port, a swirl control valve having a predetermined cutout. When the swirl control valve is closed in the low speed low load region under the control of control unit 41, the flow speed of the intake air inducted into the combustion chamber increases and a swirl is produced in the combustion chamber.

Each combustion chamber is a large diameter toroidal chamber having a piston cavity extending from the piston crown to a bottom in a cylindrical shape without a neck at the entrance. At the center in the bottom, there is formed a conical portion so designed as to eliminate the resistance against a swirling gas stream coming from the outside of the piston cavity at the later stage of the compression stroke, and to facilitate the mixture of air and fuel. As the piston descends in the combustion process, the swirl produced in the cylindrical piston cavity by the swirl control mechanism including the swirl control valve is diffused outside the piston cavity, and a swirl motion is sustained outside the piston cavity.

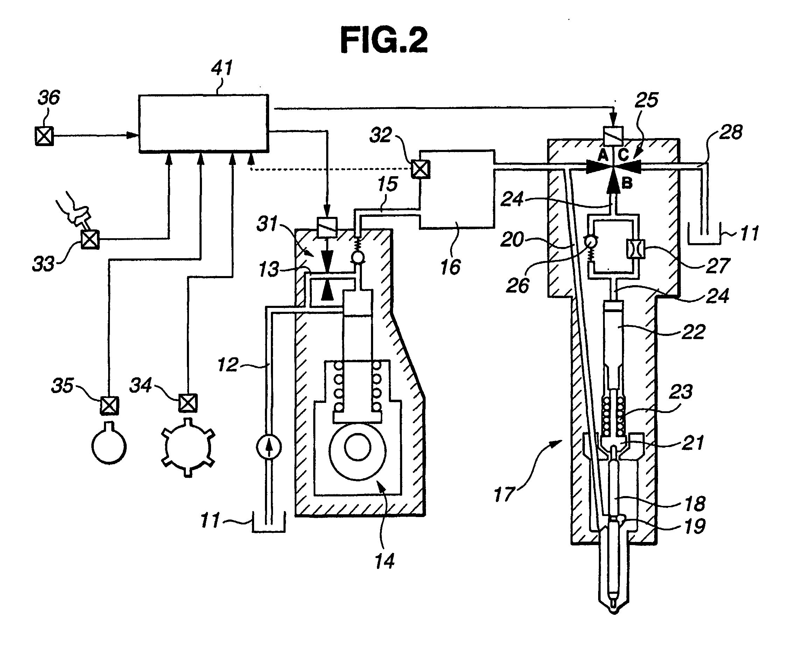

A common rail fuel injection system 10 is shown more in detail in FIG. 2. (A similar common rail injection system is shown in the 13th internal combustion engine symposium conference collected papers, pages 73~77.)

Main components of common rail fuel injection system 10 are; fuel tank 11, fuel supply passage 12, supply pump 14, common rail (accumulator chamber) 16, and nozzles 17 each for a unique one of the cylinders. The fuel pressurized by supply pump 14 is conveyed through fuel supply passage 12 and accumulated in accumulator chamber 16. The high pressure fuel in accumulator chamber 16 is distributed to fuel nozzles 17 for the cylinders.

Each nozzle 17 includes a needle valve 18, a nozzle chamber 19, a fuel supply passage 20 leading to nozzle chamber 19, a retainer 21, a hydraulic piston 22, a return spring 23 for urging needle valve 18 in a closing direction (downward as viewed in Fig. 2), a fuel supply passage 24 to hydraulic piston 22, and a three-way (solenoid) valve 25 disposed in passage 24. Three-way valve 25 has three ports A, B and C. In an off state (ports A and B are connected, and ports B and C are shut off) of three-way valve 25, passages 20 and 24 are connected, so that the high pressure fuel is supplied to both the upper side of hydraulic piston 22 and nozzle chamber 19. In this state, needle valve 18 is in a seated state because the pressure receiving area of hydraulic piston 22 is greater than that of needle valve 18. In an on state (ports A and B are shut off, and ports B and C are connected) of three-way valve 25, the fuel is drawn off from the upper side of hydraulic piston 22 through a return passage 28 to fuel tank 11, and the fuel pressure acting on hydraulic piston 22 decreases. Therefore, needle valve 18 moves upward as viewed in FIG. 2, and the fuel is injected through a spout hole at the tip of nozzle 17. When three-way solenoid valve 25 is turned to the off state, the high pressure fuel is introduced again from accumulator chamber 16 to hydraulic valve 22 and the fuel injection terminates. Thus, the control system can adjust the fuel injection start timing by adjusting the timing of switching three-way valve 25 from the off state to the on state, and control the fuel injection quantity by varying the on period of three-way valve 25. The fuel injection quantity increases as the on period becomes longer, provided that the pressure in accumulator chamber 16 is equal. Each nozzle 17 further includes a check valve 26 and an orifice 27.

Fuel injection system 10 further includes a pressure regulating valve 31 for regulating the pressure in accumulator chamber 16. Pressure regulating valve 31 is disposed in a return passage 13 for returning the fuel discharged from supply pump 14. By opening and closing return passage 13, pressure regulating valve 31 regulates the amount of the fuel discharged to accumulator chamber 16 and thereby regulates the pressure in accumulator chamber 16. The fuel injection rate varies in dependence on the fuel pressure (injection pressure) in accumulator chamber 16. The fuel injection rate becomes higher as the fuel pressure in accumulator chamber 16 becomes higher.

An accelerator opening (or position) sensor 33, a sensor 34 for sensing an engine speed (rpm) and a crank angle, a sensor 35 for discriminating among the engine cylinders, and a water temperature sensor 36 are connected to control unit 41. In accordance with the engine speed and the accelerator opening, control unit 41 calculates a target fuel injection quantity and a target fuel pressure in accumulator chamber 16, and feedback-controls the fuel pressure in accumulator chamber 16 with pressure regulating valve 31 so as to reduce a deviation from the target fuel pressure, of the actual accumulator chamber pressure sensed by a pressure sensor 32.

Moreover, control unit 41 controls the on period of three-way valve 20 in accordance with the calculated target fuel injection quantity, and achieves a predetermined fuel injection start timing adapted to the operating conditions. For example, in the low speed low load region where the EGR rate is high, the fuel injection timing (fuel injection start timing) is retarded up to the piston top dead center (TDC) so as to elongate the ignition delay of the injected fuel. With this retardation, the control system decreases the temperature in the combustion chamber at the timing of ignition, increases the percentage of the premixed combustion, and thereby restrains the generation of smoke in the high EGR rate operating region. As the engine speed and/or load increase, the fuel injection timing is advanced to achieve a desired ignition timing in the low EGR rate region since the ignition delay crank angle (that is, the ignition delay expressed in terms of the crank angle) increases in proportion as the engine speed increases even if the ignition delay time remains constant.

The diesel engine shown in Fig. 1 further includes a variable capacity turbo supercharger having an exhaust-driven turbine 52 in exhaust passage 2 at the position downstream of the opening of EGR passage 4. Turbine 52 has a variable nozzle 53 which is provided at the inlet of a scroll of turbine 52, and which is operated by a vacuum actuator 54. To obtain a desired boost pressure from the low speed region, control unit 41 controls the nozzle opening degree of nozzle 53 to a smaller opening degree to increase the flow velocity of the exhaust gas stream introduced to exhaust turbine 52 in the low speed region, and to a greater opening degree (of the fully open state) to introduce the exhaust gas mixture into exhaust turbine 52 without resistance in the higher speed region.

Vacuum actuator 54 includes a diaphragm actuator 55 for moving variable nozzle 53 by responding to a control vacuum, and a vacuum control valve 56 for regulating the control vacuum supplied to diaphragm actuator 55. Control unit 41 produces a duty control signal to control an opening ratio of variable nozzle 53 to a target opening ratio Rvnt, and delivers this duty control signal to vacuum control valve 56.

From the viewpoint of the boost pressure control, the EGR control plays a role in the boost pressure control. In other words, the boost pressure is varied as the EGR quantity varies. Conversely, a variation in the boost pressure varies the exhaust gas pressure and thereby varies the EGR quantity. Therefore, it is not possible to control the boost pressure and the EGR quantity independently. Moreover, the boost pressure and EGR quantity tend to act as a disturbance in the control of each other. When one is changed, one way to ensure the control accuracy is to adjust the other. However, the adjustment of one requires further adjustment of the other. Therefore, this method is not adequate to ensure the control accuracy during a transient period.

Thus, the boost pressure and EGR quantity exert influence on each other, and this complicates the control by imposing an additional requirement for adjusting the nozzle opening in response to a change in the EGR quantity. Specifically in the transient state, the control accuracy becomes poor in both quantities. Therefore, control unit 41 calculates a target intake air quantity tQac in accordance with operating conditions, and determines target nozzle opening ratio Rvnt, that is a target manipulated variable of the turbocharger, from target intake air quantity tQac, and an actual EGR quantity Qec or an actual EGR rate Megrd. Actual EGR quantity Qec and actual EGR rate Megrd are obtained by carrying out a delay operation to target EGR quantity and target EGR rate Megr.

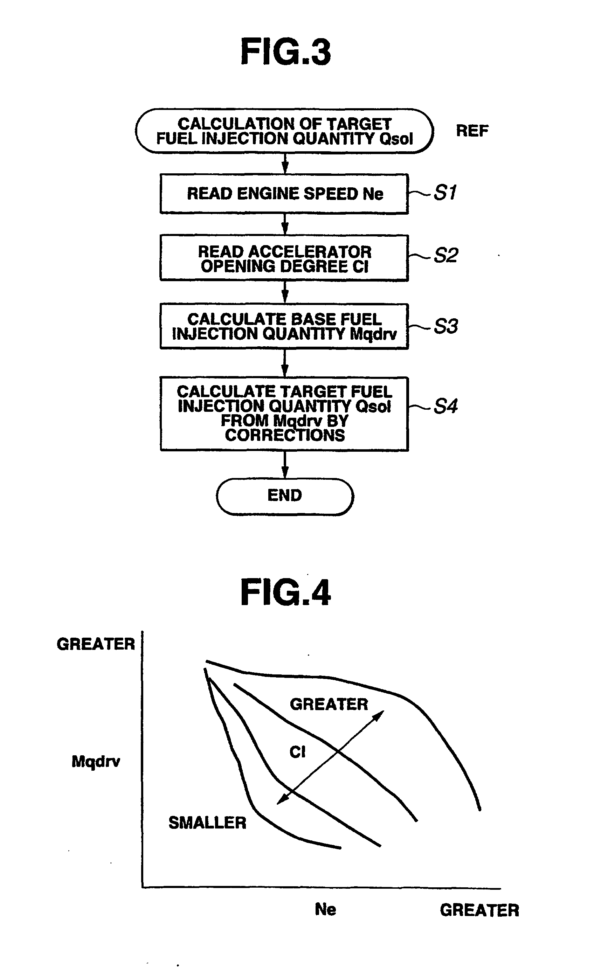

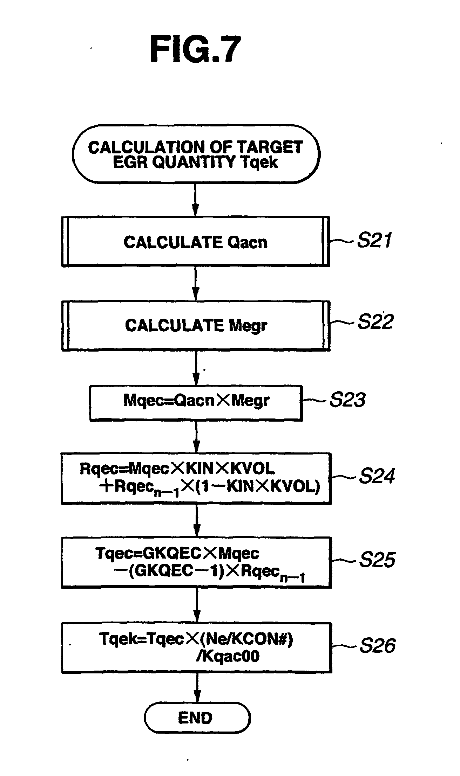

Control unit 41 performs the control process as shown in the following flowcharts. The processes shown in FIGS. 3, 4 and 8~14 are similar to processes proposed in a published Japanese Patent Application, Application No. 09-92306, Publication (*Kokai*) No. 10-288071. The process shown in FIG. 7 (excluding the introduction of Kqac00 in step S26) is similar to a process proposed in a published Japanese Patent Application, Application No. 09-125892, Publication (*Kokai*) No. 10-318047.

FIG. 3 shows a process for calculating a target fuel injection quantity Qsol. Control unit 41 performs the process of FIG. 3 upon receipt of each REF signal (which is a reference crank angle signal produced at regular angular intervals of 180° in the case of a four-cylinder engine, and of 120° in the case of a six-cylinder engine).

At steps S1 and S2, control unit 41 reads engine speed Ne and accelerator opening degree Cl. Then, at step S3, control unit 41 calculates a base fuel injection quantity Mqdrv in accordance with engine speed Ne and accelerator opening degree Cl, by lookup from a map as shown in FIG. 4. At step S4, control unit 41 determines target fuel injection quantity Qsol by modifying base fuel injection quantity Mqdrv for enrichment correction based on the engine cooling water temperature and other operating conditions.

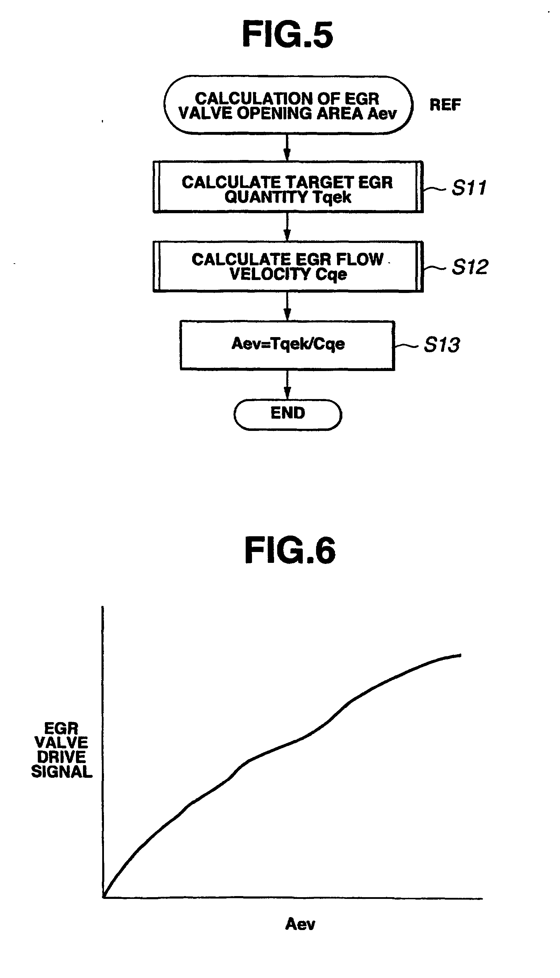

FIG. 5 shows a process for calculating an opening area Aev of EGR valve 6. The process of FIG. 5 is performed each time the REF signal is inputted.

At step S11, control unit 41 calculates a target EGR quantity Tqek by following a flow shown in FIG.7.

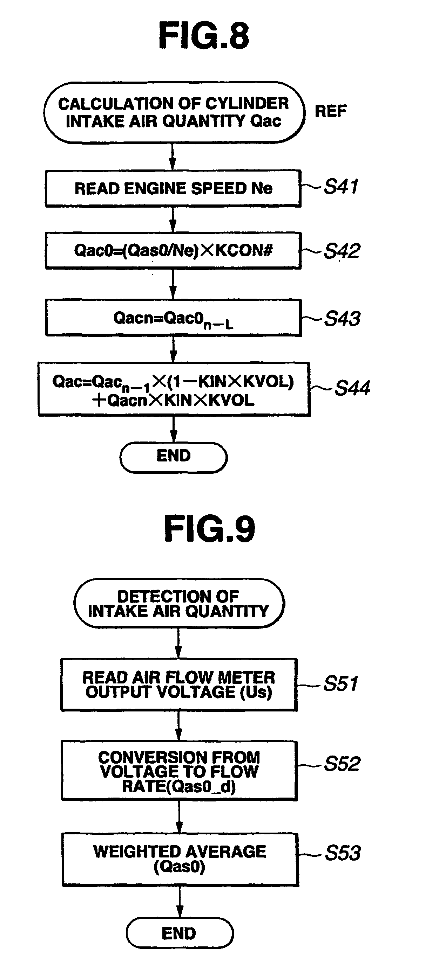

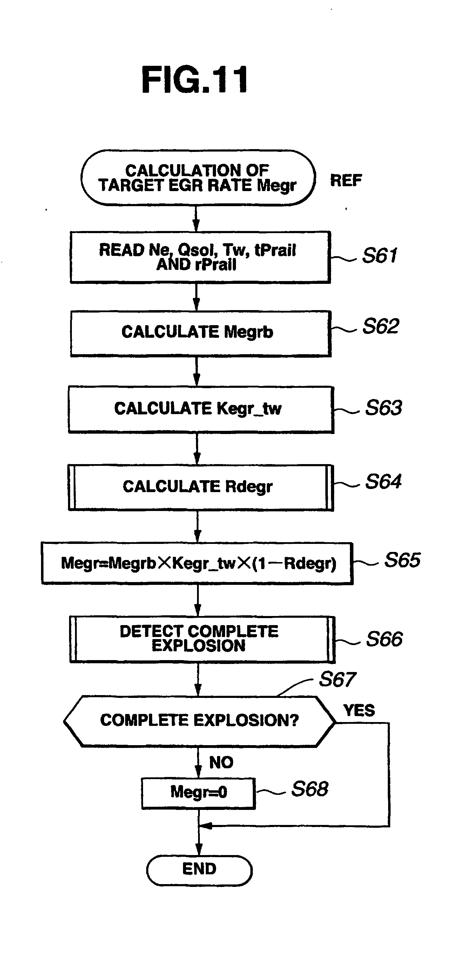

As shown in FIG 7, the subroutine of step S11 of FIG. 5 includes a first step S21 of calculating a per-cylinder intake air quantity Qacn, and a second step S22 of calculating target EGR rate Megr. Control unit 41 calculates the per-cylinder intake air quantity Qacn by a flow of FIG. 8, and calculates target EGR rate Megr by a flow of FIG. 11.

In FIG. 8, control unit 41 reads engine speed Ne at step S41, and then at step S42, calculates a per-cylinder intake air quantity Qac0 from engine speed Ne and a sensed intake air quantity Qas0 obtained from an air flowmeter 39, according to the following equation [EQ1].

$$[EQ1]$$

$$Qac0 = (Qas0/Ne) \times KCON\#$$

where KCON# is a constant. For example, KCON# is 30 in the case of a four-cylinder engine, and 20 in the case of a six-cylinder engine.

To perform a delay operation for a distance/velocity lag (transport lag) from air flowmeter 39 disposed in intake passage 3 at the position upstream of the compressor, to collector section 3a of intake passage 3, step S43 sets, as a per-cylinder intake air quantity Qacn at the entrance of collector section 3a, an old value $Qac0_{n-L}$ of per-cylinder intake air quantity Qac0 (at the air flowmeter position) obtained a predetermined number L of cycles before. That is, $Qacn = Qac0_{n-L}$ where L is a constant.

At next step S44, control unit 41 calculates a per-cylinder intake air quantity Qac at the intake valve's position, from per-cylinder intake air quantity Qacn at the collector inlet position by the following equation (of a first order lag).

[EQ2]

$$Qac = Qac_{n-1} \times (1-KIN \times KVOL) + Qacn \times KIN \times KVOL$$

where KIN is a value corresponding to a volumetric efficiency, KVOL = VE/NC/VM, VE is a displacement, NC is the number of engine cylinders, VM is the volume of the intake system, and $Qac_{n-1}$ is a previous value of Qac determined in the last cycle. This operation is for compensation for dynamics from the inlet of the intake passage collector section 3a to the intake valve.

Intake air quantity Qas0 appearing in the right member of equation EQ1 is determined by the flow of FIG. 9 performed at regular time intervals of 4 msec.

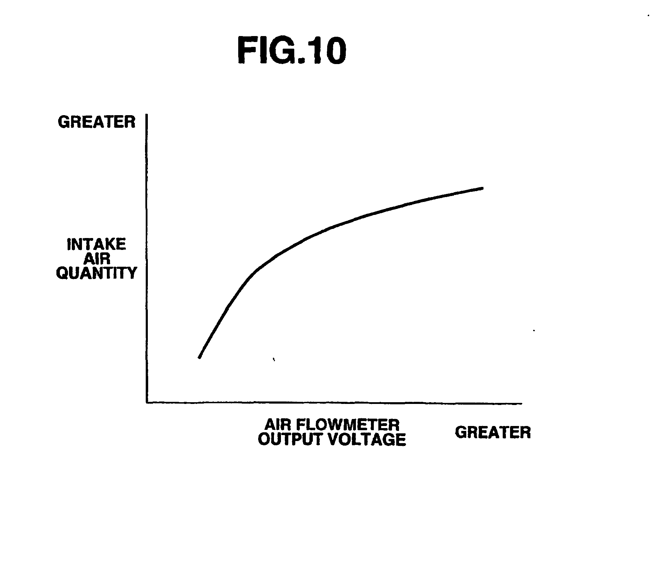

At step S51 of FIG. 9, control unit 41 reads an output voltage Us of air flowmeter 39. At step S52, control unit 41 calculates an intake air quantity Qas0_d by lookup from a voltage to flow rate conversion table as shown in FIG. 10. Then, at step S53, control unit 41 performs a weighted average operation on intake air quantity Qas0_d, and sets a weighted average of Qas0_d as intake air quantity Qas0.

Then, at step S61 of FIG. 11, control unit 41 reads engine speed Ne, target fuel injection quantity Qsol, engine cooling water temperature Tw, a target common rail pressure tPrail, and an actual common rail pressure rPrail.

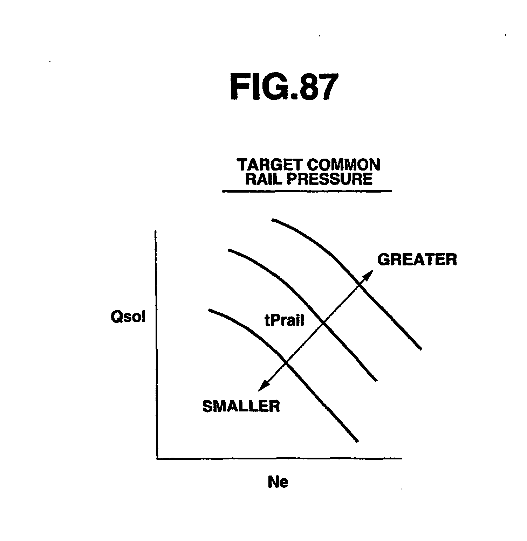

Target common rail pressure tPrail is a quantity calculated basically from engine speed Ne and target fuel injection quantity Qsol by lookup from a map as shown in Fig. 87. Actual common rail pressure rPrail is a pressure sensed by a pressure sensor 32 shown in FIG. 2.

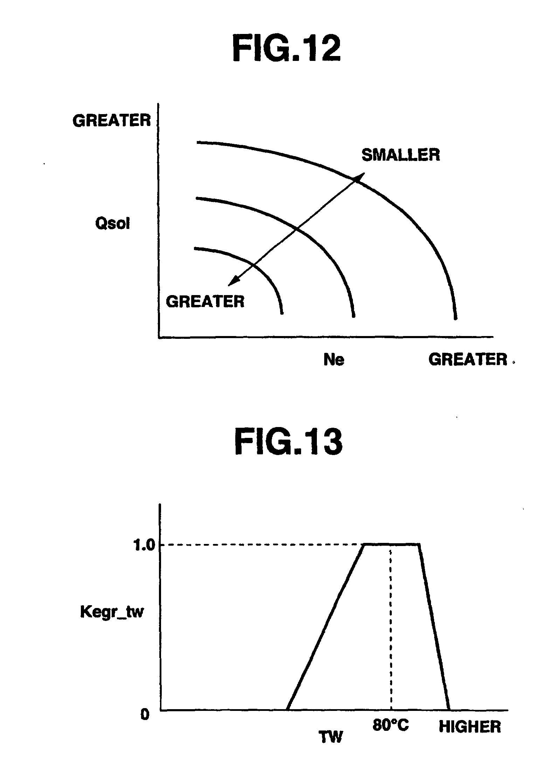

At step S62, control unit 42 calculates a base target EGR rate Megrb from engine speed Ne and target fuel injection quantity Qsol by lookup from a map as shown in FIG. 12. Base desired EGR rate Megrb is increased in the frequently used engine operating region. Namely, base desired EGR rate Megrb is increased as the engine speed and/ or engine load (or the injection quantity) become lower. Base target EGR rate Megrb is decreased in a high output region where the possibility of smoke increases.

At step S63, control unit 41 calculates a water temperature correction coefficient Kegr_tw from cooling water temperature Tw by lookup from a table as shown in FIG. 13.

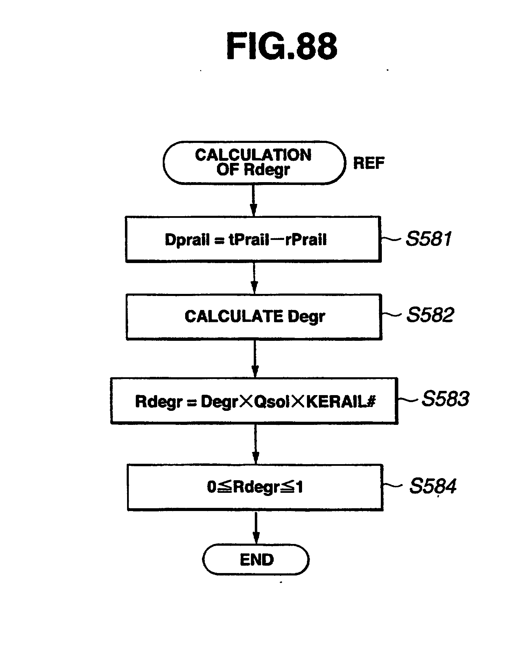

At step S64, a common rail pressure correction ratio Rdegr is calculated by a flow shown in FIG. 88.

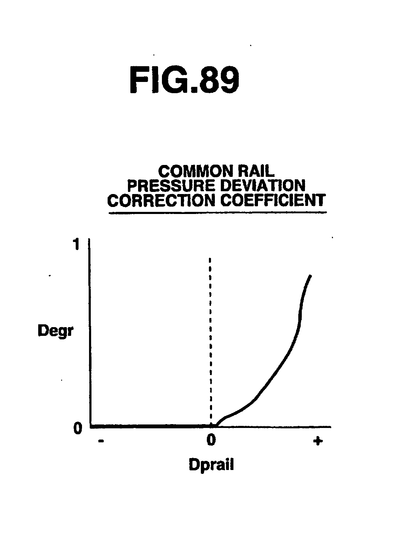

At step S581 of FIG. 88, control unit 41 calculates a common rail pressure deviation (or error) Dprail of actual common rail pressure rPrail from target common rail pressure tPrail (Dprail=tPrail-rPrail ). From deviation Dprail, control unit 41 calculates a common rail pressure deviation correction coefficient Degr by lookup from a map shown in FIG. 89 at step S582. In an accelerating state where actual common rail pressure rPrail is lower than target common rail pressure tPrail (in a region where Dprail > 0, that is), correction coefficient Degr increases as deviation Dprail from target pressure tPrail increases, as shown in FIG. 89.

At step S583, in order to adjust the sensitivity in the correction in accordance with engine operating conditions, control unit 41 calculates a common rail pressure correction ratio Rdegr by using correction coefficient Degr and quantity Qsol corresponding to a correction gain, according to the following equation;

$$Rdegr = Degr \times Qsol \times KERAIL\#$$

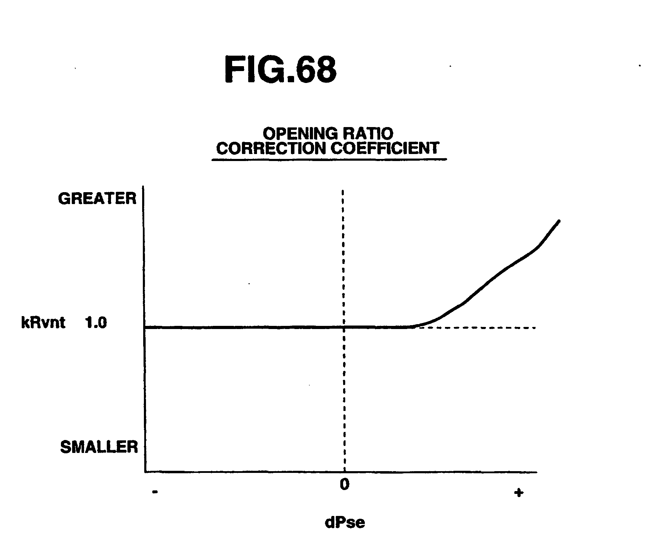

where KERAIL# is a constant. At step S584, the calculated correction ratio Rdegr is limited in the range between 0 and 1 ($0 \leq Rdegr \leq 1$). Thereafter, the process of FIG. 68 is terminated.

In this equation, quantity Qsol is introduced, as the correction gain, since, even for the same injection pressure deviation (the common rail pressure deviation), a required correction quantity (or sensitivity) differs in dependence on the engine load. For example, in an accelerating operation of great load, there is a need of increasing the common rail pressure greatly to a high level. Therefore, the deviation of the actual common rail pressure increases and the possibility of smoke becomes high. (That is, the sensitivity to the exhaust gas is higher in the case of acceleration of a great load.) In the case of acceleration of small load, the deviation of the actual common rail pressure is small, and the sensitivity to the exhaust gas is low. In this way, this system can fulfill the requirement of making higher the sensitivity of the correction in the acceleration of greater load than in the acceleration of smaller load. Without being limited to the accelerating operation, this system can adapt to changes in the running load of the vehicle in a steady state operation due to slope and the number of passengers.

If it is desirable to adjust the sensitivity of the correction in accordance with the engine speed, too, quantity Qsol in step S583 is replaced by a gain. In this case, control unit 41 is configured to calculate this gain in accordance with engine operating conditions (Ne and Qsol) (by using a map of the gain, having Ne and Qsol as parameters).

After the calculation of common rail pressure correction ratio Rdegr, control unit 41 returns to the flow of FIG. 11, and proceeds to step S65.

At step S65, control unit 41 calculates target EGR rate Megr from base target EGR rate Megrb, temperature correction coefficient Kegr_tw and common rail pressure correction ratio Rdegr according to the following equation.

[EQ3]

$$Megr = Megrb \times Kegr\_tw \times (1\text{-}Rdegr)$$

Factor (1-Rdegr) is a rate of correction of decreasing the target EGR rate.

In an accelerating operation in which the actual common rail pressure is lower than the target common rail pressure, the common rail pressure correction ratio Rdegr is equal to or smaller than one, so that factor (1-Rdegr) is equal to or smaller than one. As a result, target EGR rate Megr is decreased by this correction.

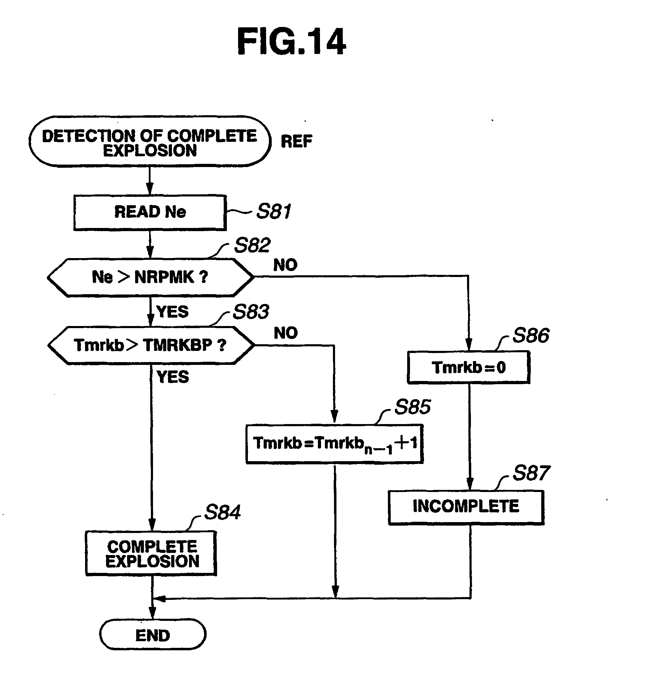

At step S66, control unit 41 checks the engine operating state to determine whether a complete explosion state is reached. FIG. 14 shows the flow for detecting the complete explosion state.

Control unit 41 examines whether the complete explosion state is reached or not, at a step S67 of FIG. 11, and terminates the flow of FIG. 11 if the complete explosion state is affirmed. If the complete explosion state is not affirmed, control unit 41 sets target EGR rate Megr to zero (Megr=0) at step S68, and then terminates the current cycle of FIG. 11.

In this way, this control system starts the EGR control after the engine reaches the complete explosion state, and forbears the EGR control before the complete explosion to ensure stable starting operation.

In the complete explosion detecting process of FIG. 14, control unit 41 reads engine speed Ne at step S81, and compares engine speed Ne with a complete explosion determining slice level NRPMK representing a complete explosion engine speed at step S82. If sensed engine speed Ne is higher than slice level NRPMK, then control unit 42 determines that the complete explosion state is reached, and proceeds to step S63 to compare a counter Tmrkb with a predetermined time length TMRKBP. If counter Tmrkb is greater than TMRKBP, then control unit 42 proceeds to step S84, and terminates this process, concluding that the engine is in the complete explosion state.

If sensed engine speed Ne is lower than or equal to slice level NRPMK, control unit 41 proceeds from step S82 to step S86, clears counter Tmrkb at step S86, and proceeds to step S87 to terminate the process with the conclusion that the engine is not in the complete explosion state. If Ne > NRPMK but counter Tmrkb is smaller than or equal to TMRKBP, then control unit 41 proceeds from step S83 to step S85, increments counter Tmrkb at step S85, and concludes that the engine is not in the complete explosion state.

In this way, the complete explosion state is affirmed when the engine speed is higher than a predetermined value (400 rpm, for example), and this state exceeding the predetermined engine speed value continues for a predetermined time duration.

After the calculation of the cylinder intake air quantity Qacn by FIG. 8 and the calculation of target EGR rate Megr by FIG. 11, control unit 41 returns to step S23 of FIG. 7, and calculates, from both, a required EGR quantity Mqec according to the following equation.

[EQ4]

$$Mqec = Qacn \times Megr$$

At step S24, control unit 41 uses KIN$\times$KVOL as a weight coefficient, and calculates an intermediate variable (weighted average) Rqec by using the following equation:

[EQ5]

$$Rqec = Mqec \times KIN \times KVOL + Rqec_{n\text{-}1} \times (1\text{-}KIN \times KVOL)$$

where KIN is a value representing a volumetric efficiency, VE is the displacement, NC is the number of the cylinders, VM is the volume of the intake system, and $Rqec_{n\text{-}1}$ is a previous value of the intermediate variable.

By using intermediate variable (weighted average) Rqec and required EGR quantity Mqec, at step S25, control unit 41 calculates a target per-cylinder EGR quantity Tqec by performing an advancing correction expressed as;

[EQ6]

$$Tqec = Mqec \times GKQEC + Rqec_{n-1} \times (1-GKQEC)$$

where GKQEC is an advance correction gain. With this advancing correction, steps S24 and S25 compensates for the lag in the intake system with respect to the required value, (i.e., the lag due to the volume in the passage from EGR valve 6 through collector section 3a and the intake manifold to the intake valve).

At step S26, control unit 41 calculates a target (per-unit-time) EGR quantity Tqek by conversion of unit (from a quantity per cylinder to a quantity per unit time) according to the following equation.

[EQ7]

$$Tqek = Tqec \times (Ne/KCON\#)/Kqac00$$

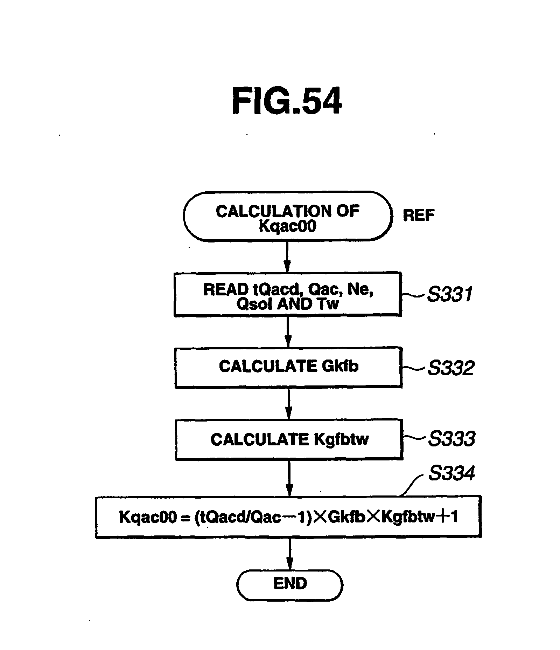

where Kqac00 is an EGR quantity feedback correction coefficient, and KCON# is a constant. The calculation of the EGR quantity feedback correction coefficient Kqac00 is explained later by reference to FIG. 54.

After the calculation of target EGR quantity Tqek, control unit 41 returns to step S12 of FIG. 5, and calculates an EGR flow velocity Cqe which is the flow velocity of the EGR gas (the gas flowing through EGR valve 6). Then, at step S13, from EGR flow velocity Cqe and target EGR quantity Tqek, control unit 41 calculates an EGR valve opening area Aev according to the following equation.

[EQ8]

$$Aev = Tqek/Cqe$$

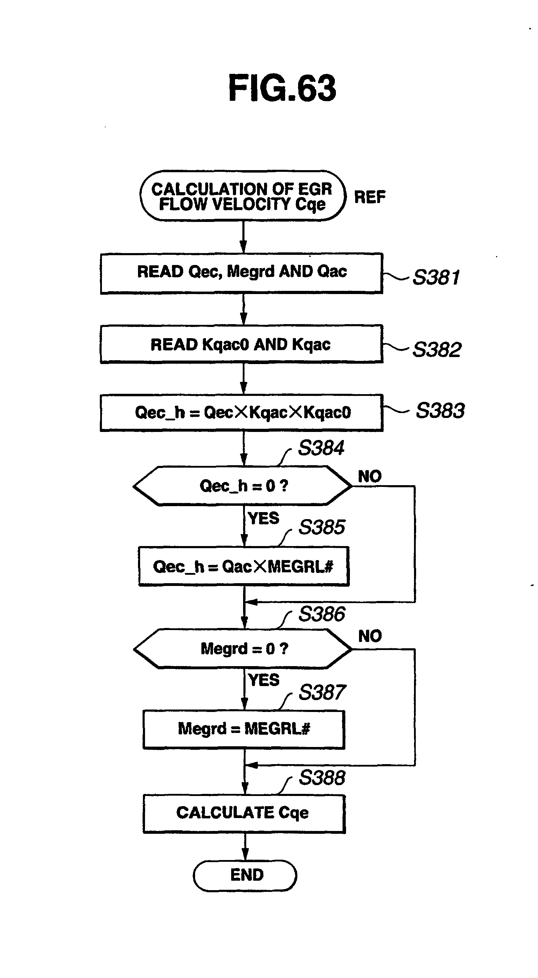

The calculation of EGR flow velocity Cqe is explained later by reference to FIG. 63.

The thus-obtained EGR valve opening area Aev is converted to the amount of lift of EGR valve 6 by lookup from a table as shown in FIG. 6. The vertical axis in FIG. 6 represents the amount of lift of EGR valve 6 (or the number of steps). To achieve the thus-determined amount of lift in EGR valve 6, control unit 41 produces the duty control signal and delivers the duty control signal to vacuum control valve 5.

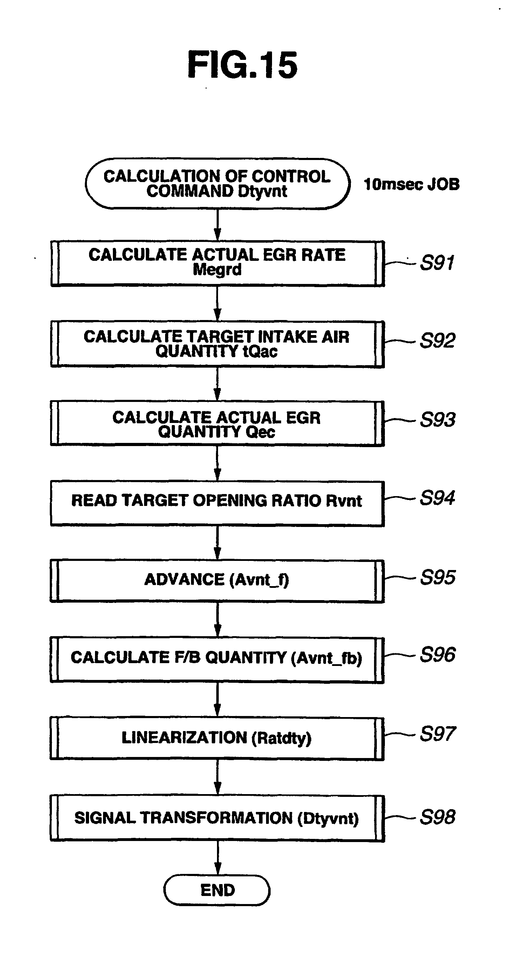

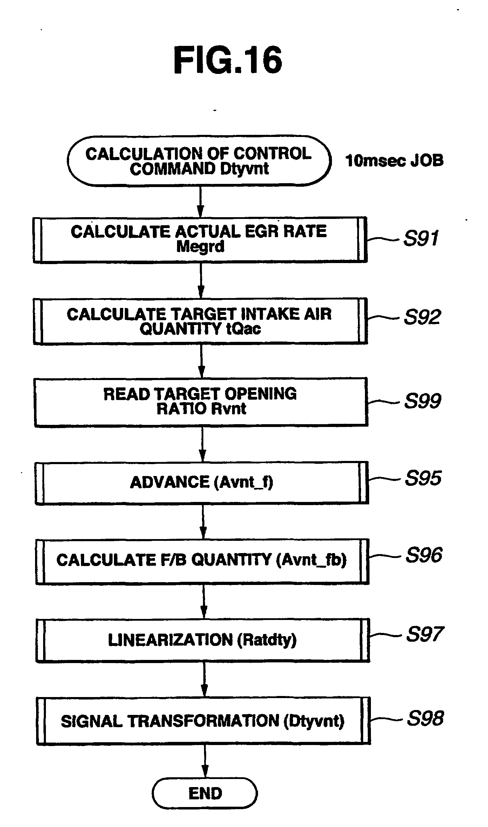

FIGS. 15 and 16 show a process for calculating a control duty factor Dtyvnt to vacuum control valve 56 for driving the turbocharger. This process is executed at regular time intervals (of 10 msec, for example). FIG. 15 is a first practical example. FIG. 16 is a second practical example. The difference between the first and second examples of FIGS. 15 and 16 resides in a parameter used for calculating target opening ratio Rvnt of variable nozzle 53. That is, target opening ratio Rvnt is determined in accordance with actual EGR quantity Qec in the first example of FIG. 15, and in accordance with actual EGR rate Megrd in the second example of FIG. 16. Each of FIGS. 15 and 16 shows a main routine including steps for which subroutines are provided.

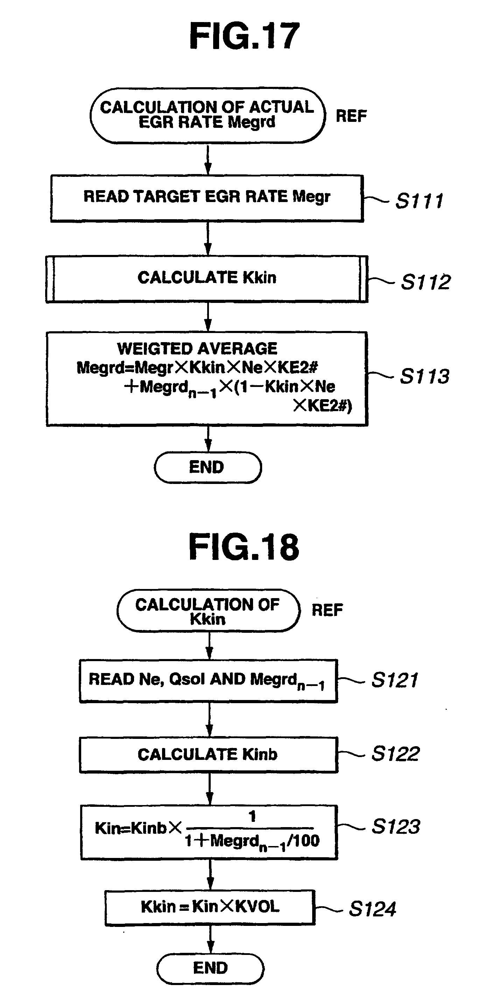

FIG. 17 shows a subroutine for a step S91 in FIG. 15 or 16. The subroutine of FIG. 17 is for calculating actual EGR rate Megrd. This subroutine is performed each time the REF signal is inputted.

In FIG. 17, control unit 41 reads target EGR rate Megr (obtained by FIG. 11) at step S111, and proceeds to step S112 to calculate a factor Kkin representing a time constant for the collector capacity. Time constant representing variable (or factor) Kkin is calculated by a flow of FIG. 18.

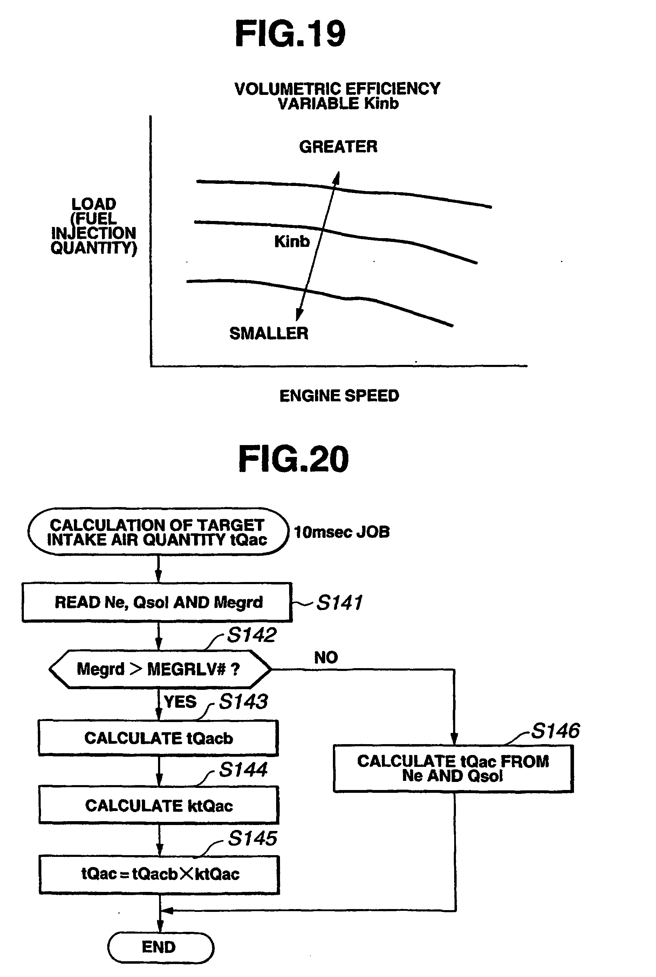

In FIG. 18 (subroutine for step S112 of FIG. 17), control unit 41 reads engine speed Ne, target fuel injection quantity Qsol and a previous actual EGR rate $Megrd_{n-1}$ [%] at step S121, and calculates a volumetric efficiency representing base variable Kinb from Ne and Qsol by lookup from a map as shown in FIG. 19 at step S122. Previous actual EGR rate $Megrd_{n-1}$ is a previous value of actual EGR rate Megrd.

At step S123, control unit 41 calculates a volumetric efficiency representing variable Kin from Kinb and $Megrd_{n-1}$ by:

[EQ9]

$$Kin = Kinb \times 1/(1+Megrd_{n-1}/100)$$

This operation is for correction for a decrease in the volumetric efficiency due to EGR.

At step S124, variable Kkin representing the time constant for the capacity of the collector section is determined by multiplying volumetric efficiency representing variable Kin by constant KVOL corresponding to a ratio between the intake system volume and the cylinder volume (cf. step S44 in Fig. 8). That is, Kkin = Kin×KVOL.

After the calculation of Kkin by FIG. 18, control unit 41 returns to step S113 of FIG. 17, and calculates EGR rate Megrd at the intake valve position, from variable Kkin and target EGR rate Megr by:

[EQ10]

$$Megrd = Megr \times Kkin \times Ne \times KE2\#$$

$$+ Megrd_{n-1} \times (1\text{-}Kkin \times Ne \times KE2\#)$$

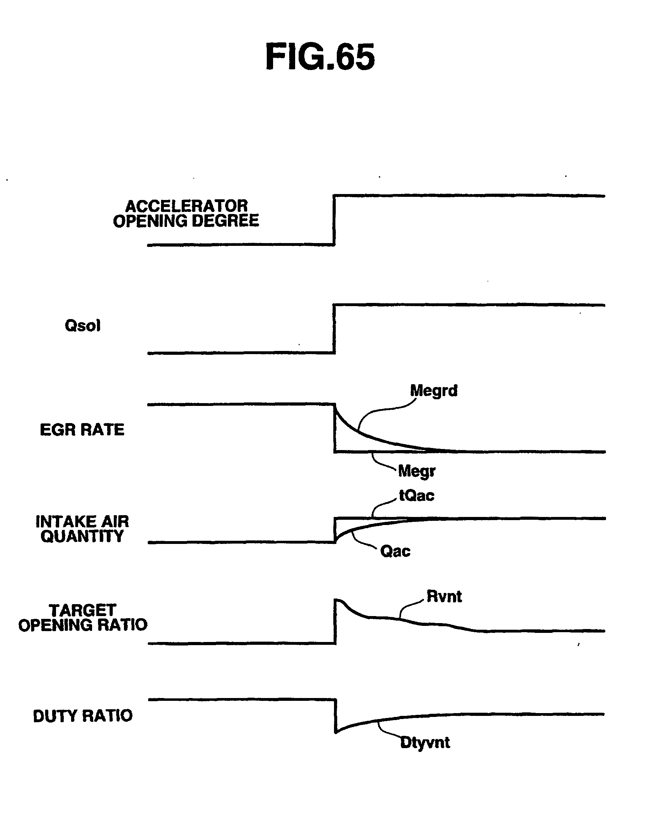

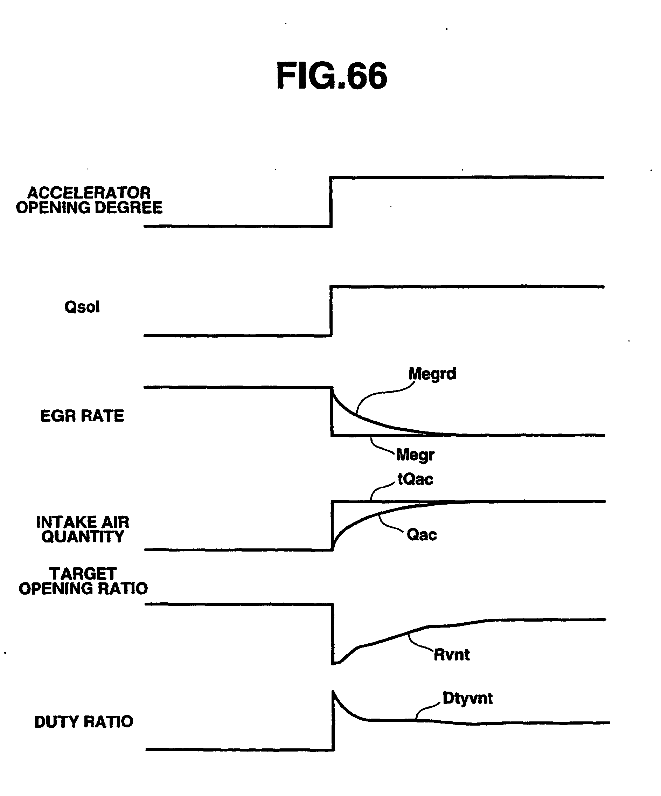

where Kkin=Kin×KVOL#, KE2# is a constant, and $Megrd_{n-1}$ is the previous value of Megrd. EGR rate Megrd at the intake valve position is thus determined by simultaneously performing a delay operation and a conversion of unit (from the quantity per cylinder to the quantity per unit time). The quantity Ne×KE2# in the right side of equation EQ10 is the factor for the conversion of unit. Since this EGR rate Megrd responds to target EGR rate Megr in a manner of first order lag (as shown in FIGS. 65 and 66), this EGR rate Megrd is referred to as an actual EGR rate hereinafter.

FIG. 20 shows a subroutine of step S92 in FIG. 15 or 16, for calculating target intake air quantity tQac.

In FIG. 20, control unit 41 reads engine speed Ne, actual EGR rate Megrd, and target fuel injection quantity Qsol at step S141, and compares Megrd with a predetermined value MEGRLV#.

Predetermined value MEGRLV# is a value (0.5, for example) for judging the existence or nonexistence of the EGR operation. If Megrd>MEGRLV#, control unit 41 judges that the current operating point is in an EGR operative region, and proceeds to steps S143, S144 and S145. If Megrd≤MEGRLV#, control unit 41 judges that the operating point is in an inoperative region, and proceeds to step S146. In this example, MEGRLV# is set equal to a nonzero value to meet a demand for treating EGR in a very small amount in the same manner as in the EGR inoperative region.

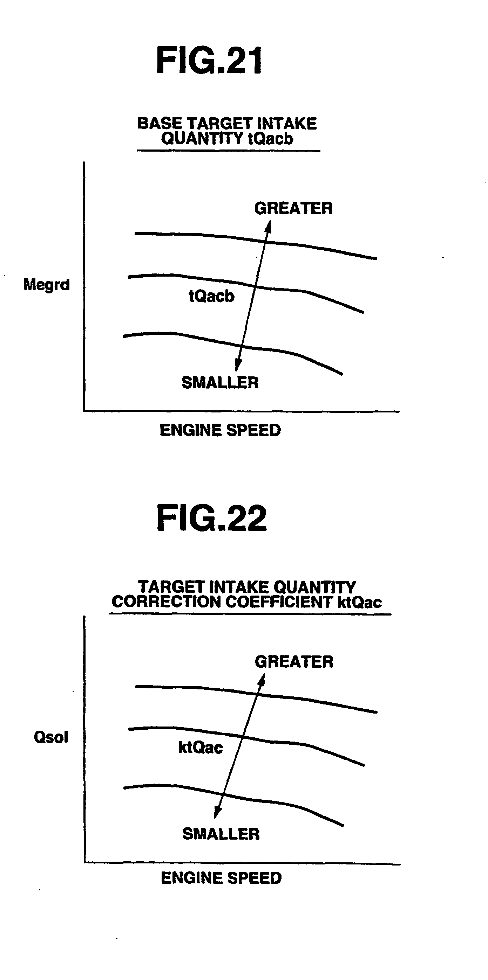

In the EGR operative region, control unit 41 calculates a target per-cylinder base intake air quantity tQacb from engine speed Ne and actual EGR rate Megrd by lookup from a map shown in FIG. 21. As shown in FIG. 21, provided that the engine speed is constant, the target intake air quantity is increased as the actual EGR rate increases.

At step S144, Ne and Qsol are used to calculate a target intake quantity correction coefficient ktQac by lookup from a map as shown in FIG. 22. Then, at step S145, target intake air quantity tQac by multiplication of the target base intake quantity by the correction coefficient (tQac = tQacb×ktQac). With correction coefficient ktQac, the control system can adjust the target intake air quantity in accordance with engine operating conditions (Ne, Qsol).

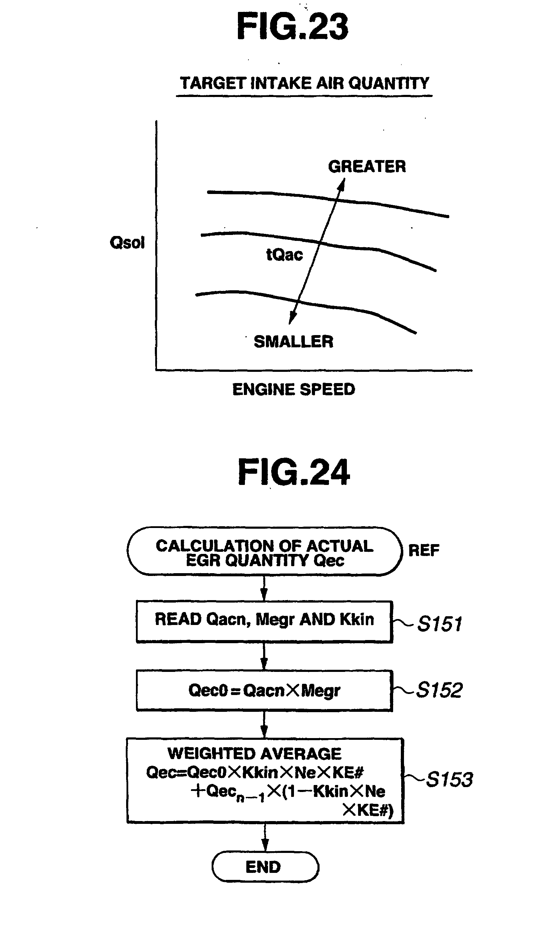

In the EGR inoperative region, control unit 41 proceeds from step S142 to step S146, and calculates per-cylinder target intake air quantity tQac from Ne and Qsol by lookup from a map as shown in FIG. 23.

FIG. 24 shows a subroutine of a step S93 in FIG. 15, for calculating the actual EGR quantity.

At a step S151, control unit 41 reads per-cylinder intake air quantity Qacn at the position of collector inlet 3a (obtained at step S43 of FIG. 8), target EGR rate Megr, and collector capacity time constant representing variable Kkin. From Qacn and Megr, at step S152, control unit 41 calculates a per-cylinder EGR quantity Qec0 at the collector inlet position by;

[EQ11]

$$Qec0 = Qacn \times Megr$$

Then, at step S153, control unit 41 calculates a cylinder intake EGR quantity Qec, by using Qec0 and Kkin according to the following equation.

[EQ12]

$$Qec = Qec0 \times Kkin \times Ne \times KE\#$$

$$+ Qec_{n-1} \times (1\text{-}Kkin \times Ne \times KE\#)$$

where Kkin=Kin$\times$KVOL, KE# is a constant, and $Qec_{n-1}$ is a previous value of Qec. Cylinder intake EGR quantity Qec is thus determined by simultaneously performing a delay operation and conversion of unit (from the quantity per cylinder to the quantity per unit time) as in equation EQ10. Factor Ne$\times$KE# on the right side of equation EQ12 is a quantity for the conversion of unit. Cylinder intake EGR quantity Qec responds to target EGR quantity Tqek in the manner of first order lag, and this quantity Qec is referred to as an actual EGR quantity hereinafter. Quantity Qac responding to target intake air quantity tQac in the manner of first order lag is referred to as an actual intake air quantity (cf. FIGS. 65 and 66).

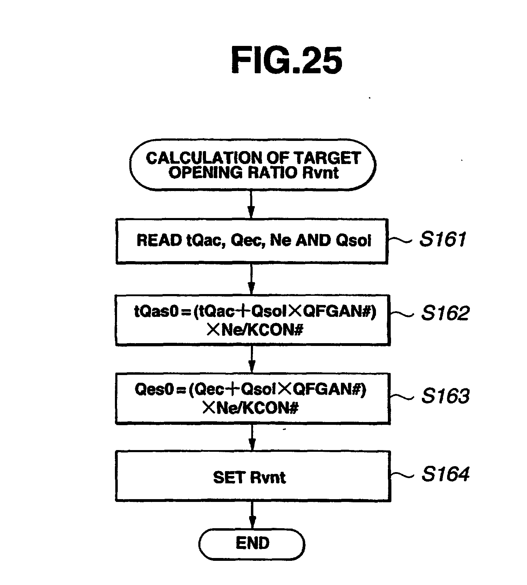

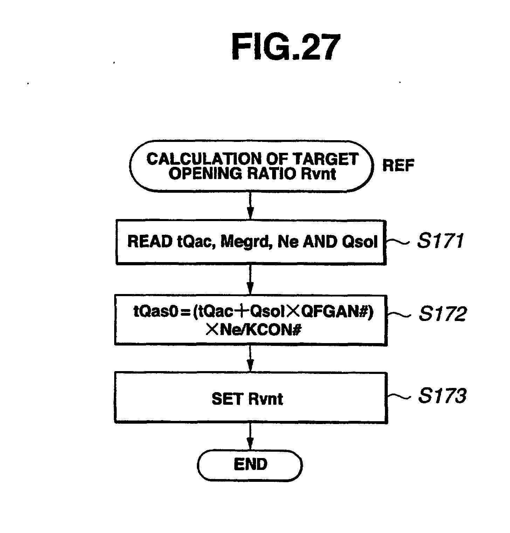

FIG. 25 shows a subroutine for step S94 of FIG. 15 in the first practical example. FIG. 27 shows a subroutine for step S99 of FIG. 16 in the second practical example. Each of these subroutines is for calculating a target opening ratio Rvnt of turbocharger variable nozzle 53.

Nozzle opening ratio Rvnt is a ratio of a current nozzle opening area to a nozzle opening area in a fully open state of variable nozzle 53. Therefore, opening ratio Rvnt is equal to 100% when variable nozzle 53 is fully open, and to 0 % when variable nozzle 53 is fully closed. The use of the opening ratio is advantageous for the flexibility (to render unaffected by the capacity of the turbocharger). Instead of the opening ratio, it is optional to employ the opening size or area of the variable nozzle.

The turbocharger in this embodiment is of the type minimizing the boost pressure in the fully open state, and maximizing the boost pressure in the fully closed state. The boost pressure increases as the nozzle opening ratio decreases.

In FIG. 25 of the first practical example, control unit 41 reads target intake air quantity tQac, actual EGR quantity Qec, engine speed Ne and target fuel injection quantity Qsol at step S161.

Steps S162 and S163 are for calculating an intake air quantity representing variable tQas0 (referred to as a set intake air quantity representing variable hereinafter) used for setting the target opening ratio, and an EGR quantity representing variable Qes0 (referred to as a set EGR quantity representing variable) for setting of the target opening ratio by:

$$[EQ13]$$

$$tQas0 = (tQac+Qsol \times QFGAN\#) \times Ne/KCON\#$$

$$Qes0 = (Qec+Qsol \times QFGAN\#) \times Ne/KCON\#$$

where QFGAN# is a gain, and KCON# is a constant. By the addition of Qsol$\times$QFGAN# to tQac or Qec in each of the equations EQ13, the control system can perform a load correction on the set intake air quantity representing variable and the set EGR quantity representing variable, and adjust the sensitivity with gain QFGAN#. Fraction Ne/KCON# is a quantity for conversion to the intake air quantity per unit time and to the EGR quantity per unit time.

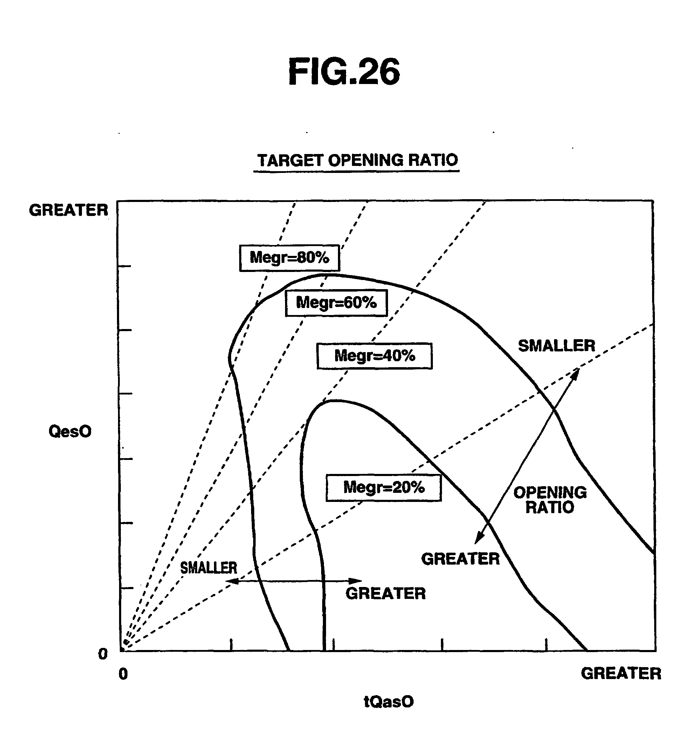

From set intake air quantity representing variable tQas0 and set EGR quantity representing variable tQes0, step S164 determines the target opening ratio Rvnt of turbocharger variable nozzle 53 by lookup from a man as shown in FIG. 26.

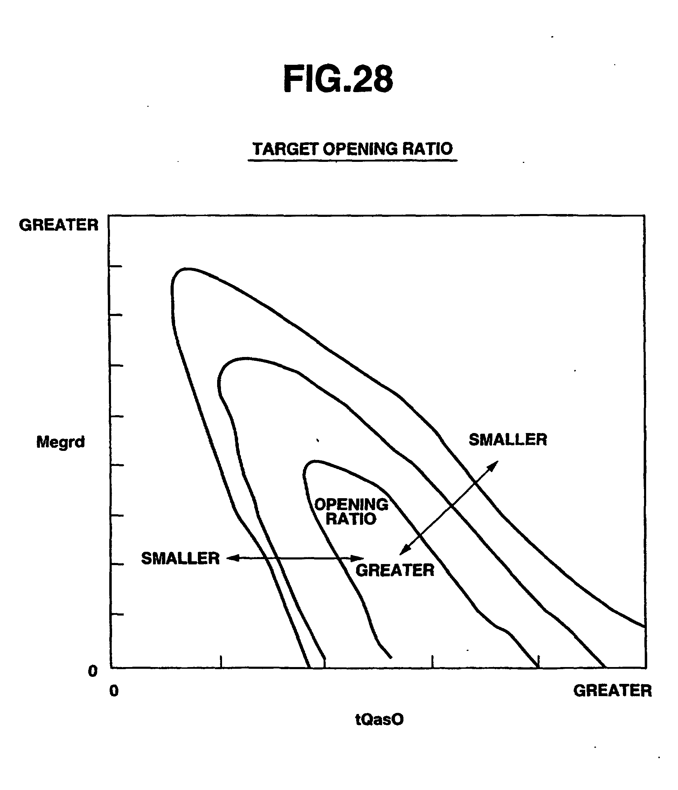

In FIG. 27 of the second practical example, control unit 41 reads target intake air quantity tQac, actual EGR rate Megrd, engine speed Ne and target fuel injection quantity Qsol at step S171, calculates set intake air quantity representing variable tQas0 by the use of the upper equation of the equations EQ13 at step S172, and determines, at step S173, target opening ratio Rvnt from set intake quantity representing variable tQas0 and actual EGR rate Megrd by lookup from a map as shown in FIG. 28.

The characteristics shown in FIG. 26 and FIG. 28 are prepared to the advantage of the fuel consumption. These fuel effective characteristics differ from emission effective characteristics aimed for better exhaust performance only in numerical values in the settings. Although FIG. 28 is different from FIG. 26 in the veridical axis (in FIG. 26, the slop of a line passing through the origin represents the EGR rate), FIG. 28 is basically the same as FIG. 26. The following explanation is directed to FIG. 26.

As shown in FIG. 26, in a large tQas0 region on the right side, the target opening ratio is decreased as set EGR quantity representing variable Qes0 increases. An increase of the EGR quantity decreases the amount of fresh air, and hence causes the air fuel ratio to deviate to the rich side, resulting in smoke. Therefore, this control system increases the boost pressure by decreasing the target opening ratio as the EGR quantity increases.

In a small tQas0 region on the left side where the effect of supercharging is insufficient, this control system decreases the target opening ratio as tQas0 decreases, for the following reasons. First, an increase of the target opening ratio in this region would make it difficult for the exhaust pressure to rise. Second, a smaller opening ratio is desirable at an early stage for full throttle acceleration. The characteristic shown in FIG. 26 is fundamentally determined to meet these two different requirements. Accordingly, a change in the target opening ratio differs between a case where a change in the target intake air quantity is small (as shown in FIG. 65), and a case where a change in the target intake air quantity is large (as shown in FIG. 66).

The tendency of the target opening ratio shown in FIG. 26 is common to the fuel effective control characteristic laying weight on the fuel economy and the emission effective control characteristic laying weight on the exhaust emission. Both characteristics differ in numerical settings. A value at the position of "SMALLER" in FIG. 26 is a minimum value for efficient turbocharger operation. Accordingly, this value is about 20, for example, without distinction between the fuel effective setting and the emission effective setting. On the other hand, a value at the position of "GREATER" differs between both cases. The value at this position is about 60 in the fuel effective example, and about 30 in the emission effective example.

The setting of the target opening ratio is not limited to the above-mentioned examples. Instead of set intake air quantity representing variable tQas0 and set EGR quantity representing variable tQes0 employed in the first practical example, it is optional to employ target intake air quantity tQac and actual EGR quantity Qec to determine the target opening ratio. Similarly, instead of a pair of set intake air quantity representing variable tQas0 and actual EGR rate Megrd employed in the second practical example, it is optional to employ a pair of target intake air quantity tQac and actual EGR rate Megrd, or a pair of target intake air quantity tQac and target EGR rate Megr, to determine the target opening ratio.

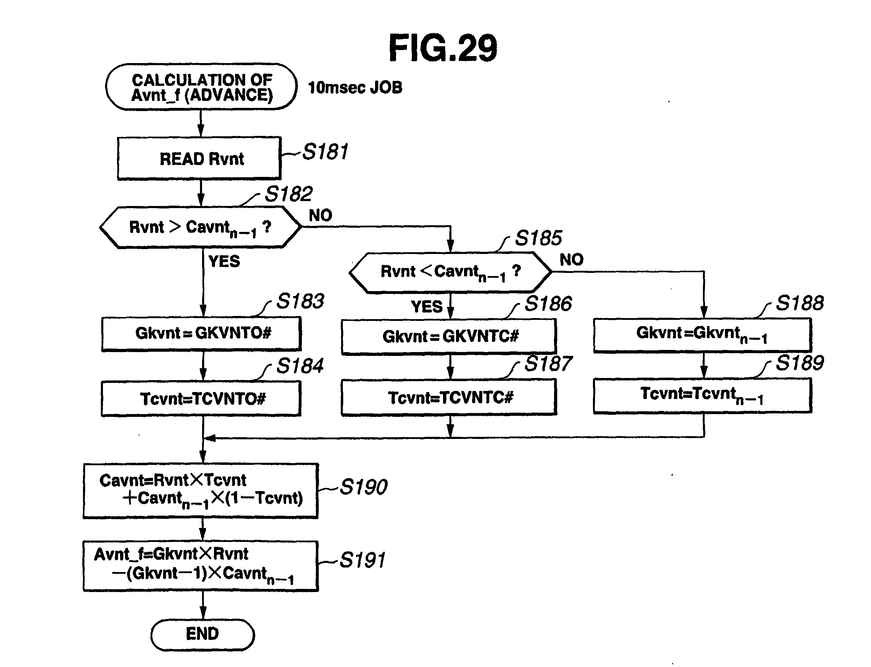

In FIG. 29 (subroutine of step S95 of FIG. 15 or FIG. 16), control unit 41 performs an advance operation on target opening ratio Rvnt to compensate for dynamics of the variable nozzle driving vacuum actuator 54 (of vacuum control valve 56 and diaphragm actuator 55), for vacuum actuator 54 for variable nozzle 53 has non-negligible delay in response unlike an actuator employing a stepper motor.

Control unit 41 reads target opening ratio Rvnt at step S181, and compares this opening ratio Rvnt with a previous predicted opening ratio $Cavnt_{n-1}$ at step S182. Predicted opening ratio Cavnt is a weighted average of target opening ratio Rvnt as mentioned later (cf. S190).

If $Rvnt>Cavnt_{n-1}$ (in the case of variable nozzle 53 being moved in the opening direction), control unit 41 proceeds to steps S183 and S184, and sets a predetermined value GKVNTO# as an advance correction gain Gkvnt (Gkvnt=GKVNTO#) and a predetermined value TCVNTO# as an advance correction time constant representing parameter Tcvnt (Tcvnt=TCVNTO# ). If $Rvnt<Cavnt_{n-1}$ (in the case of variable nozzle 53 being moved in the closing direction), control unit 41 proceeds to steps S186 and S187 via step S185, and sets a predetermined value GKVNTC# as advance correction gain Gkvnt (Gkvnt=GKVNTC#) and a predetermined value TCVNTC# as advance correction time constant representing parameter Tcvnt (Tcvnt=TCVNTC#). If Rvnt is equal to $Cavnt_{n-1}$, control unit 41 proceeds to steps S188 and S189 and holds previous values of advance correction gain Gkvnt and advance correction time constant representing variable Tcvnt unchanged ($Gkvnt=Gkvnt_{n-1}$ and $Tcvnt=Tcvnt_{n-1}$).

Value GKVNTO# for advance correction gain Gkvnt used in the operation of moving variable nozzle 53 in the opening direction is smaller than value GKVNTC# used in the operation of moving variable nozzle 53 in the closing direction (GKVNTO#<GKVNTC#). Similarly, value TCVNTO# for time constant representing variable Tcvnt used in the nozzle opening operation is smaller than value TCVNTC# used in the nozzle closing operation (TCVNTO#<TCVNTC#). In the closing operation of closing nozzle 53, the exhaust pressure acts to oppose or retard the motion. Therefore, the control system of this example increases gain Gkvnt and decreases the time constant (by increasing the time constant representing Tcvnt which is the reciprocal of the time constant).

At step S190, control unit 41 calculates predicted opening ratio Cavnt from advance correction time constant representing variable Tcvnt and target opening ratio Rvnt by:

$$[EQ14]$$

$$Cavnt = Rvnt \times Tcvnt + Cavnt_{n-1} \times (1\text{-}Tcvnt)$$

where $Cavnt_{n-1}$ is a previous value of Cavnt. From predicted opening ratio Cavnt and target opening ratio Rvnt, at step S191, control unit 41 determines a feedforward quantity Avnt_f by the advance operation expressed as:

$$[EQ15]$$

$$Avnt\_f = Gkvnt \times Rvnt - (Gkvnt\text{-}1) \times Cavnt_{n-1}$$

where $Cavnt_{n-1}$ is a previous value of Cavnt. The advance operation of steps S190 and S191 is fundamentally identical to the advance operation of steps S24 and S25 in FIG. 7.

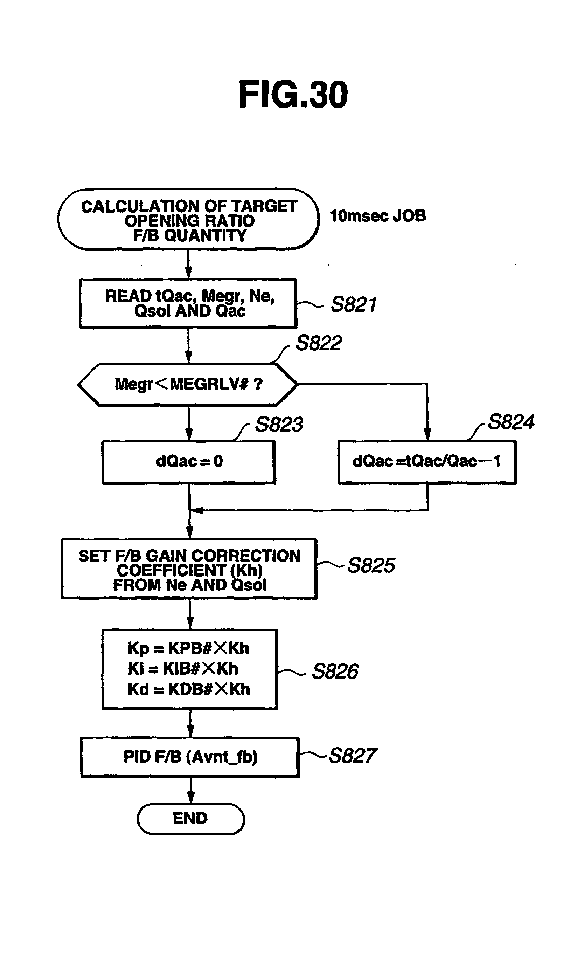

FIG. 30 (subroutine of step S96 of FIG. 15 or FIG. 16) is for calculating a feedback quantity Avnt_fb for the target opening ratio. Control unit 41 reads target intake air quantity tQac, target EGR rate Megr, engine speed Ne, target fuel injection quantity tQsol, and actual intake air quantity Qac at step S821 of FIG. 30. Then, at step S822, control unit 41 compares target EGR rate Megr with a predetermined value MEGRLV#.

If Megr≥MEGRLV# (in the EGR operative region), control unit 41 calculates, at step S824, an error ratio dQac from target intake air quantity by dividing tQac by (Qac-1).

$$[EQ16]$$

$$dQac = tQac/Qac-1$$

The error ratio dQac is positive when Qac as an actual value is smaller than tQac as a target, and negative when Qac is greater than tQac.

If Megr<MEGRLV# (in the EGR inoperative region), control unit 41 proceeds from step S822 to step S823 and sets error ratio dQac to zero (tQac=0) to forbid the feedback.

At step S825, control unit 41 calculates a feedback gain correction coefficient Kh from Ne and Qsol by lookup from a predetermined map. Then, at step S826, control unit 41 determines feedback gains Kp, Ki and Kd by multiplying each of constants (proportional constant KPB#, integral constant KIB# and derivative constant KDB#) by correction coefficient Kh. By using these feedback gains Kp (=KPB3×Kh), Ki (=KIB#×Kh) and Kd (=KDB#×Kh), control unit 41 calculates feedback quantity Avnt_fb at step S827. The calculation of this feedback quantity is based on a known PID control action.

Correction coefficient Kh is intended to adapt the feedback gains adequately to operating conditions (Ne, Qsol). Correction coefficient Kh is increased as the load and engine speed increase.

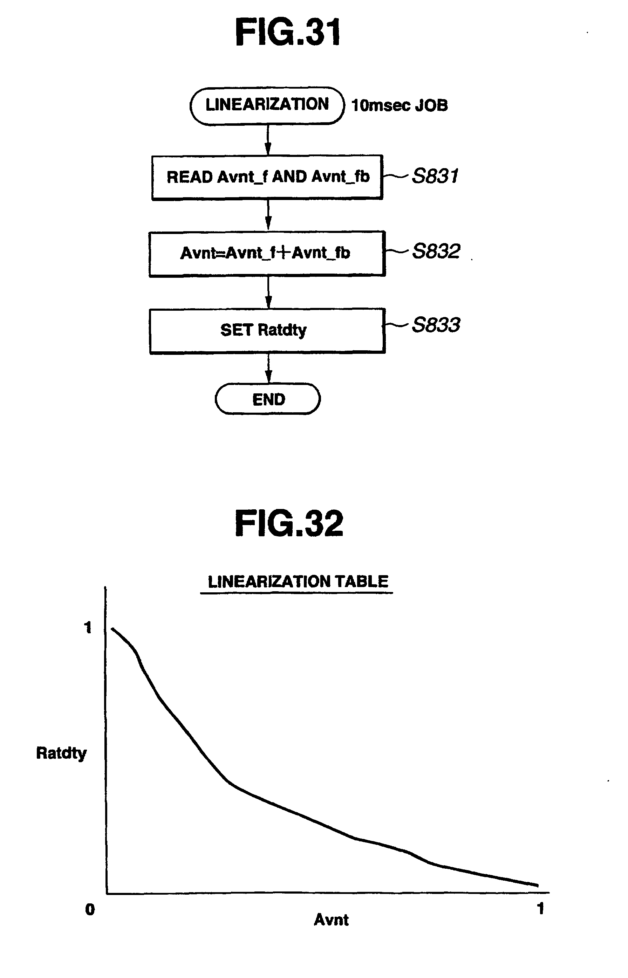

FIG. 31 shows a subroutine of step S97 in FIG. 15 or 16, for performing a linearizing operation on the target opening ratio. Control unit 41 reads feedforward quantity Avnt_f and feedback quantity Avnt_fb of the target opening ration at step S831, and calculates a command opening ratio Avnt by adding both quantities (Avnt = Avnt_f + Avnt_fb) at step S832. At step S133, control unit 41 determines a linearized command opening ratio Ratdty from command opening ratio Avnt by lookup from a table (linearization table) as shown in FIG. 32.

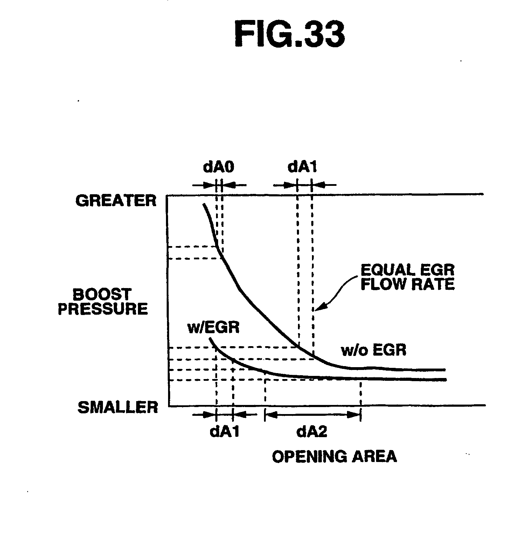

This linearizing operation is needed when the characteristic between the opening ratio (or opening area) and the command signal for the actuator for driving the turbocharger is nonlinear as shown in FIG. 32. As shown as an example in FIG. 33, even for an equal amount of change in the air quantity (boost pressure), an amount of change in the opening area is equal to dA0 in a small air quantity region, and equal to dA1 in a large air quantity region. Thus, the amount of change in the opening area differs widely in dependence on the level of the air quantity (when EGR is not performed). Moreover, the amount of change in the opening area is affected by the operativeness or inoperativeness of EGR. (In FIG. 33, w/EGR indicates a characteristic obtained with EGR, and w/oEGR a characteristic without EGR.) Therefore, it is practically impossible to obtain a desired intake air quantity (boost pressure) with a feedback gain held constant without regard to changes in the operating conditions. To facilitate adaptation of the feedback gain, therefore, the control system of this example employs the feedback gain correction coefficient Kh dependent on the operating conditions.

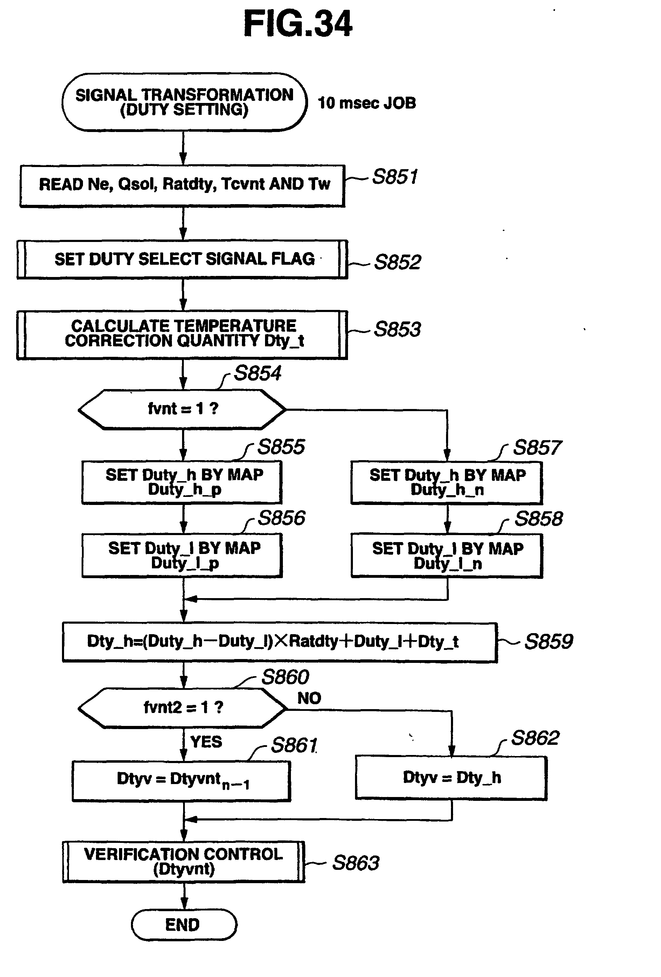

FIG. 34 is a subroutine of step S98 of FIG. 15 or 16, for setting a control command Dtyvnt which, in this example, is an ON duty applied to vacuum control valve 56.

At step S851, control unit 41 reads engine speed Ne, target fuel injection quantity Qsol, linearized command opening ratio Ratdty, advance correction time constant representing variable (or parameter) Tcvnt and water temperature Tw.

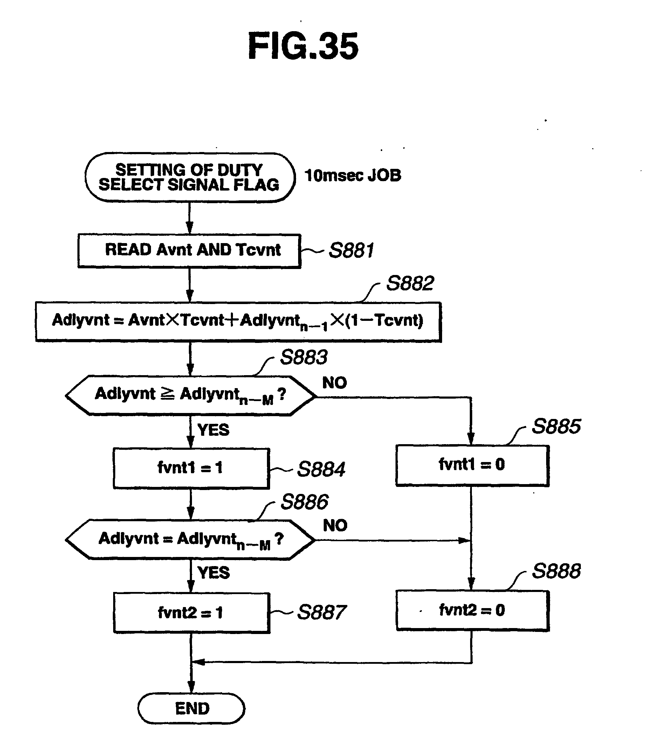

At step S852, control unit 41 sets a duty select signal flag by a flow of FIG. 35. At step S881, control unit 41 reads command opening ratio Avnt and advance correction time constant representing variable Tcvnt. From these, at step S882, control unit 41 calculates a predicted opening ratio Adlyvnt by a delay operation of:

$$[EQ17]$$

$$Adlyvnt = Avnt \times Tcvnt + Adlyvnt_{n-1} \times (1-Tcvnt)$$

where $Adlyvnt_{n-1}$ is a previous value of Adlyvnt. The thus-determined predicted opening ratio Adlyvnt is compared, at step S883, with an old value $Adlyvnt_{n-M}$ of Adlyvnt obtained M (a constant) cycles before.

If $Adlyvnt \geq Adlyvnt_{n-M}$ (in a state of increasing tendency or in a steady state), a direction command flag fvnt1 is set to one (fvnt1=1) at step S884 to indicate the increasing tendency or the steady state. Otherwise, the direction command flag fvnt1 is reset to zero (fvnt1=0) at step S885. At step S886 following step S884, control unit 41 further compares Adlyvnt with $Adlyvnt_{n-M}$ to discriminate the increasing tendency state from the steady state. Control unit 41 sets a duty hold flag fvnt2 to one (fvnt2=1) at step S887 if $Adlyvnt=Adlyvnt_{n-M}$, and resets duty hold flag fvnt2 to zero (fvnt2=0) at step S888 if $Adlyvnt>Adlyvnt_{n-M}$.

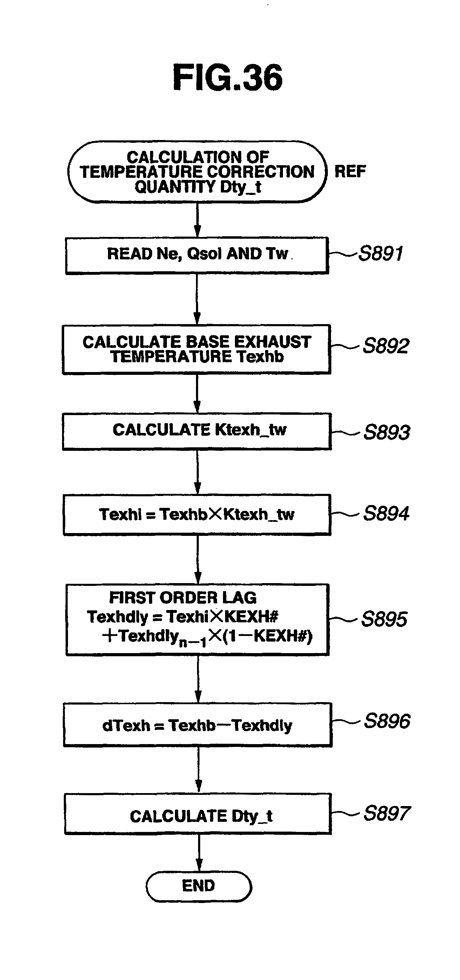

After the setting of fvnt1 and fvnt2, control unit 41 returns to step S853 of FIG. 34, and calculates a temperature correction quantity Dty_t for the duty factor (or duty cycle) by a flow of FIG. 36.

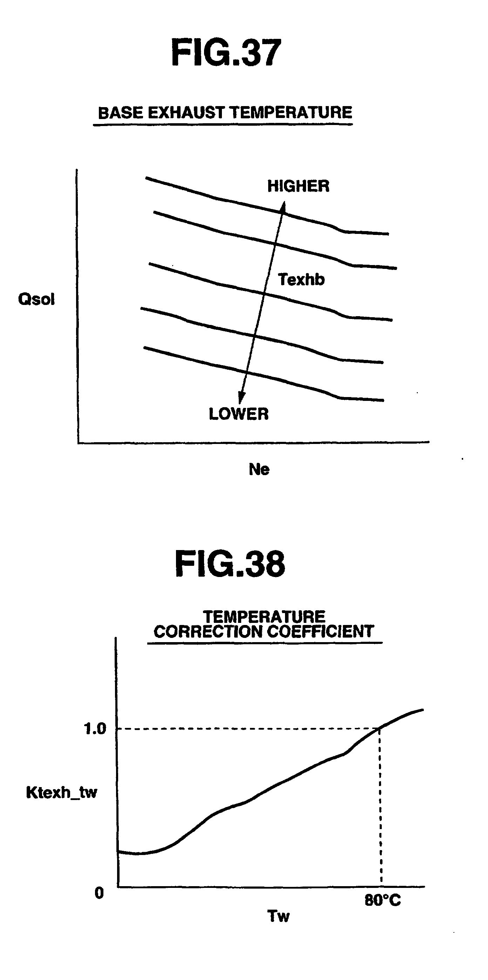

In FIG. 36, engine speed Ne, target fuel injection quantity Qsol and water temperature Tw are read at step S891, and base exhaust temperature Texhb is calculated at step S892 from Ne and Qsol by lookup from a map as shown in FIG. 37. Texhb is the exhaust temperature after completion of engine warm-up. Since there is a considerable difference between the exhaust temperature during warm-up period, and the exhaust temperate after warm-up period, control unit 41 calculates, at step S893, a water temperature correction coefficient Ktexh_tw from cooling water temperature Tw by lookup from a table shown in FIG. 38. Then, at step S894, exhaust temperature Texhi is determined by multiplication of base exhaust temperature Texhb by Ktexh_tw ($Texhi=Texhb\times Ktexh\_tw$).

At step S895, from exhaust temperature Texhi, control unit 41 calculates an actual exhaust temperature Texhdly by a delay operation for thermal inertia, expressed as:

[EQ18A]

$$Texhdly = Te\times hi\times KEXH\# + Texhdly_{n-1}\times (1-KEXH\#)$$

where KEXH# is a constant, and $Texhdly_{n-1}$ is a previous value of Texhdly.

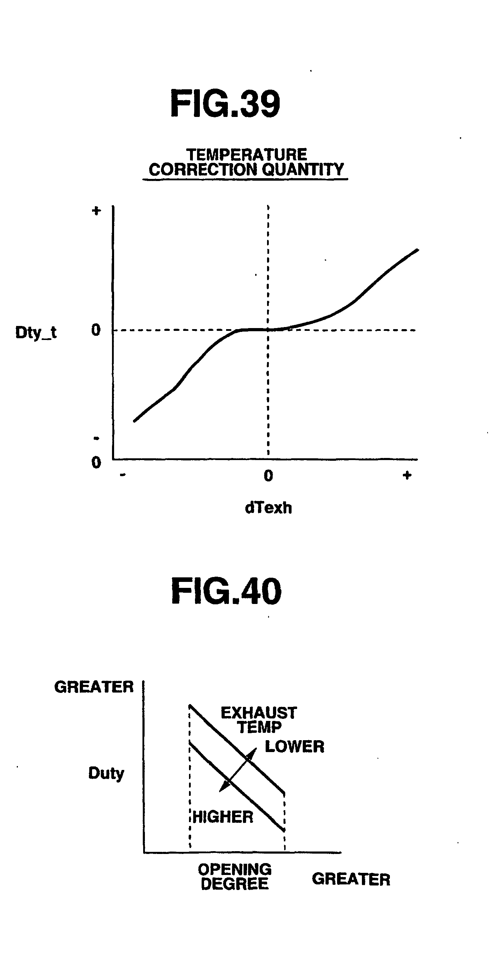

Then, control unit 41 calculates a difference dTexh between base exhaust temperature Texhb and actual exhaust temperature Texhdly at step S896, and further calculates a temperature duty correction quantity Dty_t from dTexh at step S897 by lookup from a table shown in FIG. 39. Steps S896 and S897 are designed to take consideration of setting of later-mentioned hysteresis adapted maps (maps of Duty_h_p, Duty_h_n, Duty_l_p, and Duty_l_n) for after-warm-up period, and to determine the correction quantity corresponding to the difference (i.e., dTexh) from that state. The correction by the temperature correction quantity Dty_t is required when the turbocharger driving actuator has a temperature characteristic dependent on the ambient temperature (cf. FIG. 40).

After the calculation of temperature correction quantity Dty_t, control unit 41 returns to step S854 of FIG. 34.

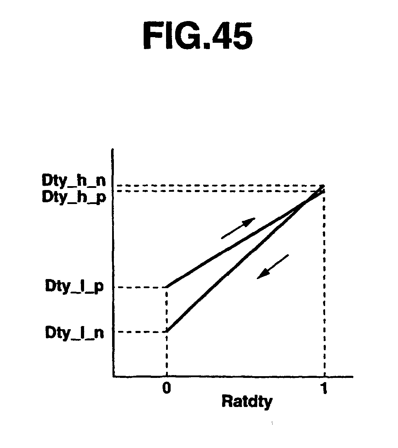

Steps S854 ~ S859 are for a hysteresis operation, as illustrated in FIG. 45, to use an upper characteristic (linear characteristic from Duty_l_p as command in the fully open state of the variable nozzle, to Duty_h_p as command in the fully closed state of the variable nozzle) when linearized command opening ratio Ratdty exhibits an increasing tendency, and a lower characteristic (linear characteristic from Duty_l_n as command in the fully open state of the variable nozzle, to Duty_h_n as command in the fully closed state of the variable nozzle) when linearized command opening ratio Ratdty exhibits a decreasing tendency. In a region near a vertical dot line at which Ratdty=1, the lower characteristic is above the upper characteristic. This region is not used in practice, however.

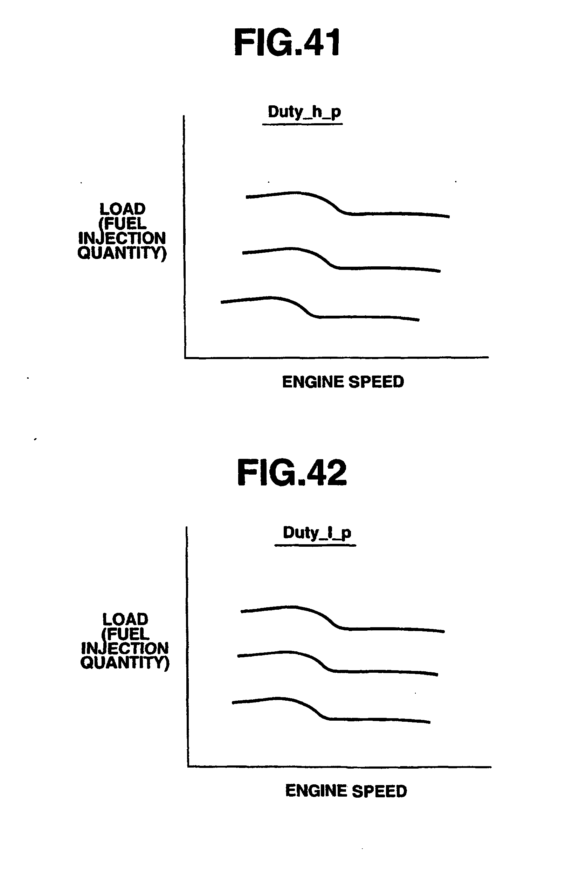

Reverting to FIG. 34, control unit 41 checks flag fvnt1 at step S854. If fvnt1=1 (the opening ratio tends to increase or remains in the steady state), control unit 41 sets, at S855, a fully closed state duty factor Duty_h for the fully closed state of the variable nozzle from the engine speed and load by lookup from a map (Duty_h_p map) as shown in FIG. 41, and further sets, at step S856, a fully open state duty factor Duty_l for the fully open state of the variable nozzle from the engine speed and load by lookup from a map (Duty_l_p map) as shown in FIG. 42.

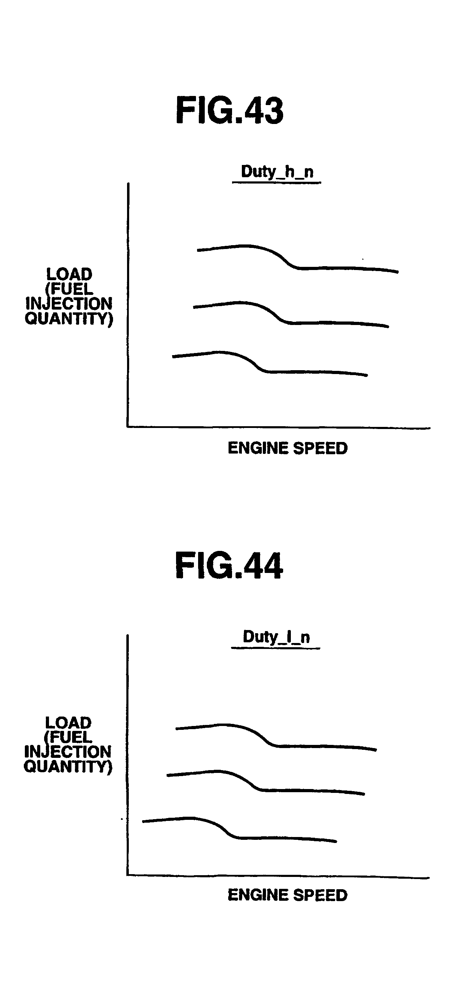

If fvnt=0 (the opening ratio tends to decrease), control unit 41 sets, at S857, fully closed state duty factor Duty_h for the fully closed state of the variable nozzle by lookup from a map (Duty_h_n map) as shown in FIG. 43, and further sets, at step S858, fully open state duty factor Duty_l for the fully open state of the variable nozzle by lookup from a map (Duty_l_n map) as shown in FIG. 44.

By using nozzle fully closed state duty factor Duty_h, nozzle fully open state duty factor Duty_l and linearized command opening ratio Ratdty, at step S859, control unit 41 calculates a base command duty factor Dty_h by a linear interpolation expressed as:

[EQ18B]

$$Dty\_h = (Duty\_h - Duty\_l)\times Ratdty + Duty\_1 + Dty\_t$$

Thus, control unit 41 changes the characteristic of the straight line used in the interpolation (to introduce hysteresis) between the non-decreasing state (of the increasing tendency or steady state) and the decreasing state of the opening ratio, and thereby makes greater the base command duty factor Dty_h in the non-decreasing state than in the decreasing state (of the decreasing tendency) even if the linearized command opening ratio remains unchanged.

At step S860, control unit 41 checks second flag fvnt2. If fvnt2=1 (the linearized command opening ratio remains unchanged), control unit 41 holds the duty factor by setting a previous control command duty factor $Dtyvnt_{n-1}$ as normal command duty factor Dtyv (Dtyv= $Dtyvnt_{n-1}$) at step S861. If fvnt2=0 (the opening ratio has a decreasing tendency), control unit 41 proceeds to step S862 and sets most recent value Dty_h as Dtyv (Dtyv=Dty_h).

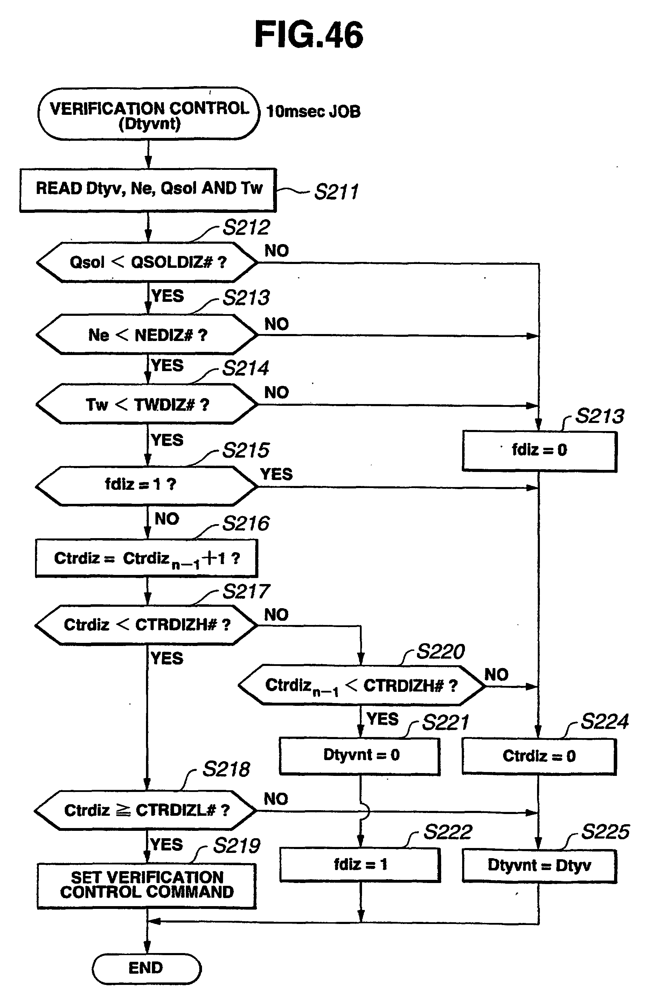

At step S863, control unit 41 performs a verification control by a flow of FIG. 46.

At step S211, control unit 41 reads normal command duty ratio Dtyv, engine speed Ne, target fuel injection quantity Qsol and water temperature Tw. Steps S212 ~ S215 are decision steps for checking five conditions to enter the verification control. When all the conditions are met, control unit 41 measures time up to a start of the verification control. The first condition of step S212 is satisfied when Qsol is smaller than a predetermined value QSOLDIZ# (at the time of fuel cutoff, that is). The second condition of step S213 is satisfied when Ne is lower than a predetermined value NEDIZ# (in a medium speed region). The third condition of step S214 is satisfied when Tw is lower than a predetermined value TWDIZ# (before completion of warm-up). The fourth condition of step S215 is satisfied when a verification end flag fdiz is equal to zero (fdiz=0) (when the verification control is not yet performed). If all these conditions of steps S212 ~ S215 are satisfied, control unit 41 increments a verification control counter Ctrdiz at step S216.

This counter Ctrdiz is compared, at step S217, with a predetermined value CTRDIZH# (about 7 sec, for example) for defining an upper limit of the counter, and further compared, at step S218, with a predetermined value CTRDIZL# (about 2 sec, for example) for defining a lower limit of the counter.

From the timing at which counter Ctrdiz becomes equal to the lower limit CTRDIZL#, control unit 41 proceeds to step S219, and sets verification control command duty factor, as long as counter Ctrdiz is smaller than the upper limit CTRDIZH#. The difference CTRDIZH# - CTRDIZL# represents a duration during which the verification control is carried out.

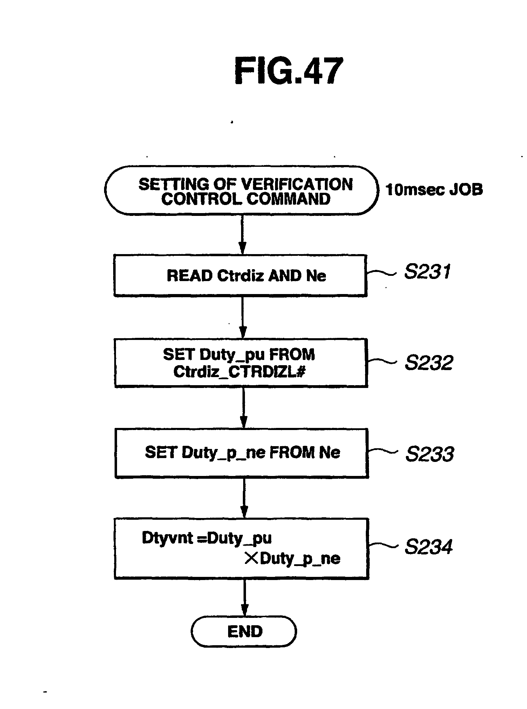

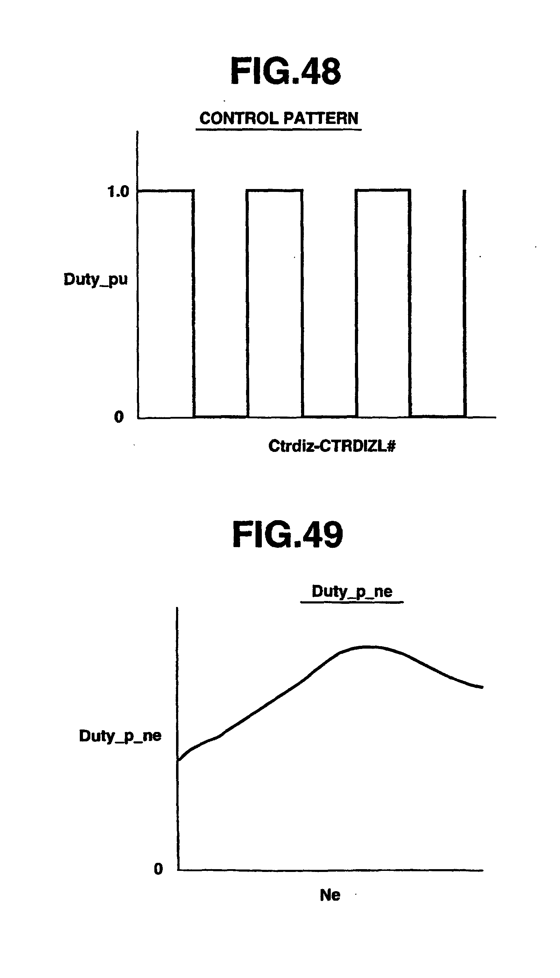

The verification control command duty factor is set by a flow of FIG. 47. In FIG. 47, control unit 41 reads verification control counter Ctrdiz and engine speed Ne at step S231, and sets, at step S232, a control pattern Duty_pu from Ctrdiz-CTRDIZL# ($\geq$0) by lookup from a table as shown in FIG. 48. Control pattern Duty_pu is designed to move variable nozzle 53 periodically at short intervals between the fully closed position and fully open position.

At step S233, control unit 41 sets a duty factor Duty_p_ne from engine speed Ne by lookup from a table as shown in FIG. 49. Control command duty factor Dtyvnt is determined at step S234 by multiplying control pattern Duty_pu by Duty_p_ne at step S234 (Dtyvnt = Duty_pu×Duty_p_ne). As shown in FIG. 49, the duty factor Duty_p_ne is varied in accordance with Ne on the assumption that the duty command for verifying the opening and closing operations of variable nozzle 53 is dependent on the engine speed. For example, the duty command is increased with increase in the engine speed because the exhaust pressure opposing the closing movement of variable nozzle 53 becomes higher as the engine speed increases. In a higher engine speed region, the duty command is decreased (as shown in FIG. 49) to avoid adverse influence by this control.

Reverting to FIG. 46, if the verification control counter is smaller than the lower limit CTRDIZL#, control unit 41 proceeds from step S218 to step S225, and sets control command duty factor Dtyvnt equal to normal command duty Dtyv (Dtyvnt=Dtyv).

When the verification control counter becomes greater than or equal to the upper limit CTRDIZH#, control unit 41 proceeds from S217 to step S220, and compares previous verification control counter $Ctrdiz_{n-1}$ with upper limit CTRDIZH#. If $Ctrdiz_{n-1}$<CTRDIZH#, then control unit 41 judges that the verification control counter has just become equal to or greater than CTRDIZH#, and sets control command duty Dtyvnt equal to zero (Dtyvnt=0) at step S221 to terminate the verification control. The reason for this is to ensure the control accuracy in the normal control operation by putting variable nozzle 53 once in the fully open position at the end of verification control. At step S222, control unit 41 set verification control end flag fdiz to one (Fdiz=1), and terminates the process in the current cycle. From the next cycle, flag fdiz set to one acts to block the entry to step 216 and the following steps, and thereby prevents the verification control from being performed twice after a start of the engine. In the case of the negative answer of step S220, control unit 41 resets verification control counter Ctrdiz to zero (Ctrdiz=0) at step S224, and then performs step S225.

If Qsol is greater than or equal to predetermined value QSOLDIZ# (out of the fuel cutoff operation), or if Ne is higher than or equal to NEDIZ# (in a high speed region), or if Tw is higher than or equal to TWDIZ# (after the engine warm-up), control unit 41 proceeds from step S212 or S213 or S214 to step S213, resets flag fdiz to zero (fdiz=0) to prevent the verification control, and then performs steps S224 and S225.

By thus performing the verification control specifically when the temperature is low, and in other situations in which the operation of the actuator for driving the turbocharger tends to be unstable, this control system can make the movement of variable nozzle smooth, and make reliable the operation of the actuator for the turbocharger.

In this way, the control system terminates the process of FIG. 15 or FIG. 16.

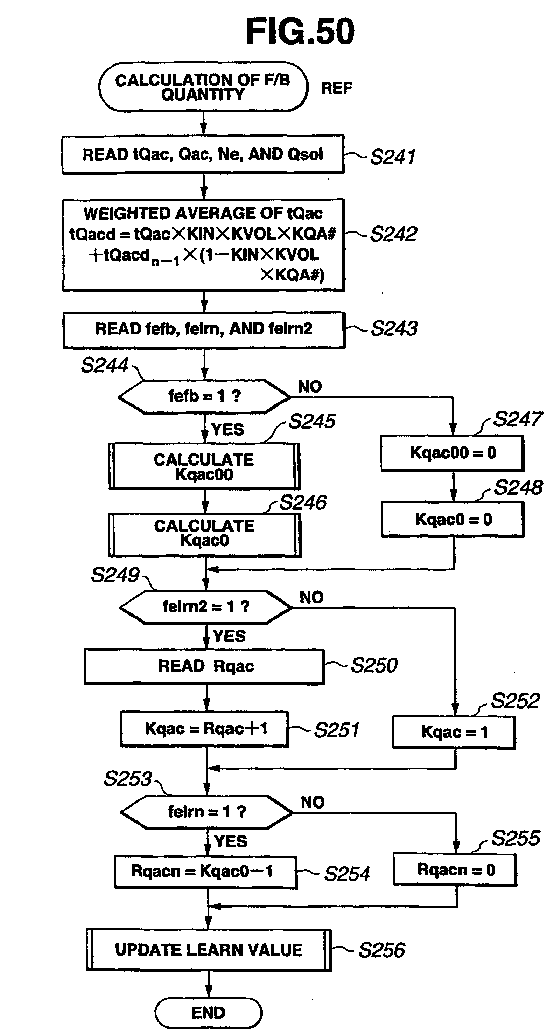

FIG. 50 shows a process for determining two feedback correction coefficients Kqac00 and Kqac0 used for calculation of the EGR quantity and an EGR flow velocity, and learning correction coefficient Kqac for calculation of the EGR flow velocity. This process is performed each time the REF signal is inputted.

At step S241, control unit 41 reads target intake air quantity tQac, actual intake air quantity Qac, engine speed Ne, and target fuel injection quantity Qsol. At step S242, control unit 41 calculates, from target intake air quantity tQac, a delayed target intake air quantity tQacd by the following equation (of a first order lag):

[EQ19]

$$tQacd = tQac \times KIN \times KVOL \times KQA\#$$

$$+ tQacd_{n-1} \times (1 - KIN \times KVOL \times KQA\#)$$

where KIN is the volumetric efficiency corresponding value, KVOL = VE/NC/VM, VE is the displacement, NC is the number of engine cylinders, VM is the volume of the intake system, and $tQacd_{n-1}$ is a previous value of Qacd determined in the last cycle. This delaying operation is for preventing feedback correction coefficients Kqac00 and Kqac0 and learning variable Rqac from being increased by a delay in air supply due to the volume in the intake system.

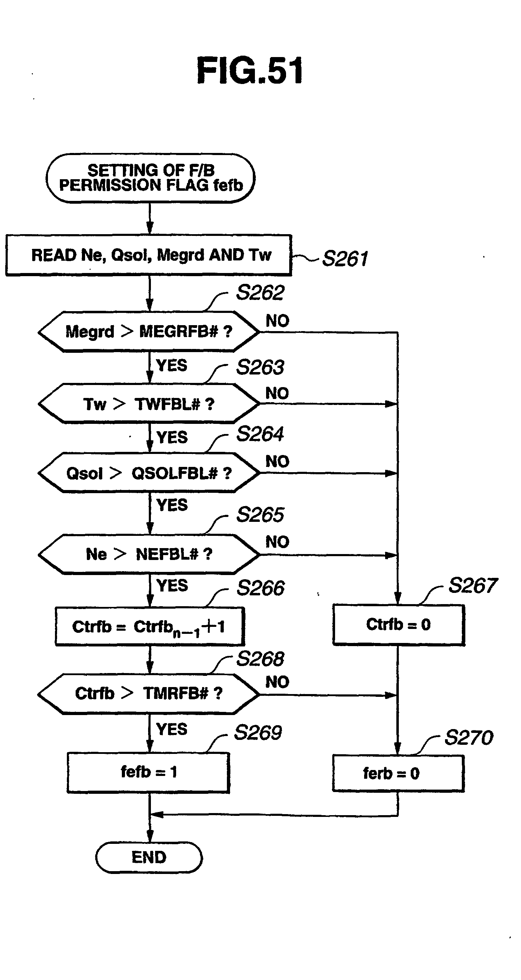

At step S243, control unit 41 reads various feedback-related flags fefb, felrn and felrn2, which are set by flows of FIGS. 51, 52 and 53. Each of FIGS. 51, 52 and 53 is performed at regular time intervals (of 10 msec, for example), independent of FIG. 50.

FIG. 51 is for feedback permission (or enable) flag fefb. At step S261, control unit 41 reads engine speed Ne, target fuel injection quantity Qsol, actual EGR rate Megrd and water temperature Tw.

Then, control unit 41 checks conditions of steps S262~S265 and S268 one by one and thereby determines whether to permit the feedback. This control system permits the feedback if all the five conditions of S262~S265 and S268 are satisfied, and inhibits the feedback if any one or more of these conditions is not satisfied.

The first condition of step S262 is met if Megrd is greater than a predetermined value MEGRFB# (within the EGR operative region). The second condition of step S263 is met if Tw is higher than a predetermined value TWFBL# (about 30°C, for example). The third condition of step S264 is met if Qsol is greater than a predetermined value QSOLFBL# (the fuel cutoff is inoperative). The fourth condition of step S265 is met if Ne is higher than a predetermined value NEFBL# (out of an engine stall speed range). The fifth condition of step S268 is met if a feedback start counter Ctrfb is greater than a predetermined value TMRFB# (a value shorter than 1 sec, for example). If all these five conditions of steps S262~S265 and S268 are met, the feedback permission flag fefb is set to one (fefb=1) at step S269 to enable the feedback. Otherwise, feedback permission flag fefb is reset to zero (fefb=0) to disable the feedback at step S270.

Feedback start counter Ctrfb is counted up at step S266 when the conditions of steps S262~S265 are satisfied, and reset to zero at step S267 when any one or more of the conditions of S262~S265 is unsatisfied.

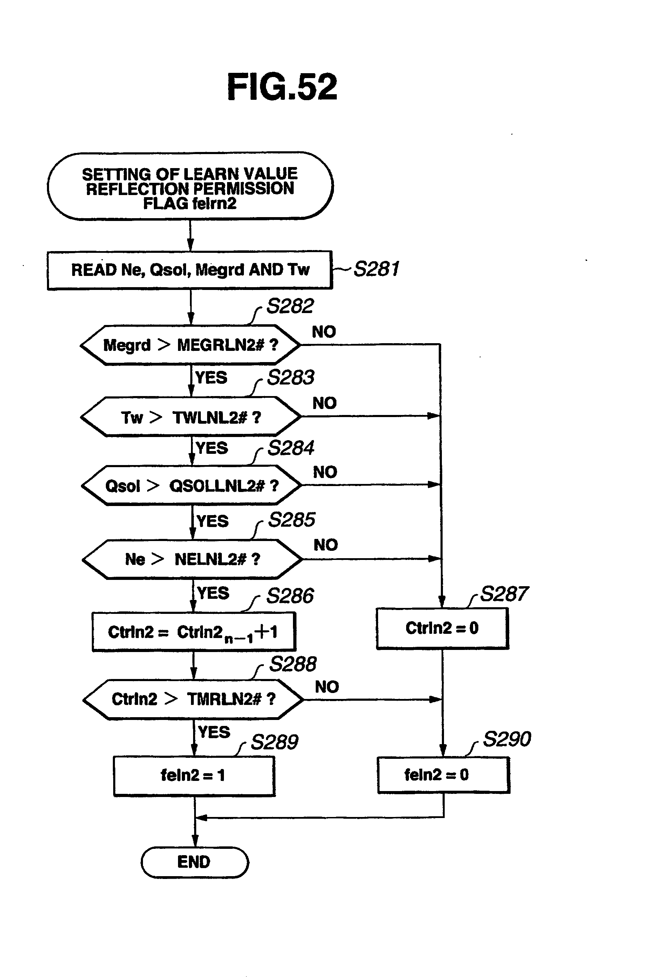

FIG. 52 is for a learning (learn value) reflection permission (or enable) flag felrn2. At step S281, control unit 41 reads engine speed Ne, target fuel injection quantity Qsol, actual EGR rate Megrd and water temperature Tw.

Then, control unit 41 checks conditions of steps S282~S285 and S288 one by one and thereby determines whether to permit the reflection of learning result. This control system permits the reflection of learning if all the five conditions of S282~S285 and S288 are satisfied, and inhibits the reflection if any one or more of these conditions is unsatisfied.

The first condition of step S282 is met if Megrd is greater than a predetermined value MEGRLN2# (within the EGR operative region). The second condition of step S283 is met if Tw is higher than a predetermined value TWLNL2# (about 20°C, for example). The third condition of step S284 is met if Qsol is greater than a predetermined value QSOLLNL2# (the fuel cutoff is inoperative). The fourth condition of step S285 is met if Ne is higher than a predetermined value NELNL2# (out of the engine stall speed range). The fifth condition of step S288 is met if a learning reflection counter Ctrln2 is greater than a predetermined value TMRLN2# (about 0.5 sec, for example). If all these five conditions of steps S282~S285 and S288 are met, the learning reflection permission flag felrn2 is set to one (felrn2=1) at step S289 to enable the reflection. Otherwise, learning reflection permission flag felrn2 is reset to zero (felrn2=0) to disable the reflection.

Learning reflection counter Ctrln2 is counted up at step S286 when the conditions of steps S282~S285 are satisfied, and reset to zero at step S287 when any one or more of the conditions of S282~S285 is unsatisfied.

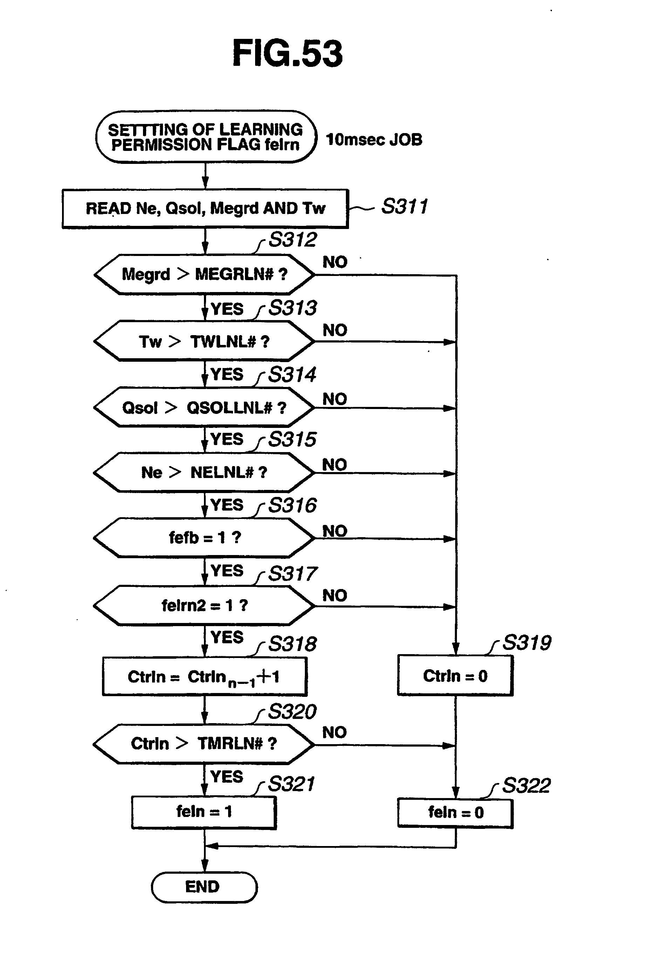

FIG. 53 is for a learning permission (or enable) flag felrn. At step S311, control unit 41 reads engine speed Ne, target fuel injection quantity Qsol, actual EGR rate Megrd and water temperature Tw.

Then, control unit 41 checks conditions of steps S312~S317 and S320 one by one and thereby determines whether to permit the learning. This control system permits the learning if all the seven conditions of S312~S317 and S320 are satisfied, and inhibits the learning if any one or more of these conditions is unsatisfied.

The first condition of step S312 is met if Megrd is greater than a predetermined value MEGRLN# (within the EGR operative region). The second condition of step S313 is met if Tw is higher than a predetermined value TWLNL# (about 70~80°C, for example). The third condition of step S314 is met if Qsol is greater than a predetermined value QSOLLNL# (the fuel cutoff is inoperative). The fourth condition of step S315 is met if Ne is higher than predetermined value NELNL# (out of the engine stall speed range). The fifth condition of step S316 is met if feedback permission flag fefb is equal to one. The sixth condition of step S317 is met if reflection permission flag felrn2 is equal to one. The seventh condition of step S320 is met if a learning delay counter Ctrln is greater than a predetermined value TMRLN# (about 4 sec, for example). If all these seven conditions of steps S312~S317 and S320 are met, the learning permission flag feln is set to one (feln=1) at step S321 to enable the learning. Otherwise, learning permission flag feln is reset to zero (feln=0) to disable the learning at step 322.

Learning delay counter Ctrln is counted up at step S318 when the conditions of steps S312~S317 are satisfied, and reset to zero at step S319 when any one or more of the conditions of S312~S317 is unsatisfied.

Reverting to FIG. 50, step S244 checks feedback permission flag fefb. If fefb=1, control unit 41 calculates EGR quantity feedback correction coefficient Kqac00 and EGR flow velocity feedback correction coefficient Kqac0 at steps S245 and S246. Ifefb=0, control unit 41 sets Kqac00 equal to one (Kqac00=1) at step S247 and sets Kqac0 to one (Kqac0=1) at step S248.

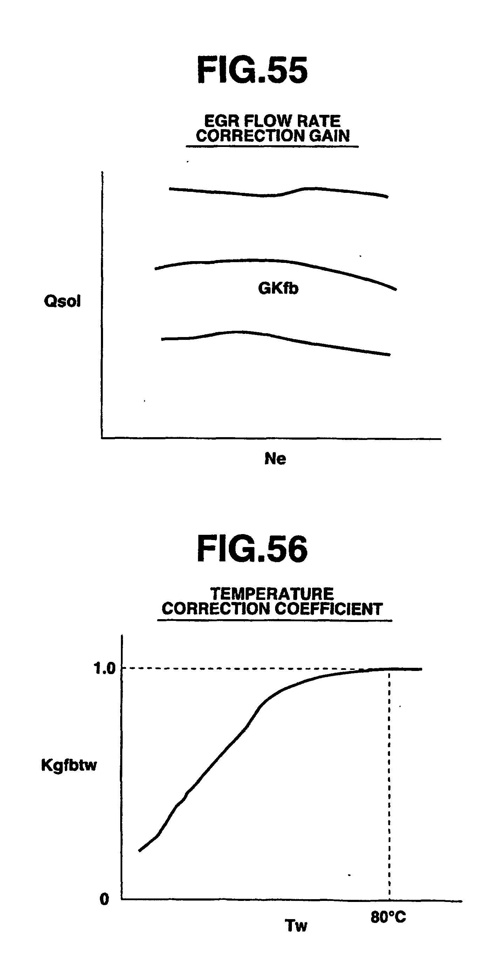

FIGS. 54 and 55 show flows for calculating Kqac00 and Kqac0.

In FIG. 54 (subroutine of step S245 in FIG. 50), control unit 41 reads delayed target intake air quantity tQacd, actual intake air quantity Qac, engine speed Ne, target fuel injection quantity Qsol and water temperature Tw at step S331.

Then, control unit 41 calculates an EGR flow rate correction gain Gkfb from Ne and Qsol by lookup from a map as shown in FIG. 55 at step S332, and further calculates a temperature correction coefficient Kgfbtw for the correction gain, from Tw by lookup from a table as shown in FIG. 56 at step S333. By using Gkfb and Kgfbtw, at step S334, control unit 41 calculates EGR quantity feedback correction coefficient Kqac00 according to:

[EQ20]

$$Kqac00 = (tQacd/Qac-1) \times Gkfb \times Kgfbtw + 1$$

The first factor (tQacd/Qac-1) in the first term on the right side of equation EQ20 is an error ratio from the delayed target intake air quantity. By addition of one to this, Kqac00 becomes equal to a value around one. In EQ20, EGR quantity feedback correction coefficient Kqac00 is calculated in proportion to the error ratio from the delayed intake air quantity.

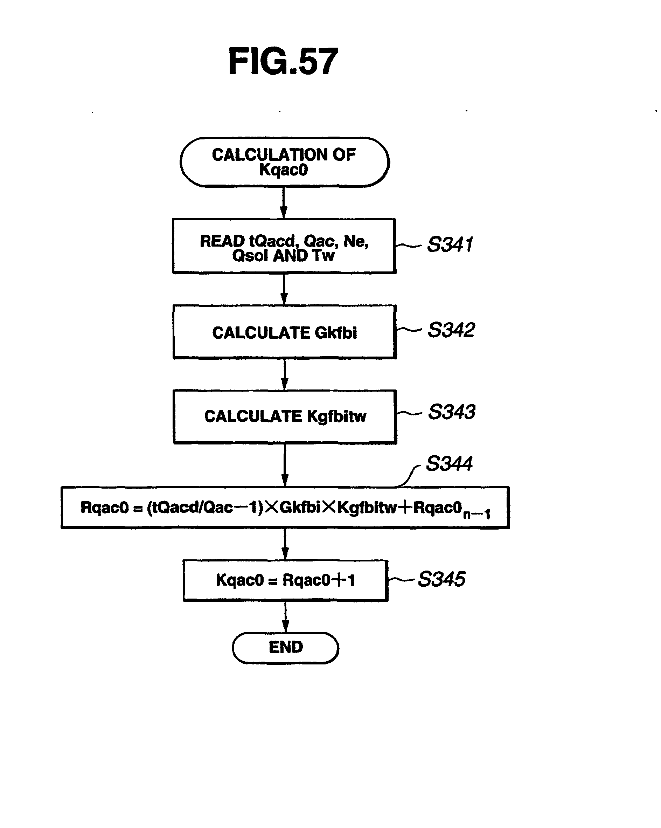

In FIG. 57 (subroutine of step S246 in FIG. 50), control unit 41 reads delayed target intake air quantity tQacd, actual intake air quantity Qac, engine speed Ne, target fuel injection quantity Qsol and water temperature Tw at step S341.

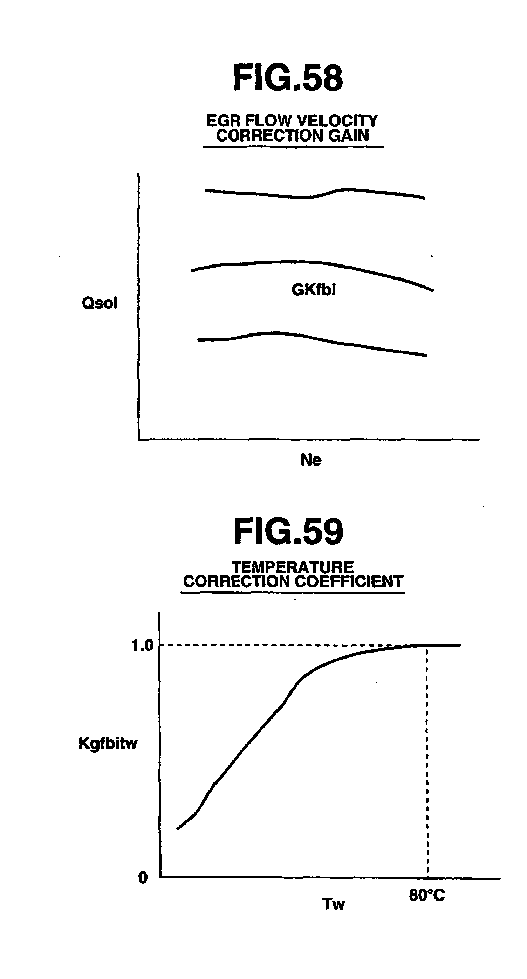

Then, control unit 41 calculates an EGR flow velocity correction gain Gkfbi from Ne and Qsol by lookup from a map as shown in FIG. 58 at step S342, and further calculates a temperature correction coefficient Kgfbitw for the correction gain, from Tw by lookup from a table as shown in FIG. 59 at step S343. By using Gkfbi and Kgfbitw, at step S344, control unit 41 updates error ratio Rqac0 according to:

[EQ21]

$$Rqac0 = (tQacd/Qac-1) \times Gkfbi \times Kgfbitw + Rqac0_{n-1}$$

where $Rqac0_{n-1}$ is a previous value of Rqac0. At step S345, EGR flow velocity correction coefficient Kqac0 is determined by addition of one to Rqac0 (Kqac0 = Rqac0+1).

In this way, EGR flow velocity feedback correction coefficient Kqac0 is calculated in proportion to an integrated value (or integral) of error ratio (tQacd/Qac-1) from the delayed target intake air quantity (integral control action).

As shown in FIG. 55 or 58, each correction gain is made dependent on engine operating conditions (Ne and Qsol) to decrease the correction gain in an engine operating region susceptible to hunting. As shown in FIG. 56 or 59, temperature correction coefficient is decreased with decrease in temperature (before warm-up) to maintain engine stability in a low temperature region where the engine revolution tends to be unstable.

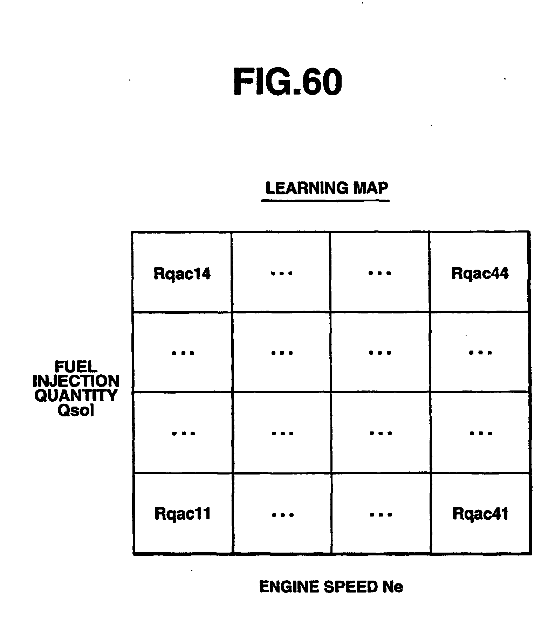

After the calculation of Kqac00 and Kqac0, control unit 41 proceeds to step S249 of FIG. 50, and checks reflection permission flag felrn2. If felrn2=1 (to permit reflection), control unit 41 proceeds to step S250, and determines error ratio learning variable Rqac from Ne and Qsol by lookup from a map as shown in FIG. 60. At step S251, EGR flow velocity learning correction coefficient Kqac is determined by addition of one to Rqac (Kqac=Rqac+1 ). If felrn2=0 (to inhibit the reflection), control unit 41 proceeds from step S249 to step S252, and sets EGR flow velocity learning correction coefficient Kqac to one (Kqac=1).

Step S253 following step S251 or S252 is to check learning permission flag felrn. If felrn=1 (to permit the learning), control unit 41 proceeds to step S254, and determines error ratio Rqacn by subtracting one from EGR flow velocity feedback correction coefficient Kqac0 (Rqacn=Kqac0-1 ). If felrn=0 (to inhibit the learning), control unit 41 proceeds from step S253 to step S255, and resets error tatio Rqacn to zero (Rqacn=0).

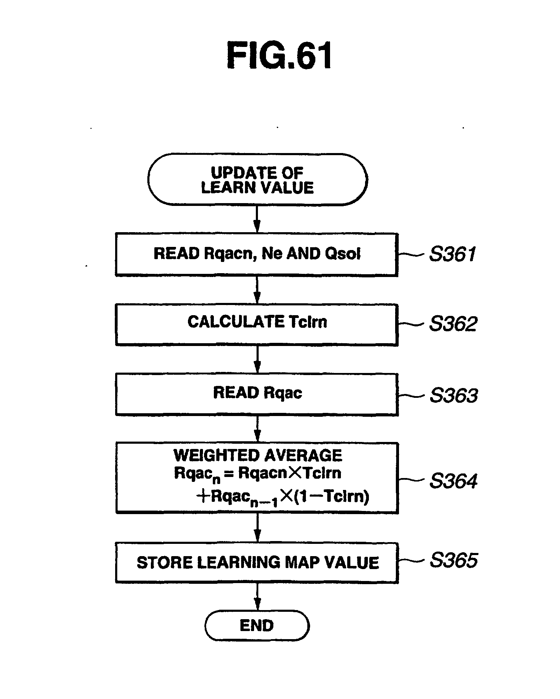

By using the thus-determined error ratio Rqacn, control unit 41 updates error ratio learning variable Rqac at step S256, by following a flow of FIG. 61.

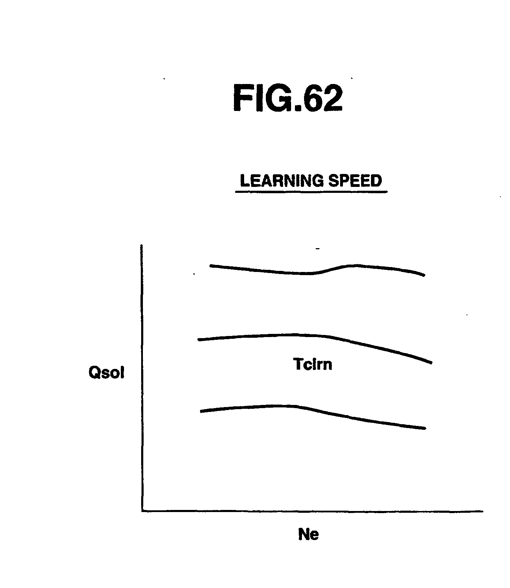

In FIG. 61 (subroutine of step S256 of FIG. 50), control unit 41 reads, at step S361, error ratio Rqacn, engine speed Ne, and target fuel injection quantity Qsol. From Ne and Qsol, a learning speed Tclrn is determined at atep S362 by lookup from a map as shown in FIG. 62. At step S363, control unit 41 retrieves a value of error ratio learning variable Rqac corresponding to Ne and Qsol from a learning map as shown in FIG. 60. Step S364 is to perform a weighted average operation by:

$$[EQ22]$$

$$Rqac_n = Rqacn \times Tclrn + Rqac_{n-1} \times (1\text{-}Tclrn)$$

where $Rqac_n$ is a value of error ratio learning variable after updating, and $Rqac_{n-1}$ is a value of error ratio learning variable before updating (=retrieved learning variable value). The updated value $Rqac_n$ of the learning variable is stored, at step S365, in the learning map shown in FIG. 60 (replace the value before updating by the value after the updating).

FIG. 63 (subroutine of step S12 in FIG. 5) is for calculating EGR flow velocity Cqe.

Control unit 41 reads actual EGR quantity Qec, actual EGR rate Megrd, and actual intake air quantity Qac at step S381, and further reads EGR flow velocity feedback correction coefficient Kqac0 and EGR flow velocity learning correction coefficient Kqac at step S382. At step S383, control unit 41 calculates a corrected (or modified) actual EGR quantity Qec_h by correcting actual EGR quantity Qec with Kqac0 and Kqac according to:

$$[EQ23]$$

$$Qec\_h = Qec \times Kqac \times Kqac0$$

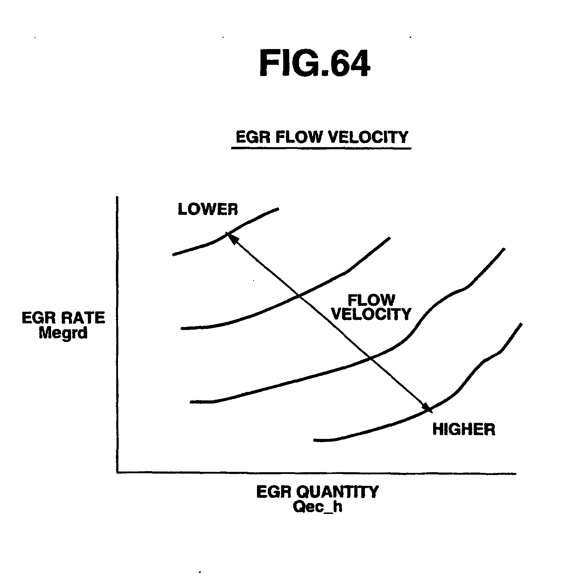

From corrected actual EGR quantity Qec_h and actual EGR rate Megrd, at step S388, control unit 41 calculates EGR flow velocity Cqe by lookup from a map as shown in FIG. 64. Steps S384~S387 will be mentioned later.

The characteristic of the EGR flow velocity shown in FIG. 64 has such a strong nonlinearity that the sensitivity in the feedback of EGR is varied in dependence on engine operating conditions. Therefore, to reduce the variation in the feedback quantity in dependence on the operating conditions, EGR flow velocity feedback correction coefficient Kqac0 is used as feedback to actual EGR quantity Qec used for retrieval from a flow velocity map.

In a region near the right side end in FIG. 64 in which the slop of the characteristic becomes steep, an error in adaptation of map tends to increase and change EGR valve opening area Aev. To eliminate influence from the error in Cqe appearing in Aev=Tqek/Cqe, this control system performs a corresponding correction on target EGR quantity Tqek by introducing EGR quantity feedback correction coefficient Kqac00. With this coefficient Kqac00, control unit 41 modifies target EGR quantity Tqek at step S26 in FIG. 7.

By equation EQ20, Kqac00 is calculated in proportion to the error ratio from the delayed target intake air quantity. Therefore, the control system can effect a correction immediately to the adaptation error in the EGR flow velocity map of FIG, 64 by this proportional control. Assuming, as a simplified example, that correction gain Gkfb is equal to one, and the warm-up is completed, Kqac00=(tQacd/Qac-1)+1 . In this case, if actual intake air quantity Qac is smaller than target quantity tQacd, Kqac00 becomes greater than one, and immediately decreases Tqec. With the decrease in the target EGR quantity, the fresh air quantity (intake air quantity) increases relatively, and actual intake air quantity Qac becomes closer to target quantity tQacd.

Steps S384~S387 constitute a section for setting an initial value at the beginning of EGR operation. At step S384, corrected actual EGR quantity Qec_h is compared with zero. If Qec_h=0 (EGR is inoperative), control unit 41 proceeds to step S385, and sets corrected actual EGR quantity Qec_h by:

$$[EQ24]$$

$$Qec\_h = Qac \times MEGRL\#$$

where MEGRL# is a constant. Similarly, control unit 41 compares actual EGR rate Megrd with zero at step S386, and sets actual EGR rate Megrd by the following equation EQ25 at step S387 if Megrd=0.

[EQ25]

$$Megrd = MEGRL\#$$

When EGR valve 6 is fully closed, naturally the flow velocity of EGR gas flowing through EGR valve 6 is equal to zero. In consideration of the beginning of EGR operation, however, steps S385 and S387 set initial values of the parameters used for calculating the flow velocity, by using equations EQ24 and EQ25. As mentioned before, MEGRL# is 0.5, for example. Moreover, the pressure difference between both sides of the EGR valve (and hence the EGR flow velocity) at the beginning of EGR operation varies in accordance with operating conditions, and such variation is further taken into account. The pressure difference on both sides of the EGR valve at the beginning of EGR operation is related to actual intake air quantity Qac. Therefore, this control system calculates the initial value of Qec_h in proportion to Qac by using equation EQ24, and thereby improves the accuracy in calculating the EGR flow velocity at the beginning of EGR operation.

The thus-constructed control system according to this embodiment calculates target intake air quantity tQac in accordance with engine operating conditions (Ne, Qsol), and determines target opening ratio Rvnt as target manipulated variable for the supercharger in accordance with target intake air quantity tQac and actual EGR quantity Qec in the first practical example of FIG. 15, and in accordance with target intake air quantity tQac and actual EGR rate Megrd in the second practical example of FIG. 16. Therefore, this control system can achieve the target intake air quantity for optimum fuel economy irrespective of variation in target EGR quantity (Qec0) or target EGR rate Megr as target for the EGR system. This improves the controllability of the turbocharger and EGR system in every situation including transient state, and draws out best performance of both. Moreover, this embodiment can simplify the adaptation, adjustment and logic.

Specifically in transient state, there is a lag from a stepwise change in the target EGR quantity or target EGR rate Megr until actual EGR quantity Qec or actual EGR rate Megrd catches up with the target (cf. curves of target and actual EGR rates Megr and Megrd in FIGS.65 and 66), and the deviation from the target EGR quantity or rate could produce an error in target opening ratio Rvnt, and thereby make it difficult to achieve the desired intake air quantity for optimum fuel consumption. The control system according to the embodiment can avoid this possibility by determining target opening ratio Rvnt by using a delayed variable (such as actual EGR quantity Qec in FIG. 15 or actual EGR rate Megrd in FIG. 16) obtained by a delaying operation on a target variable (such as target EGR quantity or rate), and by controlling the turbocharger effectively even during the transient period to achieve the target intake air quantity for optimum fuel consumption.

At the time of acceleration, moreover, actual EGR rate Megrd increases beyond target EGR rate Megr (cf. FIGS. 65 and 66), and this deviation tends to cause smoke. However, the control system according to this embodiment modifies the target EGR rate to a lower value in accelerating operation in which the actual common rail pressure decreases below the target common rail pressure, and thereby prevent the generation of smoke. FIGS. 65 and 66 show target EGR rate Megr before the modification.

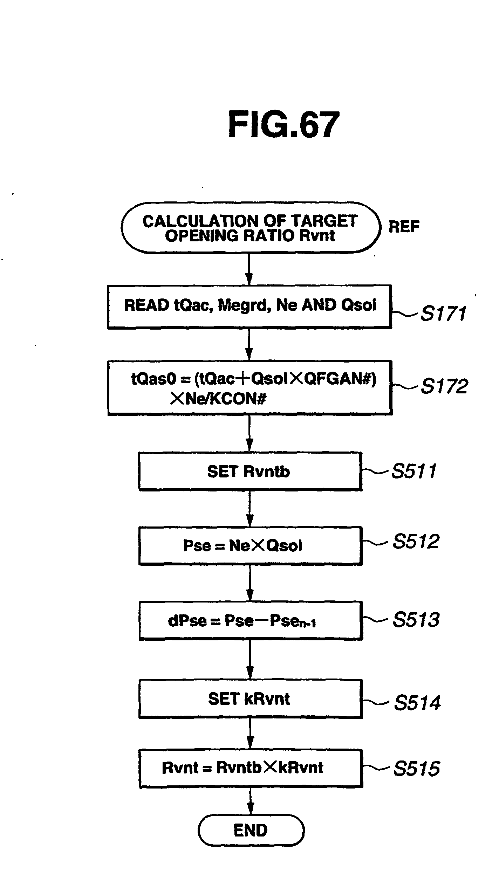

In the engine system having the common rail type fuel injection system in which the common rail pressure becomes the fuel injection pressure, it is possible to prevent smoke by modifying the common rail pressure for a limited period during acceleration to the higher pressure side. However, the modification of the common rail pressure to the higher side causes an increase in drive loss of the supply pump and thereby deteriorates the fuel consumption. Though the common rail pressure is varied in accordance with changes in the operating conditions (Ne, Qsol) according to the map of FIG. 67, the control system according to this embodiment does not require the modification of the common rail pressure for acceleration. Therefore, the control system can prevent deterioration of the fuel consumption due to loss in the supply pump, and decrease in durability of the common rail fuel injection system.

This embodiment can meet the requirement for varying the correction quantity (or the sensitivity) in dependence on the engine load even for the same injection pressure error (or common rail pressure error). For example, the control system can prevent the generation of smoke responsively even at the time of acceleration of great load by varying the ratio of the decreasing modification of the target EGR rate in accordance with the engine load (Qsol) so that the ratio of the modification of decreasing the target EGR rate is higher in acceleration of greater load than in acceleration of smaller load (that is, the control target is decreased in the case of greater load acceleration as compared to smaller load acceleration.

The feedback correction for reducing the deviation of actual intake air quantity Qac from delayed target intake air quantity tQacd is effective for preventing decrease in the excess air ratio and improving the robustness to the exhaust in spite of variation in the intake air quantity due to an exhaust pressure increase caused by deterioration of catalyst or operation irregularity of a variable capacity turbocharger. In the first and second practical examples, moreover, EGR flow speed Cqe is employed as the object of the feedback correction.

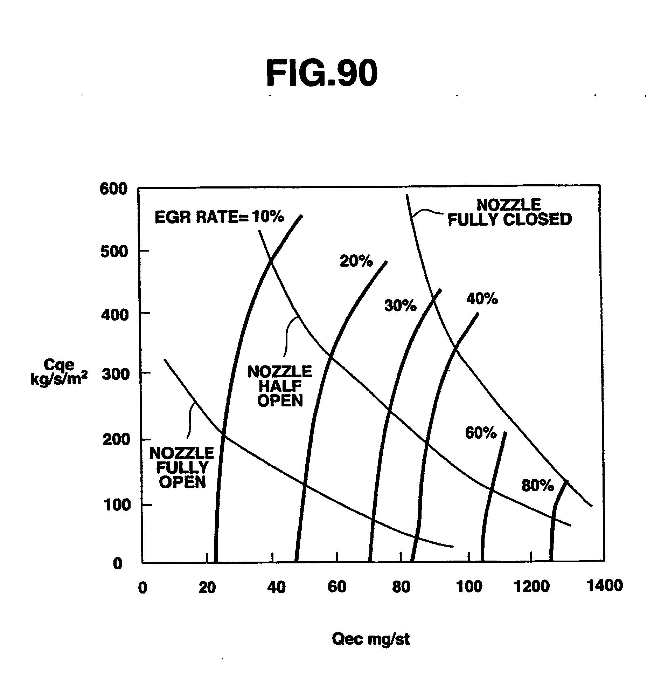

As shown in FIG. 90, it was first found that there is a strong correlation among cylinder EGR quantity Qec, target EGR rate Megr and EGR flow velocity Cqe, without regard to the nozzle opening degree of the variable nozzle. Based on this finding, the control system according to this embodiment predicts EGR flow velocity Cqe and controls the EGR valve opening in accordance with the predicted value. By so doing, even in the case of an engine equipped with a variable capacity type turbocharger, the control system can accurately calculate the target EGR quantity independent of the variable nozzle opening degree. Moreover, the use of EGR gas flow velocity Cqe which is independent of distinction between steady state and transient state ensures the accurate calculation of the target EGR rate even in the transient state.

Consequently, the steady state and transient state can be treated evenly in setting the feedback gain, hence the setting of the feedback gain is easier and the robustness to the exhaust gas is enhanced as compared to the feedback correction aimed to the EGR quantity or intake air quantity.

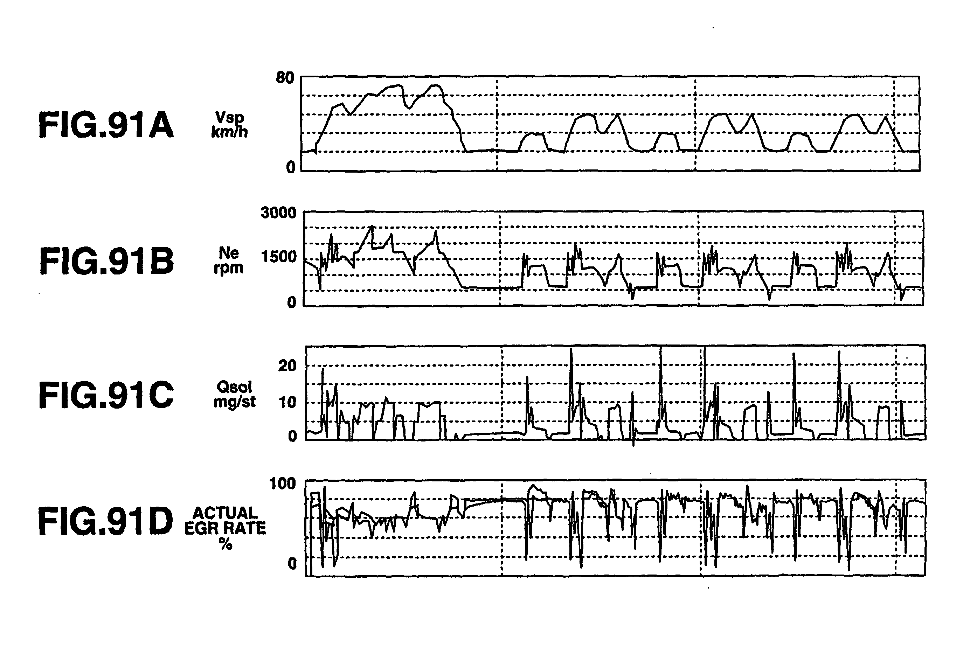

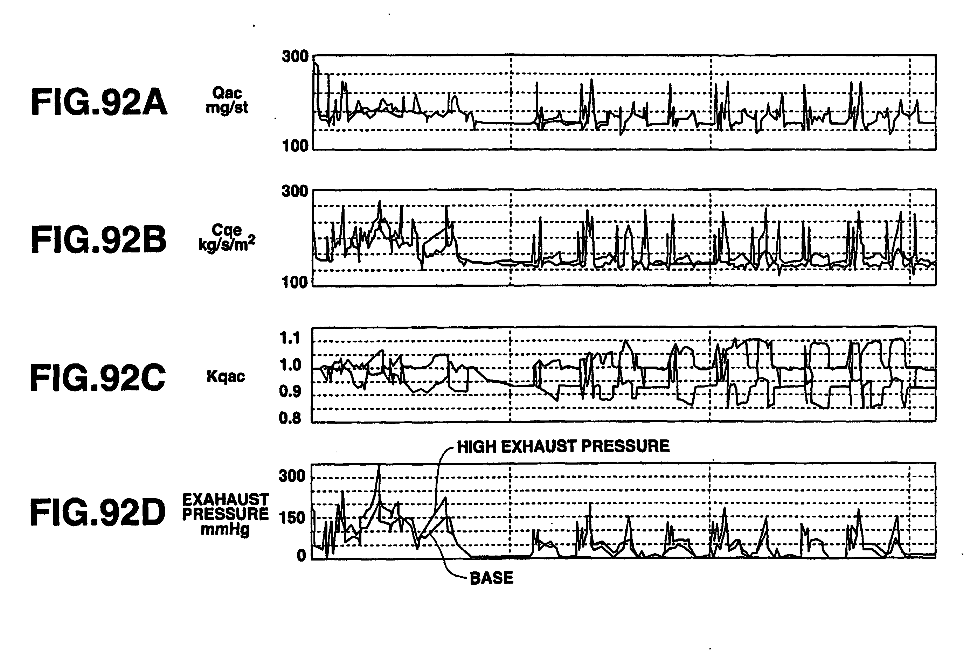

FIGS. 91A~91D and 92A~92D show the results of simulation of operation in 10-15 modes in an example in which the exhaust pressure is at a standard level (base) and an example in which the exhaust pressure is higher than the standard level due to unit to unit irregularity. When the control accuracy is low, waveforms of the actual EGR rate and actual intake air quantity Qac tend to differ widely between both cases. In the control system according to this embodiment, however, waveforms of the actual EGR rate and actual intake air quantity Qac are almost superposed as shown in FIG. 91D for the actual EGR quantity and in FIG. 92A for actual intake air quantity Qac). Thus, even if the exhaust pressure is higher than the standard level, the control system according to this embodiment can attain the characteristics of the actual EGR rate and actual intake air quantity Qac as in the base example.

In this embodiment, actual EGR quantity Qec as parameter used for calculating EGR flow velocity Cqe is corrected with EGR flow velocity learning correction coefficient Kqac determined from the deviation ratio learning varialbe Rqac for each operating subregion, and this learned value Rqac is updated in accordance with EGR flow velocity feedback correction quantity Kqac0. Therefore, learning variable Rqac functions to absorb fluctuation so as to make the ratio (deviation or error ratio) of actual intake air quantity Qac and delayed target intake air quantity tQacd equal to one, and accordingly to reduce variation of feedback correction coefficient Kqac0, so that the controllability of EGR and boost pressure is improved.

The EGR flow velocity map including the actual EGR quantity and actual EGR rate as parameters has a characteristic as shown in FIG. 64. In the region near the right side end in FIG. 64 in which the slop of the characteristic is steep, the error in adaptation of map tends to increase and exert influence to change EGR valve opening area Aev. However, in this embodiment, target EGR quantity Tqek is feedback-corrected in accordance with the ratio (deviation ratio) between actual EGR quantity Tqek and delayed target intake air quantity tQacd, so that actual intake air quantity can be converged to delayed target intake air quantity tQacd even if the EGR flow velocity map has adaptation error.

In the transient state, the actual EGR quantity and rate deviate, respectively, from the target quantity and rate. This deviation is due to the delay by the volume of the intake system, so that, in the transient state, the calculation of the EGR flow velocity from the target EGR quantity and EGR rate would cause an error in the flow velocity due to the delay by the intake system volume. In the embodiment of the present invention, EGR flow velocity Cqe is calculated from actual EGR quantity Qec and actual EGR rate Megrd obtained by the delay operation on the target EGR quantity and rate for taking account of the delay by the intake system volume, so that the calculation is accurate.

FIG. 67 shows a third practical example. The flow of FIG. 67 is a substitute for FIG. 27 of the second practical example. Steps S171 and S172 in FIG. 67 are substantially identical to those in FIG. 27.

At step S511 following step S172, control unit 41 retrieves a value corresponding to set intake air quantity representing variable tQas0 and actual EGR rate Megrd from the map shown in FIG. 28, and sets the thus-obtained value as a base target opening ratio Rvntb.

Then, control unit 41 calculates a product Pse by multiplication between engine speed Ne and target fuel injection quantity Qsol (Pse=Ne×Qsol) at step S512, further calculates a difference dPse between the current value of Pse and a previous value $Pse_{n-1}$ of the product Pse at step S513, and calculates, from dPse, an opening ratio correction coefficient kRvnt by lookup from a table as shown in FIG. 68, at step S514. At step S515, target opening ratio Rvnt is determined by multiplying target base opening ratio Rvntb of step S511 by correction coefficient kRvnt of step S514 (Rvnt = Rvntb×kRvnt).

Opening ratio correction coefficient kRvnt takes effect in accelerating operation. During acceleration, a rise in the boost pressure lags behind a rise in the exhaust pressure (this lag in the boost pressure causes a decrease in the charging efficiency). In the accelerating state where the load changes largely, the increasing speed of the exhaust pressure is higher than the increasing speed of the boost pressure, so that the charging efficiency tends to lower. Therefore, by increasing correction coefficient kRvnt with increase in difference dPse as shown in FIG. 68, this control system corrects the opening ratio to the increasing side, and thereby prevents a decrease in the charging efficiency due to a delay in the boost pressure in accelerating operation.

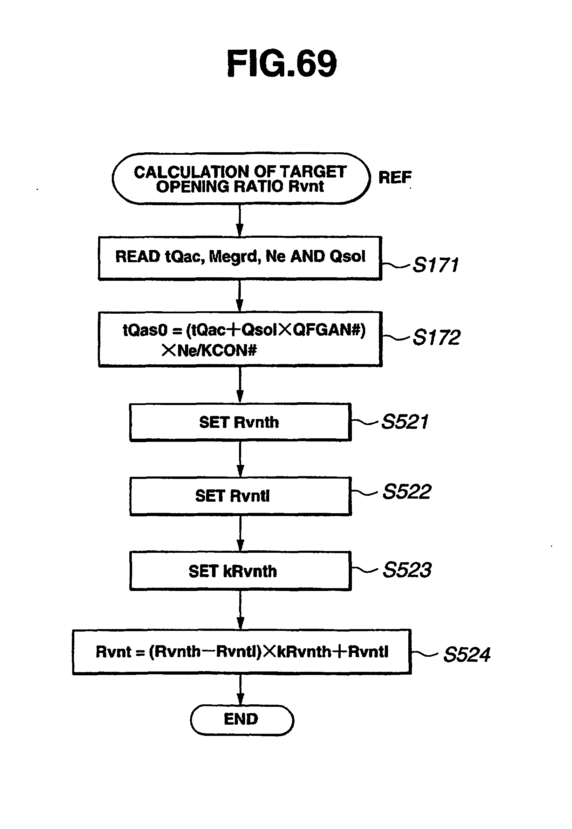

FIG. 69 shows a flow of a fourth practical example, to be substituted for FIG. 27 of the second practical example. In steps S171 and S172, FIG. 69 is substantially identical to FIG. 27.

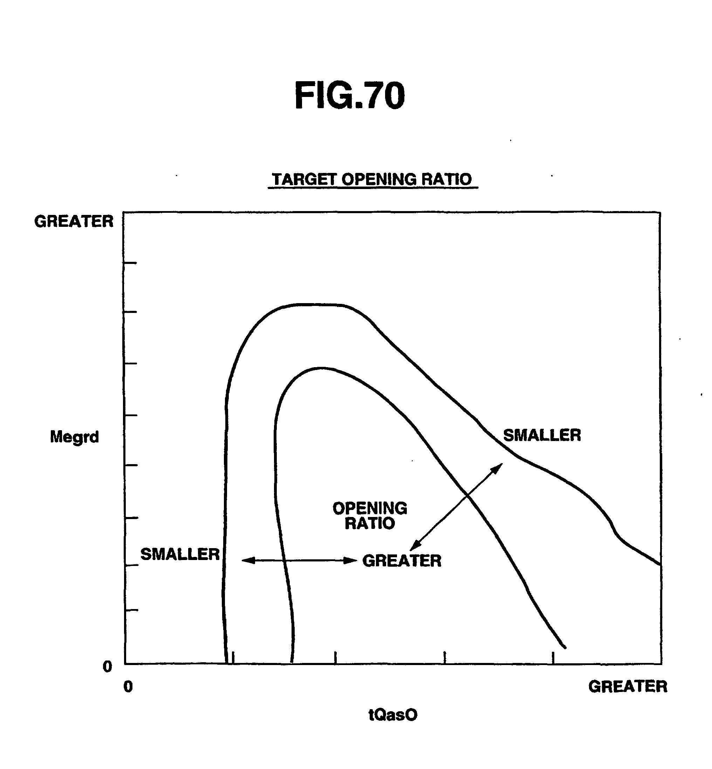

At step S521 following step S172, control unit 41 retrieves a value corresponding to set intake air quantity representing variable tQas0 and actual EGR rate Megrd from the map shown in FIG. 28, and sets the thus-obtained value as after-warm-up target base opening ratio Rvntbh. At step S522, control unit 41 retrieves a value corresponding to tQas0 and Megrd from a map shown in FIG. 70, and sets the thus-obtained value as before-warm-up (cold period) target base opening ratio Rvntbl.

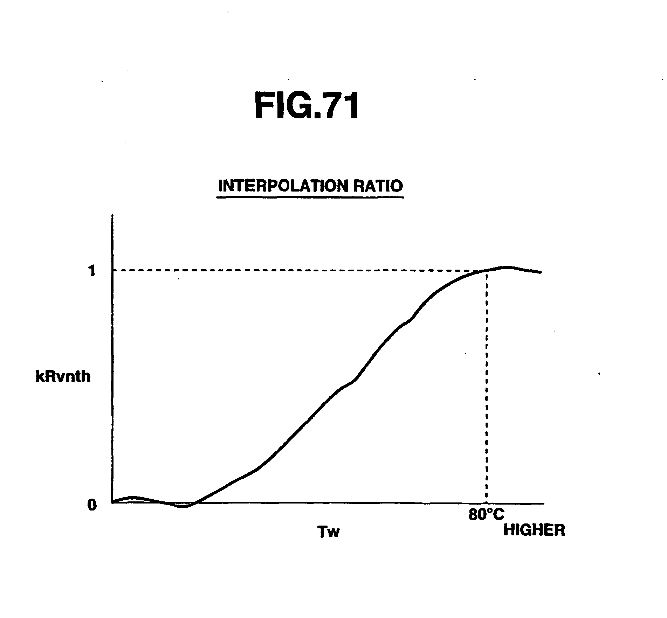

At step S523, control unit 41 calculates interpolation ratio kRvnth from water temperature Tw by lookup from a table as shown in FIG. 71. By using interpolation ratio kRvnth, control unit 41, at step S524, determines a value between Rvnth and Rvntl by interpolation, and sets the thus-obtained value as target opening ratio Rvnt. The equation used for this interpolation is:

[EQ26]

$$Rvnt = (Rvnth-Rvntl) \times kRvnth + Rvntl$$

Unlike the characteristic of FIG. 28 oriented mainly toward the fuel economy, the characteristic of FIG. 70 is designed to attach weight on the emission, so that the value at the position of "GREATER" in FIG. 70 is about 40. The value at the position of "SMALLER" is about 20 as in the fuel efficient characteristic of FIG. 28.

By the interpolation between the emission oriented characteristic during cold period and the fuel oriented characteristic after warm-up, the control system in the fourth practical example can attain the goals of both fuel consumption and exhaust performance during the process of warm-up.

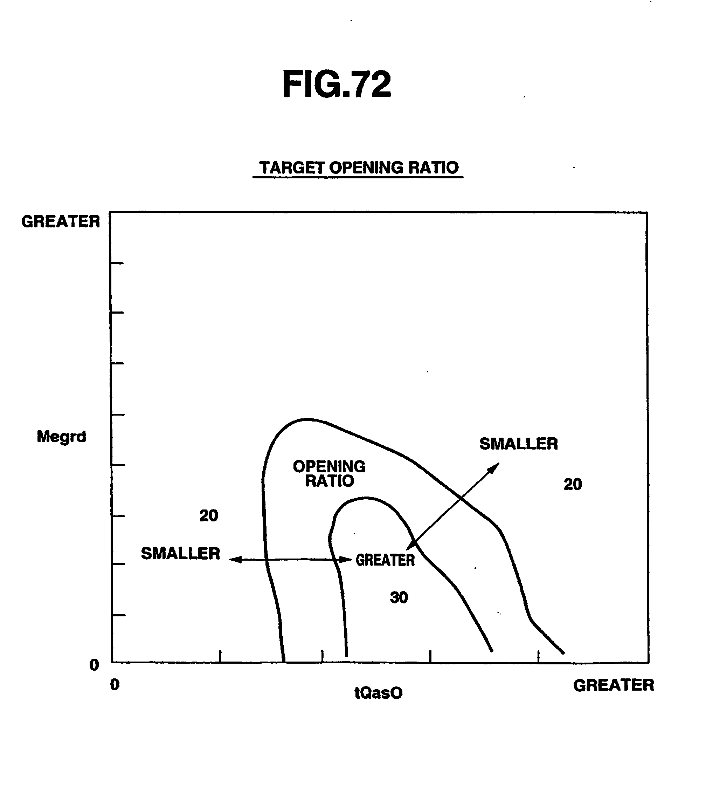

The third practical example employs the fuel efficient target opening ratio map, and takes account of the demand in accelerating operation. It is optional, however, to employ a target opening ratio map of a characteristic designed to attach weight on accelerating performance, as shown in FIG. 72.

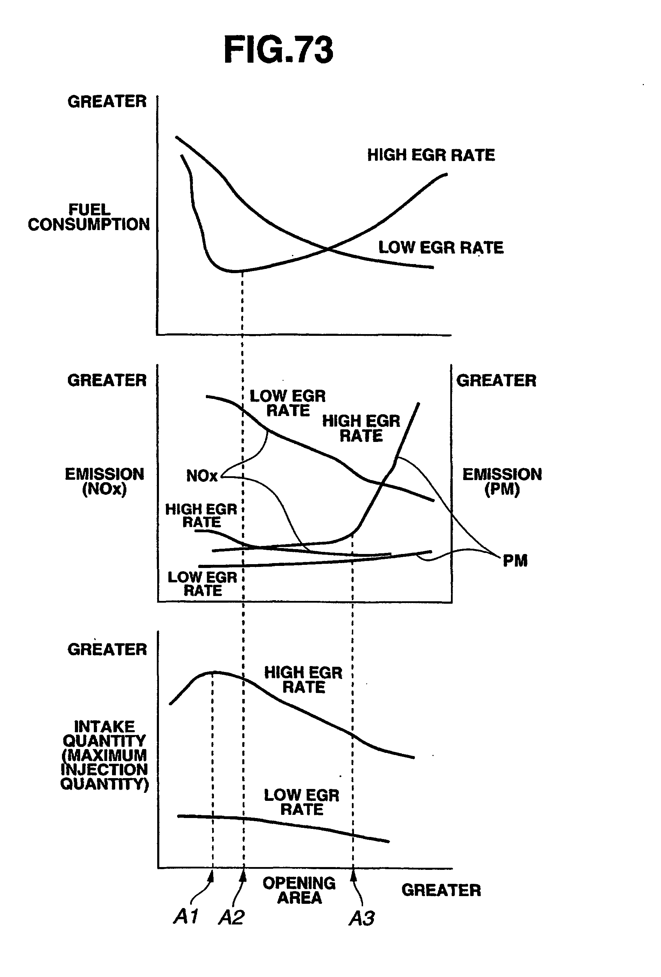

FIG. 73 is for illustrating how to select one from the fuel oriented characteristic, emission oriented characteristic and acceleration oriented characteristic. FIG. 73 shows variation in fuel consumption, exhaust emission (NOx and PM) and intake air quantity in cases of higher EGR rate and lower EGR rate under the condition that engine speed and torque are constant. In FIG. 73, A2 indicates a value of the variable nozzle opening area at which the fuel consumption is optimum. A3 indicates a value at which the exhaust emission is optimum. A1 is a value at which the intake air quantity is maximum (the ability of acceleration is optimum). These values A1, A2 and A3 differ significantly, as shown in FIG. 73, even if the engine speed and torque are equal. Therefore, a characteristic to attach weight on the fuel consumption can be obtained by collecting a multitude of values of the opening area to optimize the fuel consumption for various values of the engine speed and torque, and arranging the values in a map having tQas0 and Megrd as parameters.

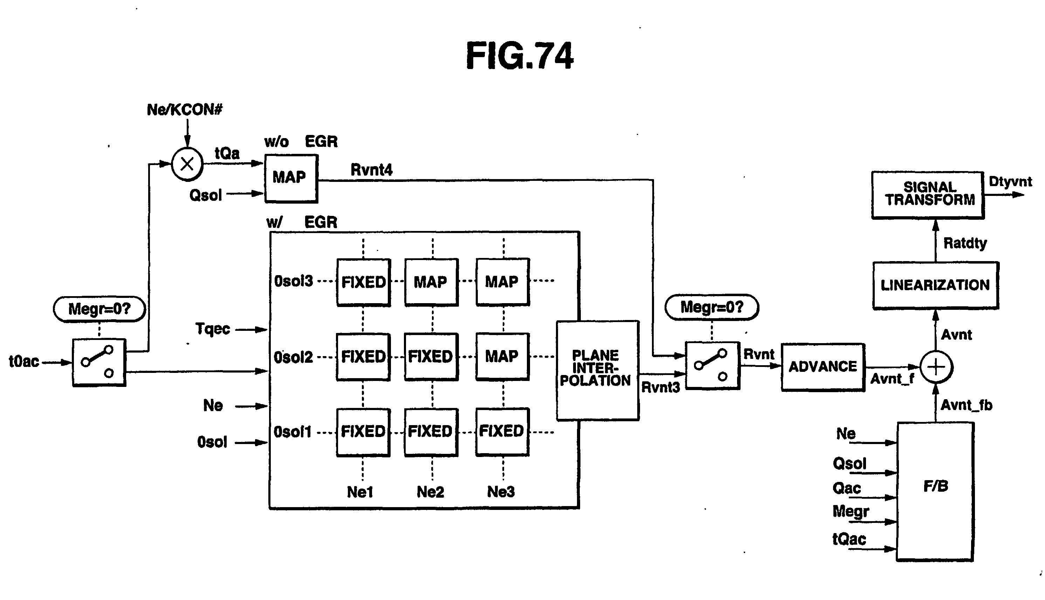

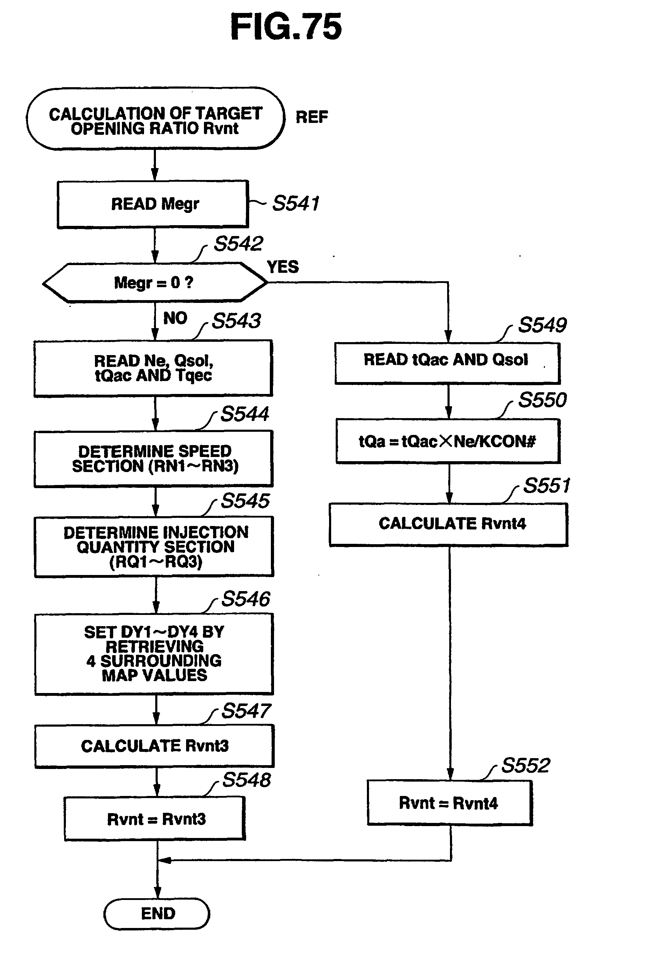

FIG. 74 is a block diagram showing a fifth practical example in which target opening ratio Rvnt is calculated by a process, as shown in FIG. 75, different from that in the first practical example.

In FIG. 75, control unit 41 reads target EGR rate Megr at step S541, and compares Megr with zero at step S542. If Megr≠0 (inside the EGR operative region), control unit 41 proceeds to step S543, and reads engine speed Ne, target fuel injection quantity Qsol, target intake air quantity (per cylinder) tQac [mg/st], and target EGR quantity (per cylinder) Tqec [mg/st]. From engine speed Ne and target fuel injection quantity Qsol, control unit 41 determines an engine speed section (RN1~RN3) to which the current value of Ne belongs, and a fuel injection quantity section (RQ1~RQ3) to which the current value Qsol belongs at steps S544 and S545.

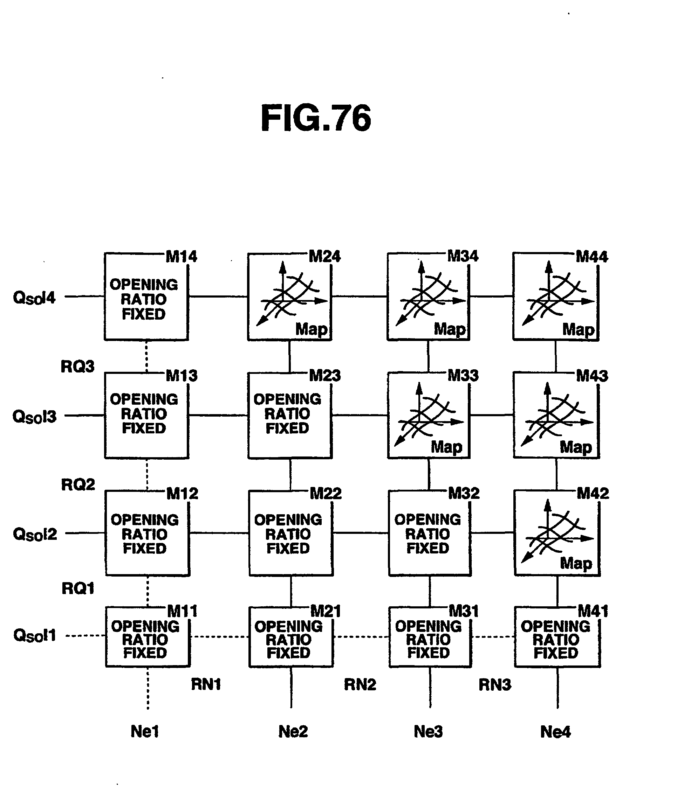

FIG. 76 illustrates the engine speed sections and fuel injection quantity sections. In this example, the range of the engine speed Ne from a minimum speed value Ne1 to a maximum speed value Ne4 is divided into three sections RN1, RN2 and RN3. The range of the fuel injection quantity Qsol from a minimum value Qsol1 to a maximum value Qsol4 is also divided into three sections RQ1, RQ2 and RQ3. Therefore, the entire region of the engine operating conditions (Ne, Qsol) is divided into nine subregions. If, for example, the engine speed is between Ne1 and Ne2 and the target fuel injection quantity is between Qsol1 and Qsol2, then control unit 41 selects the engine speed section RN1 and the fuel injection quantity section RQ1.

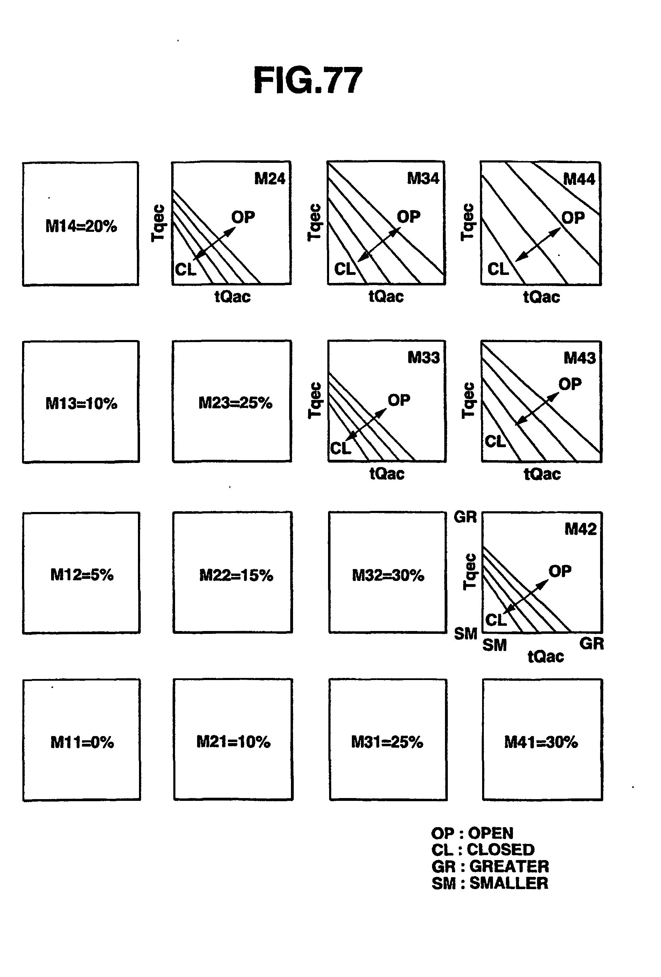

A map of target opening ratio is prepared for each lattice point (such as a point determined by Ne1 and Qsol1). In this example, therefore, there are sixteen maps M11~m44 as shown in FIG. 76. Each of the nine rectangular subregions has four lattice points at the four vertexes. The characteristic of each map is preliminarily determined as shown in FIG. 77, by using target intake air quantity tQac and target intake EGR quantity Tqec as parameters.

At step S546, control unit 41 retrieves values from the maps at the four lattice points of the subregion in which the current engine operating point (determined by Ne and Qsol) lies, and sets the thus-obtained four values as variables DY1, DY2, DY3 and DY4, respectively. Then, by using the thus-obtained values of these variables DY1~DY4, at step S547, control unit 41 performs a mathematical operation of planar interpolation, and enters the result (Rvnt3) to target opening ratio Rvnt at step S548 (Rvnt=Rvnt3).

The planar interpolation is known per se. In this example, step S546 includes the following operations uniquely assigned to the nine operating subregions.

(1) RN1, RQ1: When the operating point is in this subregion, control unit 41 retrieves a value from each of maps M11, M21, M12 and M22, and enters the obtained values in order of retrieval to DY1, DY2, DY3 and DY4, respectively.
(2) RN2, RQ1: Similarly, values are retrieved from maps M21, M31, M22 and M32, and entered in order to DY1, DY2, DY3 and DY4, respectively.
(3) RN3, RQ1: Values are retrieved from maps M31, M41, M32 and M42, and entered to DY1, DY2, DY3 and DY4, respectively.
(4) RN1, RQ2: Values are retrieved from maps M12, M22, M13 and M23, and entered, respectively, to DY1, DY2, DY3 and DY4.
(5) RN2, RQ2: Values are retrieved from maps M22, M32, M23 and M33, and entered, respectively, to DY1, DY2, DY3 and DY4.
(6) RN3, RQ2: Values are retrieved from maps M32, M42, M33 and M43, and entered, respectively, to DY1, DY2, DY3 and DY4.
(7) RN1, RQ3: Values are retrieved from maps M13, M23, M14 and M24, and entered, respectively, to DY1, DY2, DY3 and DY4.
(8) RN2, RQ3: Values are retrieved from maps M23, M33, M24 and M34, and entered, respectively, to DY1, DY2, DY3 and DY4.
(9) RN3, RQ3: Values are retrieved from maps M33, M43, M34 and M44, and entered, respectively, to DY1, DY2, DY3 and DY4.

At step S547, by the use of the thus-determined four variables (DY1, DY2, DY3, DY4), control unit 41 calculates the following equations of linear approximation to determine target opening area Rvnt3.

[EQ27]

$$Rvnt1 = Ne \times (DY2\text{-}DY1)/(Ne2\text{-}Ne1)$$

$$+ (DY2 \cdot Ne1\text{-}DY1 \cdot Ne2)/(Ne2\text{-}Ne1)$$

$$Rvnt2 = Ne \times (DY4\text{-}DY3)/(Ne2\text{-}Ne1)$$

$$+ (DY4 \cdot Ne1\text{-}DY3 \cdot Ne2)/(Ne2\text{-}Ne1)$$

$$Rvnt3 = Ne \times (Rvnt2\text{-}Rvnt1)/(Q2\text{-}Q1)$$

$$+ (Rvnt2 \cdot Q1\text{-}Rvnt1 \cdot Q2)/(Q2\text{-}Q1)$$

In equations EQ27, Q1 and Q2 are values determined by the fuel injection quantity section (RQ1∼RQ3) to which the target fuel injection quantity Qsol belongs. (Q1=Qf1 and Q2=Qf2 when Qsol is in RQ1. Q1=Qf2 and Q2=Qf3 when Qsol is in RQ2. Q1=Qf3 and Q2=Qf4 when Qsol is in RQ3.)

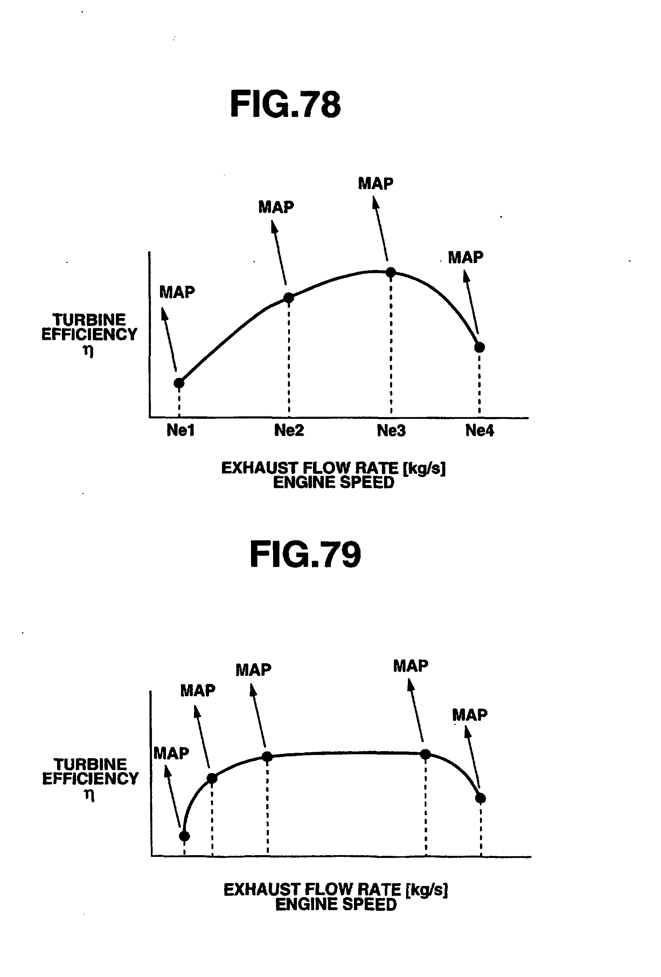

In this example, the number of maps along the direction of the engine speed is four in conformity with the characteristic of turbine efficiency shown in FIG. 78. This embodiment is intended to employ an exhaust turbine of relatively large capacity. Therefore, as the exhaust flow rate [kg/s] is increased, the turbine efficiency increases with a gradual slope until a peak, and then decreases from the peak. For interpolation by linear approximation to the turbine efficiency having such a characteristic, four points shown by black dots in FIG. 78 are selected as lattice points. Since the exhaust flow rate expressed along the horizontal axis in FIG. 78 can be replaced by the engine speed, two maps are employed for the characteristic of FIG. 78 in addition to two maps of minimum requirements (the map for the minimum speed Ne1 and the map for the maximum speed Ne4).

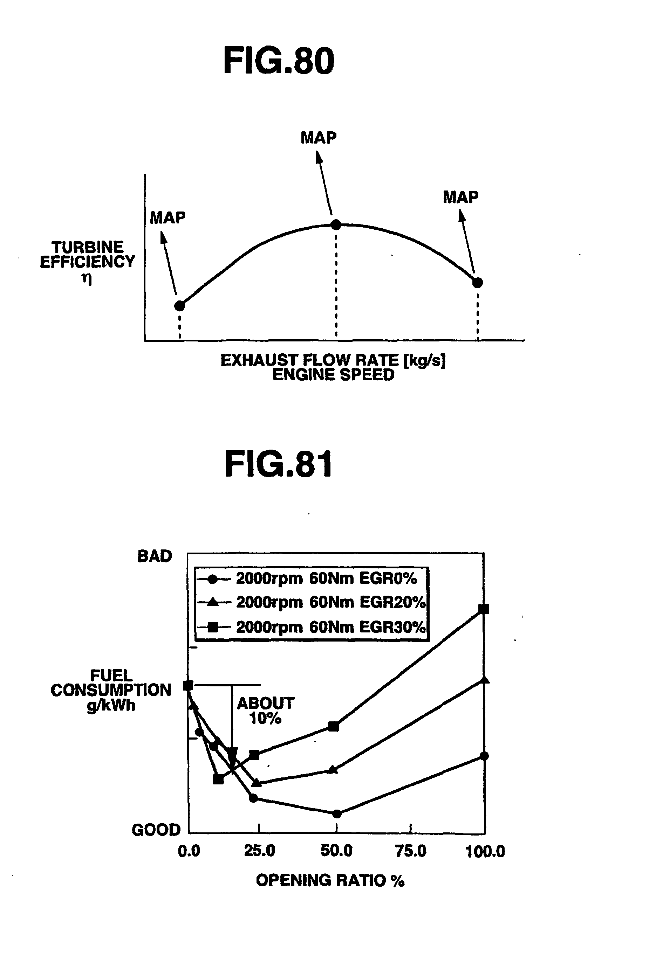

The characteristic of the turbine efficiency is not limited to the form shown in FIG. 78. In another example shown in FIG. 79, the turbine efficiency rises from a small exhaust flow rate region, and remains at a high efficiency level over a wide region (a high efficiency band is broad). In still another example shown in FIG. 80, a high efficiency region is narrow (the high efficiency band is narrow). The number of maps may be five in total in the case of Fig. 79, and three in total in the case of FIG. 80.

As to the number of maps along the direction of the load, the minimum number is two for the minimum and maximum injection quantities. In addition to these two maps, the example of FIG. 76 employs two maps. By employing two or more maps along the direction of load, the control system can meet the demand for varying the opening ratio of variable nozzle 53 in accordance with the engine load, too, as explained below.

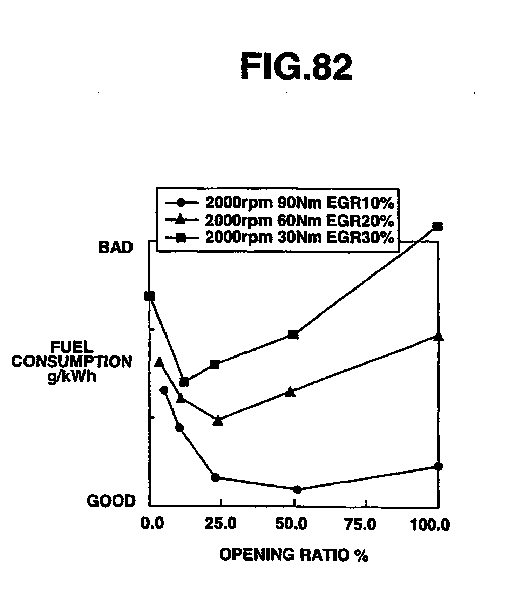

Even if the engine load is unchanged, the opening ratio at which the fuel consumption is minimum varies in dependence on the EGR rate as shown in FIG. 81. Moreover, the opening ratio at which the fuel consumption is minimum varies in dependence on the engine load as shown in FIG. 82. On condition that the engine speed is 2000 rpm, the engine torque as load is 60 N•m, and the EGR rate is 30 %, for example, the fuel consumption is improved by about 10 % by increasing the opening ratio from 0% (variable nozzle fully open state) to about 10 %. In view of this, the control system can maintain the optimum fuel consumption by increasing the opening ratio 10% → 25% → 50% as the engine torque (engine load) increases 30N•m → 60N•m → 90 N•m, as shown in FIG. 82. By thus varying the opening ratio in accordance with the engine load, the control system of this example can meet the demand and trace the optimum fuel consumption point.

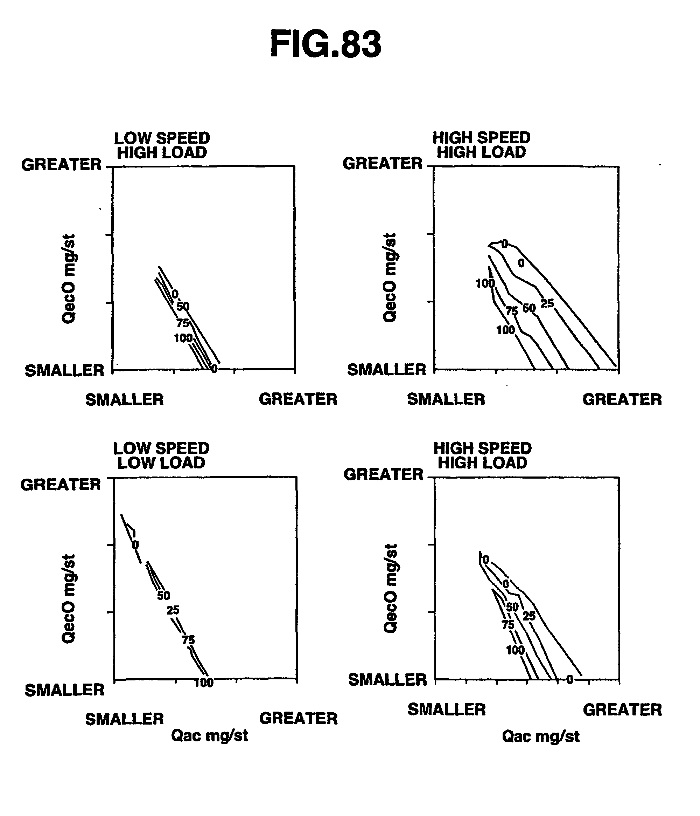

In FIGS. 76 and 77, the target opening ratio is fixed in some maps (M11~M14, M21~M23, M31, M32, M41) in view of characteristics shown in FIG. 83.

FIG. 83 shows a relation between per-cylinder intake air quantity (intake air quantity per cylinder) Qac [mg/st] and per-cylinder intake EGR quantity Qec0 [mg/st] at variable nozzle opening ratio values of 0%, 25%, 50%, 75% and 100% in four typical operating states. In an operating state of high speed and high load where five characteristic curves are dispersed, cylinder intake air quantity Qac increases and decreases in response to changes in the opening ratio (the sensitivity varies in dependence on the engine operating conditions). By contrast, in the state of low speed and low load where the five characteristic curves gather approximately on a straight line, Qac hardly changes even if the opening ratio is changed. Therefore, this control system treats the target opening ratio as a variable in the high speed high load state, and as a fixed value in the low speed load state. In FIG. 83, each characteristic decreases along the rightward direction. The nflow gas quantity Qcyl of gas flowing into each cylinder is equal to the sum of Qac and Qec0, and this quantity Qcyl is fixed constant by the engine operating conditions (Ne and Qsol) in the non-supercharging state (with the variable nozzle in the fully open state). Therefore, Qec0 is decreased as Qac is increased, and conversely Qec0 is increased as Qac is decreased.

The characteristics in the operating states shown in FIG. 83 are related to the maps of FIG. 77 as follows:

(1) Characteristic on the condition of high speed and high load corresponds to map characteristic of M44.
(2) Characteristic on the condition of high speed and low load corresponds to map characteristic of M42.
(3) Characteristic on the condition of low speed and high load corresponds to map characteristic of M24.
(4) Characteristic on the condition of low speed and low load corresponds to map characteristics of M11~M14, M21~M23, M31, M32 and M41). The remaining three maps M34, M33 and M43 are for mending a gap.

Reverting to FIG. 75, if Megr=0 (in the EGR inoperative region), control unit 41 proceeds from step S542 to step S549, and reads target fuel injection quantity Qsol and target intake air quantity tQac. From tQac, at step S550, control unit 41 calculates target intake air quantity tQa [kg/s] by performing conversion of unit (per-cylinder to per-unit-time) according to:

$$[EQ28]$$

$$tQa = tQac \times Ne/KCON\#$$

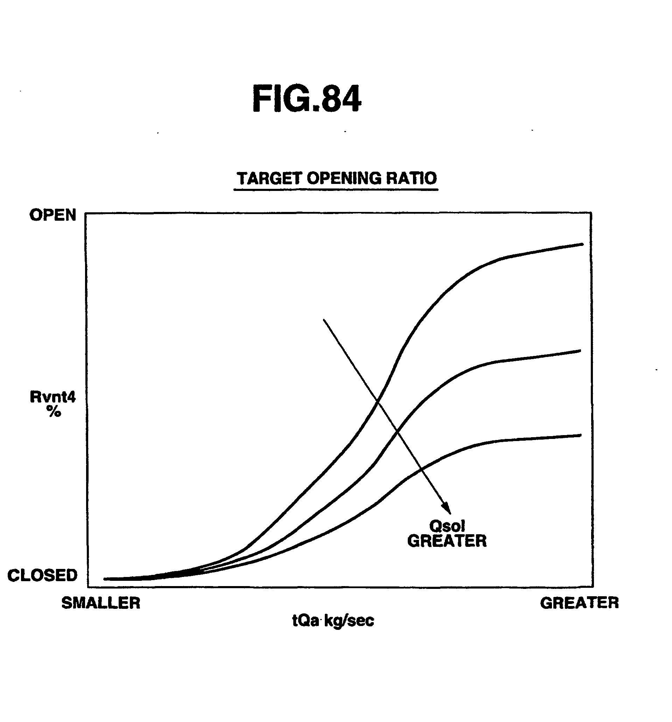

At step S551, target opening ratio Rvnt4 in the EGR inoperative region is determined from target intake air quantity tQa and Qsol by lookup from a map as shown in FIG. 84. At step S552, Rvnt4 is entered into target opening ratio Rvnt (Rvnt=Rvnt4).

As a parameter in calculating the target opening ratio in the EGR inoperative region, the per-unit-time quantity tQa instead of the per-cylinder quantity tQac is used for the following reasons. When tQac is employed, the calculation of target opening ratio further requires engine speed Ne as a parameter in addition to tQac and Qsol, and these three parameters complicates the description of characteristic of the target opening ratio. In the case of quantity tQa, by contrast, the factor of the engine speed is already incorporated in tQa, and hence only two of parameters are required to the advantage for description of target opening ratio characteristic. This improves the continuity in the controlled variable, and simplifies the configuration.

By using the load as a parameter in calculating the target opening ratio, the control system of the fifth practical example, unlike the first practical example, can meet the demand for varying the opening ratio in dependence on the engine load (when, for example, the optimum fuel consumption point shifts in accordance with engine load as shown in FIG. 82), and the demand for tracing the optimum fuel consumption point.

When there is no demand for varying the opening ratio in accordance with the engine load, the first practical example suffices. Since the load is not directly used in the calculation of the target opening ratio as shown in FIG. 25, the first practical example is so arranged as to use one selected from the three characteristic lines shown in FIG. 82. When, for example, in the case of the line for the engine torque (engine load) of 30 N•m (provided that the engine speed is constant at 2000 rpm), the EGR rate is decreased from 30% to 20% by an increase in engine torque to 60 N•m, the first practical example is able to vary the target opening ratio in response to a variation in actual EGR rate Qec caused by a decrease in the EGR rate. However, the control system in the first practical example is unable to vary the target opening ratio directly in response to an increase in the load. To remedy the deficiency, the first practical example employs, as parameters for retrieval from a map to determine the target opening ratio (cf. FIGS. 25 and 26), the quantities (tQas0, Qes0) obtained so that Qsol as engine load is reflected in target intake air quantity tQac and actual EGR quantity Qec, respectively. The control system in the fifth practical example, by contrast, can vary the target opening ratio directly in response to a change in the load, and the target opening ratio becomes equal to about 25.0% in this case.

In the first practical example, there is a one-to-one correspondence between the maps of target intake air quantity tQac and the target opening ratio, so that alteration in target target intake air quantity tQac requires simultaneous alteration of values in the map of opening ratio. However, in the fifth practical example, there is no need for such simultaneous alteration (the map of FIG. 77 can be used without alteration).

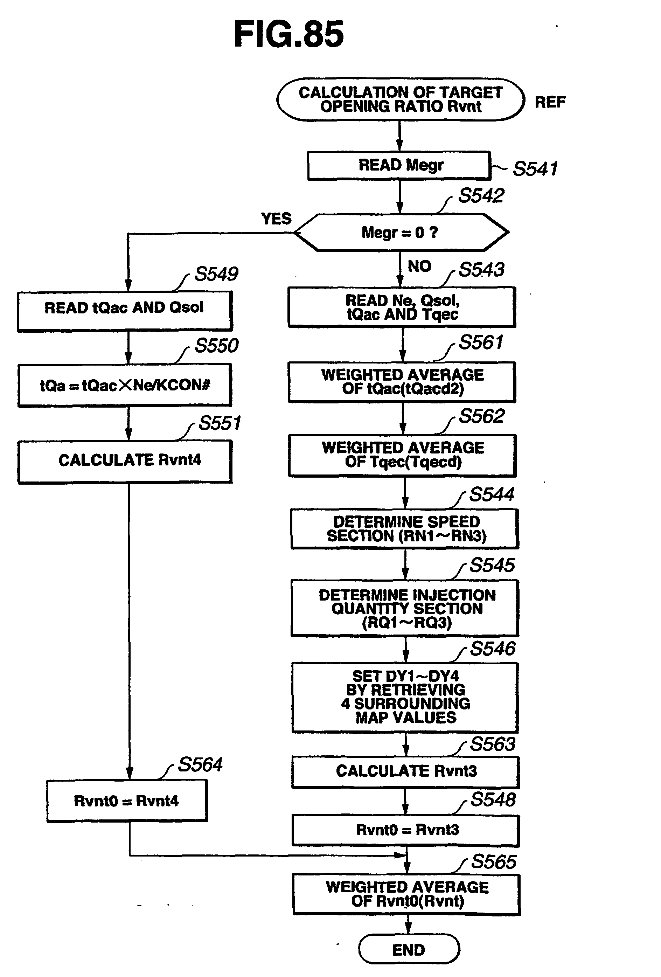

FIG. 85 shows a sixth practical example. A flowchart shown in FIG. 85 is a substitute for FIG. 75 of the fifth practical example. Steps S541~S547 and S549~S551 are substantially identical to the corresponding steps in FIG. 75.

At step S561 following step S543, control unit 41 calculates, from target intake air quantity tQac, delayed target intake air quantity tQacd2 by the following equation of first order lag:

$$[EQ29]$$

$$tQacd2 = tQac \times KIN \times KVOL \times KQA2\#$$

$$+ tQacd2_{n-1} \times (1\text{-}KIN \times KVOL \times KQA2\#)$$

where KIN is the volumetric efficiency representing quantity, KVOL=VE/NC/VM, VE is the displacement, NC is the number of cylinder, VM is the intake system's volume, KQA2# is a constant, and tQacd2$_{n-1}$ is a previous value of Qacd. From target EGR quantity Tqec, at step S562, control unit 41 calculates delayed target EGR quantity Tqecd by the following equation of first order lag:

$$[EQ30]$$

$$Tqecd = Tqec \times KIN \times KVOL \times KQE\#$$

$$+ Tqecd_{n-1} \times (1\text{-}KIN \times KVOL \times KQE\#)$$

where KIN is the volumetric efficiency representing quantity, KVOL=VE/NC/VM , VE is the displacement, NC is the number of cylinder, VM is the intake system's volume, KQE# is a constant, and Tqecd$_{n-1}$ is a previous value of Tqecd. Thus, the delay in supply of air due to the volume of the intake system is taken into account.

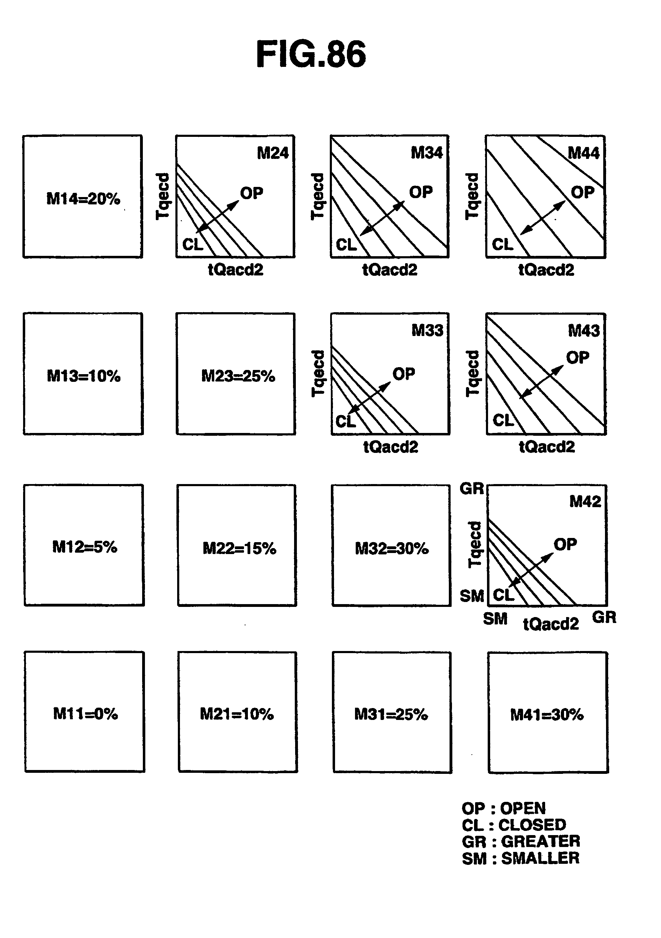

When the map value of the target opening ratio is not fixed (in the case of M24, M33, M34, M42, M43 and M44 shown in FIG. 86), these delayed quantities tQacd2 and Tqecd are used for lookup from the map.

In this practical example, target opening area Rvnt3 obtained by the planar (two dimensional) interpolation (Rvnt4 in the non-EGR region) is set as base target. opening area Rvnt0 (at steps S563 and S564), and target opening area Rvnt is calculated, at step S565, from the value of Rvnt0, by the following equation of first order lag:

$$[EQ31]$$

$$Rvnt = Rvnt0 \times TCVNT\#$$

$$+ Rvnt_{n-1} \times (1\text{-}TCVNT\#)$$

where TCVNT# is a constant, and $Rvnt_{n-1}$ is a previous value of Rvnt. By this operation, this system takes account of a response delay in vacuum actuator 54 for the variable nozzle. Constant TCVNT# is determined in conformity with the time constant of the response delay in vacuum actuator 54.

This weighted averaging operation is effective for removing changes in the target quantity on the high frequency side of the response of vacuum actuator 54 (and preventing the variable nozzle from fluttering in the region where the intake air quantity remains unchanged irrespective of changes in the opening ratio).

The weighted averaging operations in equations EQ29, EQ30 and EQ31 are effective when there are a delay in supply of intake air due to the volume of the intake system, and a delay in response of vacuum actuator 54. However, the results of experiments show that the control accuracy can be higher in an example in which the intake system's volume is smaller and a delay in measurement of the intake fresh air quantity is small, or in an example in which the response of vacuum actuator 54 is superior than in an example in which the volume of the intake system is large and the delay in measurement of the intake fresh air quantity is large or in an example in which the response of vacuum actuator 54 is slower.

In the fifth and sixth practical examples, the engine operating region is divided, as shown in FIG. 76, by engine speed Ne and target fuel injection quantity Qsol. However, because of the nature of the characteristic of turbine efficiency which is expressed by using the exhaust flow rate [kg/s] along the horizontal line, it is optional to divide the engine operating region in terms of the exhaust flow rate and target fuel injection quantity Qsol. This way of division is advantageous in capability of tracing the characteristic of turbine efficiency and reducing the number of maps. As to the ease in matching, however, the division based on the engine speed is superior.

In the fifth and sixth practical examples, the map values are set so as to achieve the optimum fuel consumption. However, the setting may be aimed to optimize the exhaust composition or the accelerating ability as explained in the first through fourth practical examples.

In the first through fourth practical examples, target opening ratio Rvnt as target manipulated variable is set in accordance with the calculated target intake air quantity tQac, and actual EGR quantity Qec or actual EGR rate Megrd. However, it is optional to use the target boost pressure in place of target intake air quantity tQac.

The turbocharger in the illustrated embodiment is arranged to vary the boost pressure in accordance with the opening ratio of the variable nozzle. The present invention is not limited to this type, but applicable to various other types. Some examples are: (i) Turbocharger varying the boost pressure in accordance with a flow rate. (ii) Constant capacity turbocharger having a wastegate valve. (iii) Supercharger. The target manipulated variable for the supercharger may be the opening ratio or opening area of the flow rate varying means of the supercharger, or the control rate or operating rate applied to the actuator for driving the supercharger in the case of the turbocharger of (i); the opening ratio or opening area of the wastegate valve in the case of the turbocharger of (ii); and the control rate or operating rate applied to an actuator for driving the supercharger in the case of (iii).

In the illustrated embodiment, the diesel engine is of the low temperature premixed combustion type of single stage combustion. However, the present invention is applicable to types of normal diesel combustion having additional diffusion combustion after premixed combustion.

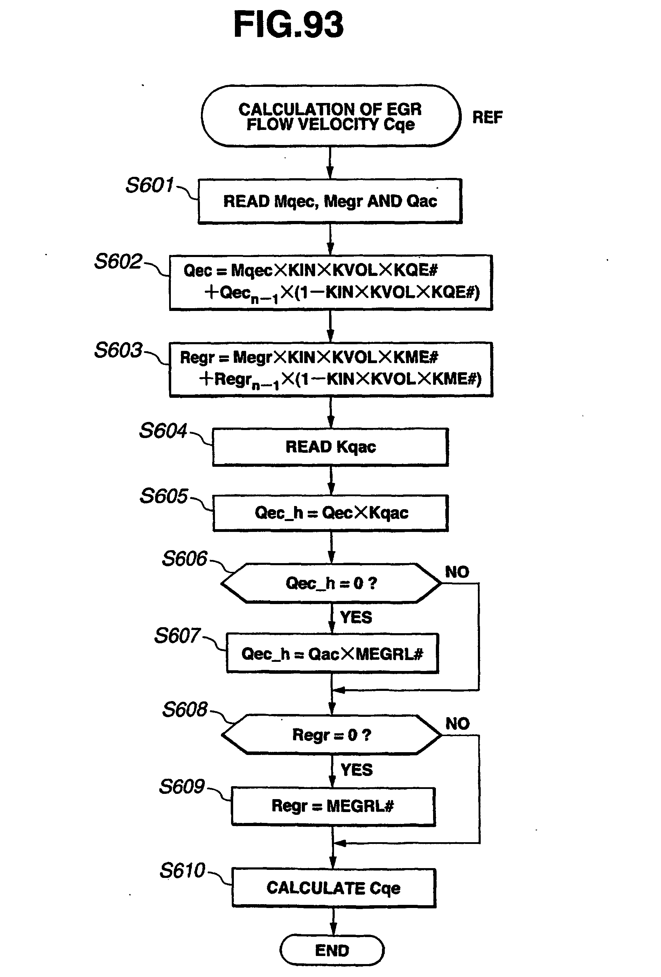

FIG. 93 is a flowchart showing a seventh practical example. FIG. 93 is a substitute for FIG. 63 of the first and second practical examples. The seventh example employs only the EGR flow velocity leaning correction coefficient Kqac, unlike the first and second examples: EGR flow velocity Cqe is calculated by using corrected actual EGR quantity Qec_h obtained by multiplication of actual EGR quantity Qec by learning correction coefficient Kqac (cf. steps S604 and S605). In the flow (not shown) corresponding to FIG. 7, for calculating target EGR quantity Tqek, Kqac00=1.

Moreover, the calculation of the actual EGR rate and quantity is slightly different from that in the first and second practical examples. Step S601 is to read required EGR quantity Mqec (obtained at step S23 of FIG. 7), target EGR rate Megr (obtained in the flow of FIG. 11) and cylinder intake air quantity Qac (obtained in the flow of FIG. 8). From required EGR quantity Mqec and target EGR rate Megr, steps S602 and S603 calculate per-cylinder EGR quantity Qec at the intake valve position and EGR rate Regr at the intake valve position by the following equations of first order lag:

$$[EQ32]$$

$$Qec = Mqec \times KIN \times KVOL \times KQE\#$$

$$+ Qec_{n-1} \times (1\text{-}KIN \times KVOL \times KQE\#)$$

$$Regr = Megr \times KIN \times KVOL \times KME\#$$

$$+ Regr_{n-1} \times (1\text{-}KIN \times KVOL \times KME\#)$$

where KIN is the volumetric efficiency corresponding value, KVOL=VE/NC/VM, VE is the displacement, NC is the number of cylinder, VM is the volume of the intake system, KQE# is a constant, KME# is a constant, $Qec_{n-1}$ is a previous value of Qec, and $Regr_{n-1}$ is a previous value of Regr.

As known from comparison between the second equation of EQ32 and the equation of Megrd at step S113 of FIG. 17, the difference between Megrd and Regr resides merely in that Megrd is a value after conversion of unit (per-cylinder to per-unit-time) whereas Regr is a value before the conversion. Therefore, EGR rate Regr responding to target EGR rate Megr with a first order lag can be regarded as the actual EGR rate. Similarly, per-cylinder EGR quantity Qec given by the first equation of EQ32 can be regarded as the actual EGR quantity since Qec responds to target Mqec with a first order lag.

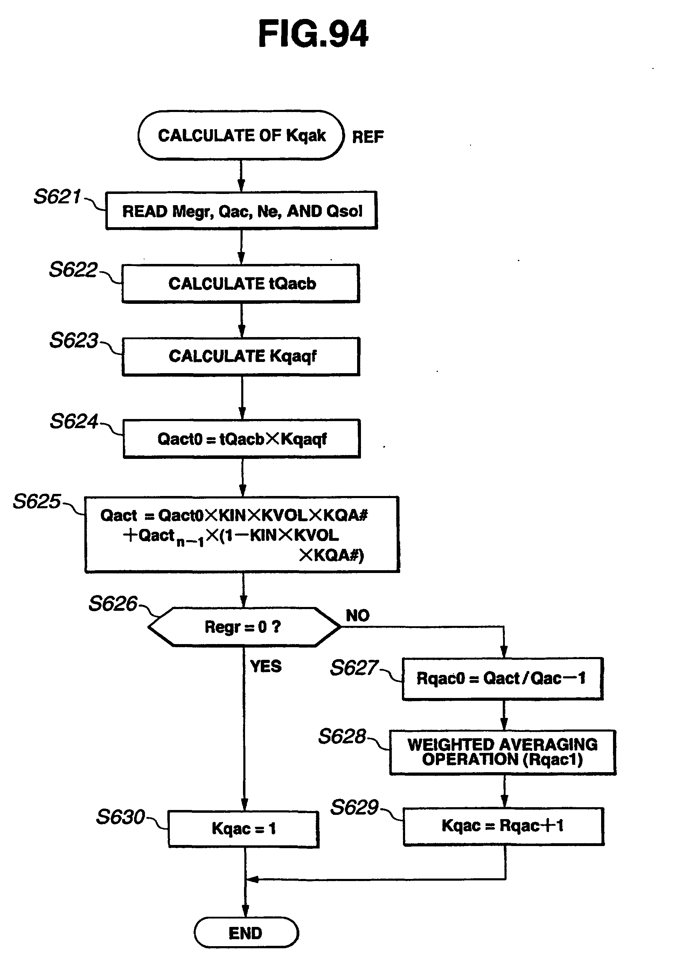

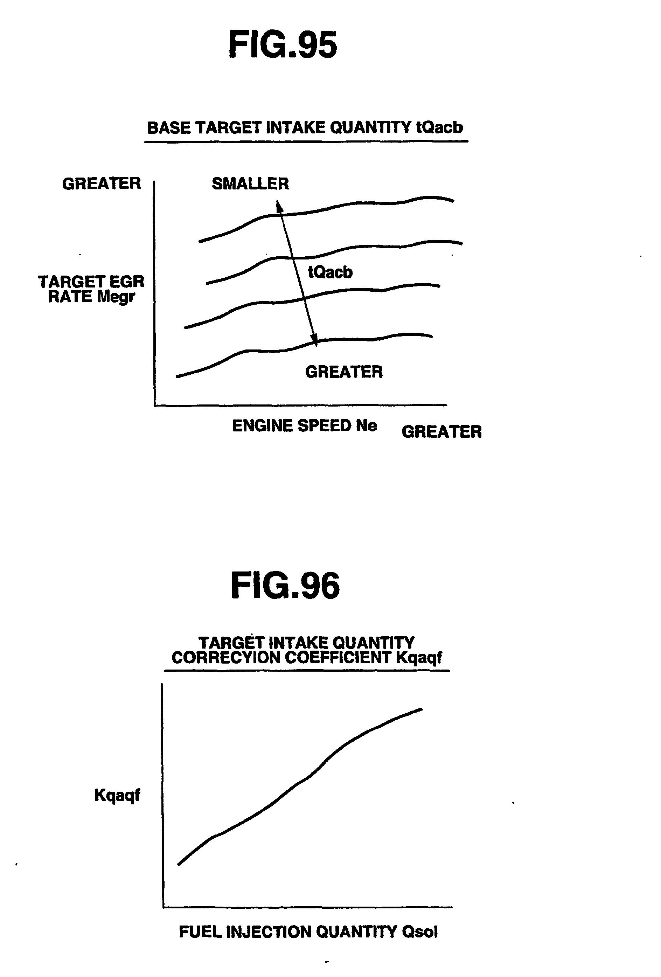

FIG. 94 shows a flow for calculating learning correction coefficient Kqac. Steps S621~S624 are a program section for calculating the target intake air quantity like FIG. 20. Step S621 is a step to read target EGR rate Megr, target fuel injection quantity Qsol, engine speed Ne and actual intake air quantity Qac. From Megr and Ne, base target intake air quantity tQacb is calculated at step S622 by lookup from a map as shown in FIG. 95. From Qsol, at step S623, target intake quantity correction coefficient Kqaqf by lookup from a table as shown in FIG. 96. Then, at step S624, the base target intake air quantity is multiplied by the correction coefficient to determine target intake air quantity Qact0 (=tQacb$\times$Kqaqf). At step S625, from target intake air quantity Qact0, delayed target intake air quantity Qact is calculated by the following equation of first order lag:

$$[EQ33]$$

$$Qact = Qact0 \times KIN \times KVOL \times KQA\#$$

$$+ Qact_{n-1} \times (1\text{-}KIN \times KVOL \times KQA\#)$$

where KIN is the volumetric efficiency corresponding value, KVOL=VE/NC/VM, VE is the displacement, NC is the number of cylinder, VM is the volume of the intake system, KQA# is a constant, $Qact_{n-1}$ is a previous value of Qact. This operation is a delay operation to prevent the later-mentioned error (or deviation) ratio learning variable Rqac1 from being increased by the delay in supply of air due to the volume of the intake system.

At step S626, actual EGR rate Regr (obtained at step S603 in FIG. 93) is compared with zero . If actual EGR rate Regr is not equal to zero (EGR in operation), control unit 41 proceeds to step S627, and calculates error (or deviation) ratio Rqac0 by:

$$[EQ34]$$

$$Rqac0 = Qact/Qac\text{-}1$$

By using this erro ratio Rqac0, error ratio learning variable Rqac1 is updated at step S628 by a weighted averaging operation expressed as:

$$[EQ35]$$

$$Rqac1 = Rqac0 \times Tclrn1$$

$$+ Rqac1_{n-1} \times (1\text{-}Tclrn1)$$

where Tclrn1 is a leaning speed (fixed value), and $Rqac1_{n-1}$ is a previous value of the error ratio learning variable. At step S629, EGR flow velocity learning correction coefficient Kqac is calculated by adding one to Rqac1 (Kqac=Rqac1+1).

If actual EGR rate Regr is equal to zero (EGR is out of operation), control unit 41 proceeds from step S626 to step S630 to set Kqac (Kqac=0) since the correction is not needed, and terminates the process of FIG. 94.

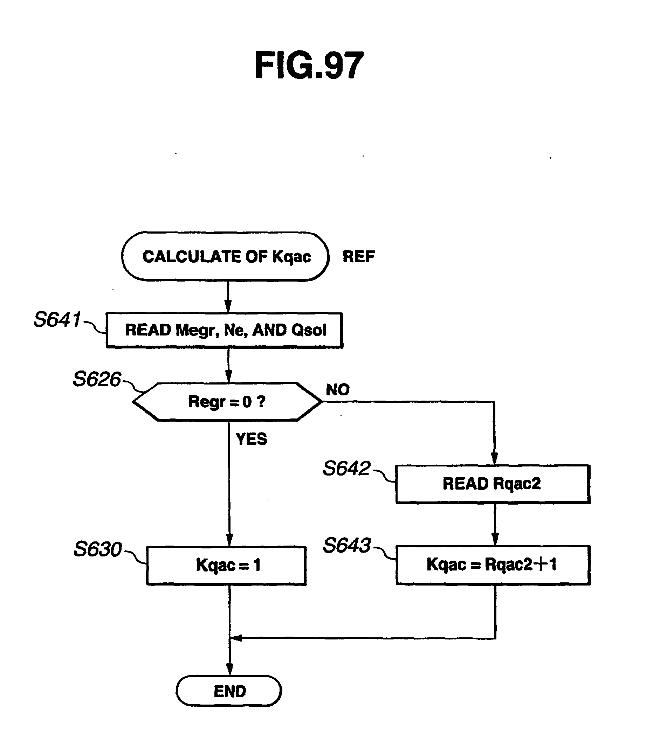

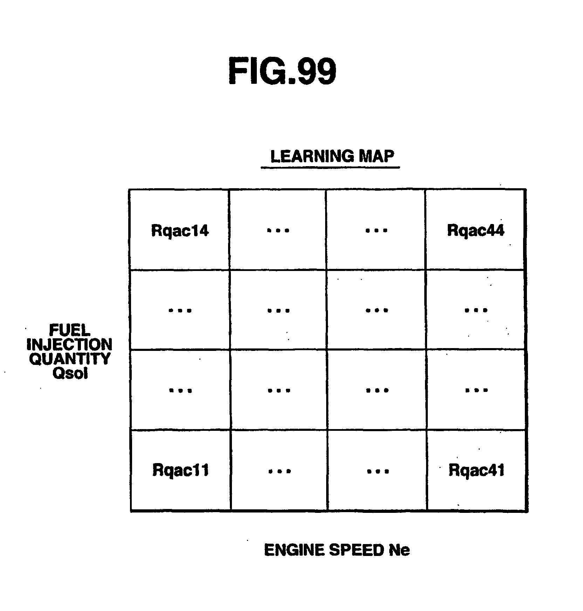

FIG. 97 shows an eighth practical example. FIG. 97 is a substitute for FIG. 94 of the seventh practical example. Step S641 is to read Megr, Ne and Qsol. If actual EGR rate Regr is not equal to zero (EGR is in operation), control unit 41 proceeds from step S626 following step S641, to step S642 in FIG. 97, and reads error ratio learning variable Rqac2 corresponding to Ne and Qsol from a learning map as shown in FIG. 99. Then, at step S643, EGR flow velocity learning correction coefficient Kqac is calculated by adding one to Rqac2 (Kqac=Rqac2+1). Step S630 in FIG. 97 is substantially identical to step S630 of FIG. 94.

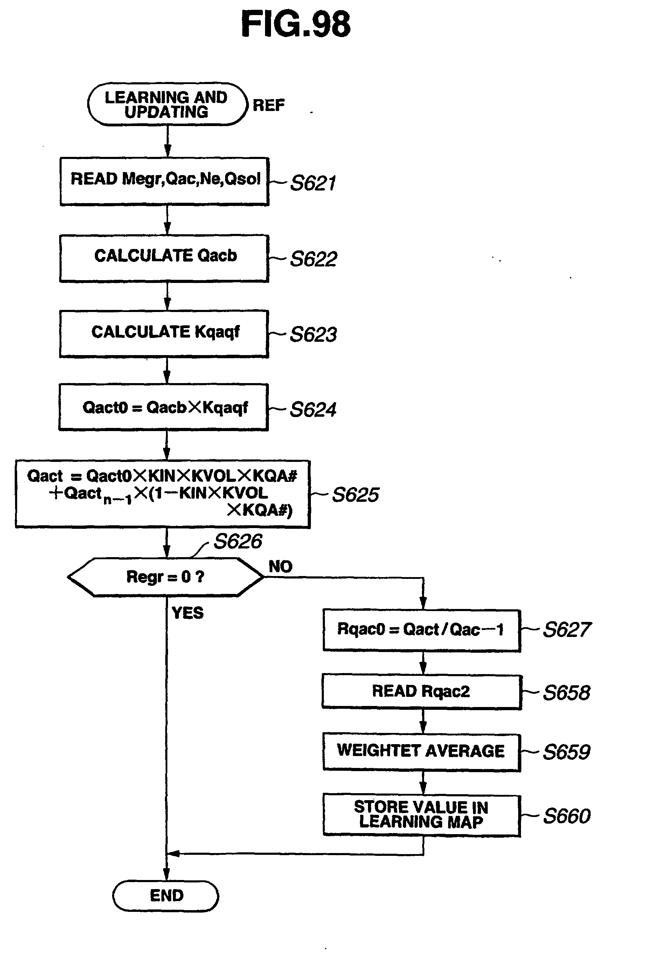

FIG. 98 shows a flow for updating the learning variable. The flow of FIG. 98 is identical to FIG. 94 in steps S621~S627. At step S658 following step S627, control unit 41 reads error ratio learning variable Rqac2 corresponding to Ne and Qsol from a learning map of FIG. 99. At step S659, a weight averaging operation is performed by:

$$[EQ36]$$

$$Rqac2_n = Rqac0 \times Tclrn2$$

$$+ Rqac2_{n-1} \times (1-Tclrn2)$$

where Tclrn2 is a learning speed (fixed value), $Rqac2_n$ is an error ratio learning variable after updating, and $Rqac2_{n-1}$ is an error ratio learning varialbe before updating (read learned value). At step S660, the learning variable after updating is stored in the learning map of FIG. 99 (that is, the updated value is substituted for the value before updating).

The seventh practical example employs the single error ratio learning variable Rqac1 for the entire operating region. The eighth practical example can provide the same operations and effects as in the first and second practical examples by determining error ratio learning variable Rqac2 for each of engine operating subregions.

In the illustrated embodiment, the EGR flow velocity is estimated and the EGR control valve is controlled on the basis of the estimated EGR flow velocity. Instead of the EGR flow velocity, it is optional to estimate a pressure difference across the EGR valve (since the pressure difference is proportional to the square of the flow velocity).

Instead of correcting cylinder EGR quantity Qec (as a parameter used for calculating EGR flow velocity Cqe) with Kqac00 and Kqac (=Rqac+1), it is optional to correct actual EGR rate Megrd (as another parameter) with EGR flow velocity feedback correction coefficient Kqac0 and EGR flow velocity learning correction coefficient Kqac. Alternatively, it is possible to calculate EGR flow velocity feedback correction coefficient Kqac0 so as to reduce a deviation of actual intake air quantity Qac from target intake air quantity tQac, and to correct the cylinder EGR quantity Qec or actual EGR rate Megrd, or the EGR flow velocity Cqe with this feedback correction coefficient Kqac0 and the EGR flow velocity learning correction coefficient Kqac. It is possible to regard the learning correction coefficient as a learning variable.

Instead of calculating the feedback correction coefficients Kqac0 and Kqac00 on the basis of the ratio (error ratio) between actual intake air quantity Qac and delayed target intake air quantity tQacd, it is optional to calculate the feedback correction coefficients Kqac0 and Kqac00 on the basis of the difference (amount of error) between actual intake air quantity Qac and delayed target intake air quantity tQacd (or target intake air quantity tQa).

This application is mainly based on a Japanese Patent Application No. 11-334170 with a filing date of November 25, 1999 in Japan. This application is further based on Japanese Patent Applications No. 11-233124 filed in Japan on August 19, 1999, No. 11-233137 filed in Japan on August 19, 1999, No. 11-233152 filed in Japan on August 19, 1999, No. 11-233165 filed on August 19, 1999, and No. 11-244480 filed in Japan on August 31, 1999.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

**Claims**

**1.** A diesel engine comprising:

an EGR passage (4) connecting an exhaust passage (2) with an intake passage (3) of the engine (1);
an EGR quantity regulating means (5, 6) for regulating a quantity of exhaust gas recirculated through the EGR passage from the exhaust passage to the intake passage;
a supercharger (52) forcing additional air through the intake passage into the engine;
a boost pressure regulating means (53, 54) for regulating a boost pressure produced by the supercharger;
an operating condition sensing means (34, 33, 36) for sensing an engine operating condition (Ne, Cl, Tw) of the engine;
a first target parameter calculating means (41) for calculating an EGR control target parameter (Megr, Tqek, Tqec) representing a target EGR quantity or a target EGR rate, on the basis of the engine operating condition;
a second target parameter calculating means (41 for calculating an intake control parameter (tQac) representing a target boost pressure or a target intake air quantity, on the basis of the engine operating condition;

a first controlling means (41) for controlling the EGR quantity regulating means on the basis of the EGR control target parameter (Megr); **characterised by**
a second controlling means (41) for controlling the boost pressure regulating means on the basis of the EGR control target parameter and the intake control target parameter (tQac).

2. The diesel engine of Claim 1, wherein the EGR control target parameter is a target EGR quantity (Tqek) representing a desired value of the quantity of the exhaust gas recirculated through the EGR passage.

3. The diesel engine of Claim 1, wherein the EGR control target parameter is a target EGR rate (Megr) representing a desired ratio between the quantity of the exhaust gas recirculated through the EGR passage and the quantity of the intake air inducted into the engine.

4. The diesel engine of one of Claims 1 to 3, wherein the EGR quantity regulating means comprises an EGR flow regulating valve (6) disposed in the EGR passage, and the first controlling means comprises a target valve opening area calculating means for calculating a target valve opening area (Aev) of the EGR flow regulating valve (6) on the basis of the EGR control target parameter (Megr), and an EGR valve controlling means for controlling the EGR flow regulating valve on the basis of the target valve opening area (Aev).

5. The diesel engine of Claim 4, wherein the first controlling means further comprises an actual EGR quantity calculating means for calculating an actual EGR quantity (Qec) on the basis of the EGR control target parameter which is the target EGR rate (Megr), an EGR flow velocity calculating means for calculating an EGR flow velocity (Cqe) of the exhaust gas passing through the EGR flow regulating valve (6) on the basis of the EGR control target parameter (Megr) and the actual EGR quantity (Qec_h), and a target EGR quantity calculating means for calculating a target EGR quantity (Tqek) on the basis of the EGR control target parameter (Megr); and the target valve opening area calculating means includes a means for calculating the target valve opening area (Aev) on the basis of the target EGR quantity (Tqek) and the EGR flow velocity (Cqe).

6. The diesel engine of one of Claims 1~5, wherein the intake control target parameter is a target boost pressure representing a desired value of the boost pressure produced by the supercharger.

7. The diesel engine of one of Claims 1~5, wherein the intake control target parameter is a target intake air quantity (tQac) representing a desired value of the quantity of the intake air inducted into the engine.

8. The diesel engine of Claim 7, wherein the operating condition sensing means comprises an intake air quantity sensing means (39) for sensing the quantity of the intake air inducted into the engine to determine an actual intake air quantity (Qac), and the target EGR quantity calculating means calculates the target EGR quantity (Tqek) on the basis of the EGR control target parameter (Megr), the actual intake air quantity (Qac) and the intake control target parameter.

9. The diesel engine of Claim 8, wherein the target EGR quantity calculating means comprises a required EGR quantity calculating means for calculating a required EGR quantity (Mqec) on the basis of the EGR control target parameter, and a feedback correction quantity calculating means for calculating a feedback correction quantity (Kqac00) in accordance with a difference or a ratio between the actual intake air quantity (Qac) and the intake control target parameter which is the target intake air quantity (Tqac); and the target EGR quantity calculating means calculates the target EGR quantity (Tqec, Tqek) by correcting the required EGR quantity (Mqec) with the feedback correction quantity (Kqac00).

10. The diesel engine of Claim 8, wherein the EGR flow velocity calculating means comprises a feedback correction quantity calculating means for calculating a feedback correction quantity (Kqac0) on the basis of a difference or a ratio between the actual intake air quantity (Qac) and the intake control target parameter which is the target intake air quantity (Tqac), and a modified EGR quantity calculating means for calculating a modified EGR quantity (Qec_h) by correcting the actual EGR quantity (Qec) with the feedback correction quantity (Kqac0); and the EGR flow velocity calculating means calculates the EGR flow velocity (Cqe) on the basis of the EGR control target parameter (Megr) and the modified EGR quantity (Qec_h).

11. The diesel engine of one of Claims 1~10, wherein the second target parameter calculating means calculates the intake control target parameter (tQac) on the basis of the EGR control target parameter (Megr).

**12.** The diesel engine of one of Claims 1~11, wherein the supercharger is a turbocharger comprising an exhaust turbine (52), the boost pressure regulating means (53, 54) comprises an exhaust flow regulating means (53) for regulating the flow of the exhaust gas flowing into the exhaust turbine, the second controlling means comprises a target manipulated variable calculating means for calculating a target manipulated variable (Rvnt) for controlling the boost pressure regulating means (53, 54) on the basis of the EGR control target parameter and the intake control target parameter, and an exhaust flow controlling means for controlling the exhaust flow regulating means (53) on the basis of the target manipulated variable (Rvnt).

**13.** The diesel engine of Claim 12, wherein the target manipulated variable calculating means calculates the target manipulated variable (Rvnt) on the basis of the actual EGR quantity (Qec) based on the EGR control target parameter (Megr) and the intake control target parameter (tQac).

**14.** The diesel engine of Claim 12, wherein the target manipulated variable calculating means calculates the target manipulated variable (Rvnt) on the basis of a delayed first parameter (Megrd) obtained by performing a delay operation on the EGR control target parameter (Megr), and the intake control target parameter.

**15.** The diesel engine of Claim 12, wherein the target manipulated variable calculating means comprises a base manipulated variable calculating means for calculating a base manipulated variable (Rvntb) on the basis of the EGR control target parameter (Megrd) and the intake control target parameter (tQas0), a correction quantity calculating means for calculating a correction quantity (kRvnt) on the basis of an acceleration related parameter (dPse); and the target manipulated variable calculating means calculates the target manipulated variable (Rvnt) by correcting the base manipulated variable (Rvntb) with the correction quantity (kRvnt).

**16.** The diesel engine of Claim 12, wherein the target manipulated variable calculating means comprises a first variable calculating means (S522) for calculating a first variable (Rvnt1) for improving emission performance on the basis of the EGR control target parameter (Megrd) and the intake control target parameter (tQas0), a second variable calculating means for calculating a second variable (Rvnth) for improving fuel consumption on the basis of the EGR control target parameter (Megrd) and the intake control target parameter (tQas0) and the target manipulated variable calculating means calculates the target manipulated variable (Rvnt) on the basis of the first variable (Rvnt1), the second variable (Rvnth), and a temperature related parameter (Tw, kRvnth) correlated with a warm-up condition of the engine.

**17.** The diesel engine of Claim 12, wherein the target manipulated variable calculating means calculates the target manipulated variable (Rvnt) on the basis of the EGR control target parameter (Tqec), the intake control target parameter (tQac), an engine speed (Ne), and an engine load (Qsol).

**18.** The diesel engine of Claim 12, wherein the target manipulated variable calculating means calculates the target manipulated variable (Rvnt) on the basis of a first delayed variable (Tqecd) obtained by performing a delay operation on the EGR control target parameter (Tqec), a second delayed variable (tQacd2) obtained by a delay operation on the intake control target parameter (tQac), an engine speed (Ne), and an engine load (Qsol).

**19.** The diesel engine of one of Claims 1~19, wherein the diesel engine further comprises a fuel injection pressure sensing means (32) for sensing a fuel injection pressure (rPrail1), and wherein the first target parameter calculating means (41) comprises a first means for calculating a base parameter (Megrb) on the basis of the operating condition, a second means for calculating a target pressure (tPrail), and a third means for calculating a pressure correction quantity (Rdegr) on the basis of a difference or a ratio between the fuel injection pressure (rPrail) and the target pressure (tPrail); and the first target parameter calculating means calculates the EGR control target parameter (Megr) by modifying the base parameter (Megrb) with the pressure correction quantity (Rdegr).

**20.** A control process for controlling an EGR quantity and a boost pressure in a diesel engine having an EGR system and a supercharging system, comprising:

a first target parameter calculating step (S22) of calculating an EGR control parameter (Megr, Tqek, Tqec) on the basis of a sensed engine operating condition;
a second target parameter calculating step (S92) of calculating an intake control parameter representing one of a target intake air quantity (tQac) and a target boost pressure on the basis of the engine operating condition;
a first controlling step (Fig. 5) of controlling the EGR quantity on the basis of the EGR control parameter (Megr);

**characterised by**

a second controlling step (Fig. 15, Fig. 6) of controlling the boost pressure on the basis of the EGR control parameter (Megr) and the intake control parameter (tQac).

**Patentansprüche**

1. Dieselmotor, umfassend:

   einen EGR-Durchgang (4), der einen Abgasdurchgang (2) mit einem Ansaugdurchgang (3) des Motors (1) verbindet;
   eine EGR-Mengenregeleinrichtung (5, 6) zum Regeln einer Menge von Abgas, das ständig durch den EGR-Durchgang vom Abgasdurchgang zum Ansaugdurchgang zirkuliert;
   einen Turbolader (52), der zusätzliche Luft durch den Ansaugdurchgang in den Motor presst;
   eine Ladedruck-Regeleinrichtung (53, 54) zum Regeln des vom Turbolader erzeugten Ladedrucks;
   eine Betriebszustands-Sensoreinrichtung (34, 33, 36) zum Erfassen eines Motorbetriebszustand (Ne, Cl, Tw) des Motors;
   eine erste Zielparameter-Berechnungseinrichtung (41) zum Berechnen eines EGR-Steuerungs-Zielparameters (Megr, Tqek, Tqec), der eine EGR-Zielmenge oder eine EGR-Zielrate darstellt, auf der Grundlage des Motorbetriebszustandes;
   eine zweite Zielparameter-Berechnungseinrichtung (41) zum Berechnen eines Ansaugsteuerungsparameters (tQac), der einen Zielladedruck oder eine Ziel-Ansaugluftmenge darstellt, auf der Grundlage des Motorbetriebszustandes;
   eine erste Steuereinrichtung (41) zum Steuern der EGR-Mengenregeleinrichtung auf der Grundlage des EGR-Steuerungs-Zielparameters (Megr); **gekennzeichnet durch**:

   eine zweite Steuereinrichtung (41) zum Steuern der Ladedruck-Regeleinrichtung auf der Grundlage des EGR-Steuerungs-Zielparameters und des Ansaugsteuerungs-Zielparameters (tQac).

2. Dieselmotor nach Anspruch 1, wobei der EGR-Steuerungs-Zielparameter eine EGR-Zielmenge (Tqek) ist, welche einen erwünschten Wert der Menge des Abgases, das ständig durch den EGR-Durchgang zirkuliert, darstellt.

3. Dieselmotor nach Anspruch 1, wobei der EGR-Steuerungs-Zielparameter eine EGR-Zielrate (Megr) ist, die ein erwünschtes Verhältnis zwischen der Menge des Abgases, das ständig durch den EGR-Durchgang zirkuliert, und der Menge der angesaugten Luft, die in den Motor eingeleitet wird, darstellt.

4. Dieselmotor nach einem der Ansprüche 1 bis 3, wobei die EGR-Mengenregeleinrichtung ein EGR-Durchflussregelventil (6) umfasst, das in dem EGR-Durchgang angeordnet ist, und die erste Steuereinrichtung umfasst eine Ziel-Ventilöffnungsbereich-Berechnungseinrichtung zum Berechnen eines Ziel-Ventilöffnungsbereichs (Aev) des EGR-Durchflussregelventils (6) auf der Grundlage des EGR-Steuerungs-Zielparameters (Megr) und eine EGR-Ventilsteuereinrichtung zum Steuern des EGR-Durchflussregelventils auf der Grundlage des Ziel-Ventilöffnungsbereichs (Aev).

5. Dieselmotor nach Anspruch 4, wobei die erste Steuereinrichtung ferner eine EGR-Istmengen-Berechnungseinrichtung zum Berechnen einer EGR-Istmenge (Qec) auf der Grundlage des EGR-Steuerungs-Zielparameters, welcher die EGR-Zielrate (Megr) ist, eine EGR-Durchflussgeschwindigkeits-Berechnungseinrichtung zum Berechnen einer EGR-Durchflussgeschwindigkeit (Cqe) des Abgases, das durch das EGR-Durchflussregelventil (6) strömt, auf der Grundlage des EGR-Steuerungs-Zielparameters (Megr) und der EGR-Istmenge (Qec_h), und eine EGR-Zielmengen-Berechnungseinrichtung zum Berechnen einer EGR-Zielmenge (Tqek) auf der Grundlage des EGR-Steuerungs-Zielparameters (Megr) umfasst; und die Ziel-Ventilöffnungsbereich-Berechnungseinrichtung umfasst eine Einrichtung zum Berechnen des Ziel-Ventilöffnungsbereichs (Aev) auf der Grundlage der EGR-Zielmenge (Tqek) und der EGR-Durchflussgeschwindigkeit (Cqe).

6. Dieselmotor nach einem der Ansprüche 1 bis 5, wobei der Ansaugsteuerungs-Zielparameter ein Zielladedruck ist, der einen gewünschten Wert des vom Turbolader erzeugten Ladedrucks darstellt.

7. Dieselmotor nach einem der Ansprüche 1 bis 5, wobei der Ansaugsteuerungs-Zielparameter eine Ziel-Ansaugluftmenge (tQac) ist, welche einen gewünschten Wert der Menge der angesaugten Luft, die in den Motor eingeleitet wird, darstellt.

**8.** Dieselmotor nach Anspruch 7, wobei die Betriebszustands-Sensoreinrichtung eine Ansaugluftmengen-Sensoreinrichtung (39) zum Erfassen der Menge der angesaugten Luft, die in den Motor eingeleitet wird, umfasst, um eine Ist-Ansaugluftmenge (Qac) zu bestimmen, und wobei die EGR-Zielmengen-Berechnungseinrichtung die EGR-Zielmenge (Tqek) auf der Grundlage des EGR-Steuerungs-Zielparameters (Megr), der Ist-Ansaugluftmenge (Qac) und des Ansaugsteuerungs-Zielparameters berechnet.

**9.** Dieselmotor nach Anspruch 8, wobei die EGR-Zielmengen-Berechnungseinrichtung eine Berechnungseinrichtung für die erforderliche EGR-Menge zum Berechnen einer erforderlichen EGR-Menge (Mqec) auf der Grundlage des EGR-Steuerungs-Zielparameters und eine Rückführungskorrekturmengen-Berechnungseinrichtung zum Berechnen einer Rückführungskorrekturmenge (Kqac00) gemäß einem Unterschied oder einem Verhältnis zwischen der Ist-Ansaugluftmenge (Qac) und dem Ansaugsteuerungs-Zielparameter, welcher die Ziel-Ansaugluftmenge (Tqac) ist, umfasst; und wobei die EGR-Zielmengen-Berechnungseinrichtung die EGR-Zielmenge (Tqec, Tqek) durch Korrigieren der erforderlichen EGR-Menge (Mqec) mit der Rückführungskorrekturmenge (Kqac00) berechnet.

**10.** Dieselmotor nach Anspruch 8, wobei die EGR-Durchflussgeschwindigkeits-Berechnungseinrichtung eine Rückführungskorrekturmengen-Berechnungseinrichtung zum Berechnen einer Rückführungskorrekturmenge (Kqac0) auf der Grundlage eines Unterschieds oder eines Verhältnisses zwischen der Ist-Ansaugluftmenge (Qac) und dem Ansaugsteuerungs-Zielparameter, welcher die Ziel-Ansaugluftmenge (Tqac) ist, und eine Berechnungseinrichtung für die modifizierte EGR-Menge zum Berechnen einer modifizierten EGR-Menge (Qec_h) durch Korrigieren der EGR-Istmenge (Qec) mit der Rückführungskorrekturmenge (Kqac0) umfasst; und wobei die EGR-Durchflussgeschwindigkeits-Berechnungseinrichtung die EGR-Durchflussgeschwindigkeit (Cqe) auf der Grundlage des EGR-Steuerungs-Zielparameters (Megr) und der modifizierten EGR-Menge (Qec_h) berechnet.

**11.** Dieselmotor nach einem der Ansprüche 1 bis 10, wobei die zweite Zielparameter-Berechnungseinrichtung den Ansaugsteuerungs-Zielparameter (tQac) auf der Grundlage des EGR-Steuerungs-Zielparameters (Megr) berechnet.

**12.** Dieselmotor nach einem der Ansprüche 1 bis 11, wobei der Turbolader ein Turbolader mit einer Auspuffturbine (52) ist, die Ladedruck-Regeleinrichtung (53, 54) eine Abgasdurchfluss-Regeleinrichtung (53) zum Regeln des Durchflusses des Abgases, das in die Auspuffturbine strömt, umfasst, die zweite Steuereinrichtung eine Zielstellgrößen-Berechnungseinrichtung zum Berechnen einer Zielstellgröße (Rvnt) zum Steuern der Ladedruck-Regeleinrichtung (53, 54) auf der Grundlage des EGR-Steuerungs-Zielparameters und des Ansaugsteuerungs-Zielparameters umfasst, und eine Abgasdurchfluss-Steuereinrichtung zum Steuern der Abgasdurchfluss-Regeleinrichtung (53) auf der Grundlage der Zielstellgröße (Rvnt).

**13.** Dieselmotor nach Anspruch 12, wobei die Zielstellgrößen-Berechnungseinrichtung die Zielstellgröße (Rvnt) auf der Grundlage der EGR-Istmenge (Qec) aufgrund des EGR-Steuerungs-Zielparameters (Megr) und des Ansaugsteuerungs-Zielparameters (tQac) berechnet.

**14.** Dieselmotor nach Anspruch 12, wobei die Zielstellgrößen-Berechnungseinrichtung die Zielstellgröße (Rvnt) auf der Grundlage eines verzögerten ersten Parameters (Megrd), erhalten durch Durchführung eines Verzögerungsvorgangs am EGR-Steuerungs-Zielparameter (Megr), und des Ansaugsteuerungs-Zielparameter berechnet.

**15.** Dieselmotor nach Anspruch 12, wobei die Zielstellgrößen-Berechnungseinrichtung eine Basisstellgrößen-Berechnungseinrichtung zum Berechnen einer Basisstellgröße (Rvntb) auf der Grundlage des EGR-Steuerungs-Zielparameters (Megrd) und des Ansaugsteuerungs-Zielparameters (tQas0), eine Korrekturmengen-Berechnungseinrichtung zum Berechnen einer Korrekturmenge (kRvnt) auf der Grundlage eines mit der Beschleunigung zusammenhängenden Parameters (dPse) umfasst; und wobei die Zielstellgrößen-Berechnungseinrichtung die Zielstellgröße (Rvnt) durch Korrigieren der Basisstellgröße (Rvntb) mit der Korrekturmenge (kRvnt) berechnet.

**16.** Dieselmotor nach Anspruch 12, wobei die Zielstellgrößen-Berechnungseinrichtung eine erste Variablenberechnungseinrichtung (S522) zum Berechnen einer ersten Variablen (Rvnt1) zum Verbessern der Emissionsleistung auf der Grundlage des EGR-Steuerungs-Zielparameters (Megrd) und des Ansaugsteuerungs-Zielparameters (tQas0), eine zweite Variablenberechnungseinrichtung zum Berechnen einer zweiten Variablen (Rvnth) zum Verbessern des Kraftstoffverbrauchs auf der Grundlage des EGR-Steuerungs-Zielparameters (Megrd) und des Ansaugsteuerungs-Zielparameters (tQas0) umfasst und die Zielstellgrößen-Berechnungseinrichtung die Zielstellgröße (Rvnt) auf der Grundlage der ersten Variablen (Rvnt1), der zweiten Variablen (Rvnth) und eines mit der Temperatur zusammenhängenden Parameters (Tw, kRvnth) entsprechend einem Aufwärmzustand des Motors berechnet.

**17.** Dieselmotor nach Anspruch 12, wobei die Zielstellgrößen-Berechnungseinrichtung die Zielstellgröße (Rvnt) auf der Grundlage des EGR-Steuerungs-Zielparameters (Tqec), des Ansaugsteuerungs-Zielparameters (tQac), einer Motordrehzahl (Ne) und eines Motorlast (Qsol) berechnet.

**18.** Dieselmotor nach Anspruch 12, wobei die Zielstellgrößen-Berechnungseinrichtung die Zielstellgröße (Rvnt) auf der Grundlage einer ersten verzögerten Variablen (Tqecd), erhalten durch Durchführung eines Verzögerungsvorgangs am EGR-Steuerungs-Zielparameter (Tqec), einer zweiten verzögerten Variablen (tQacd2), erhalten durch einen Verzögerungsvorgang am Ansaugsteuerungs-Zielparameter (tQac), einer Motordrehzahl (Ne) und einer Motorlast (Qsol) berechnet.

**19.** Dieselmotor nach einem der Ansprüche 1 bis 18, wobei der Dieselmotor ferner eine Kraftstoffeinspritzdruck-Sensoreinrichtung (32) zum Erfassen eines Kraftstoffeinspritzdrucks (rPrail1) umfasst, und wobei die erste Zielparameter-Berechnungseinrichtung (41) eine erste Einrichtung zum Berechnen eines Basisparameters (Megrb) auf der Grundlage des Betriebszustandes, eine zweite Einrichtung zum Berechnen eines Zieldrucks (tPrail) und eine dritte Einrichtung zum Berechnen einer Druckkorrekturmenge (Rdegr) auf der Grundlage eines Unterschieds oder eines Verhältnisses zwischen dem Kraftstoffeinspritzdruck (rPrail) und dem Zieldruck (tPrail) umfasst; und die erste Zielparameter-Berechnungseinrichtung berechnet den EGR-Steuerungs-Zielparameter (Megr) durch Modifizieren des Basisparameters (Megrb) mit der Druckkorrekturmenge (Rdegr).

**20.** Steuerungsverfahren zum Steuern und Regeln einer EGR-Menge und eines Ladedrucks in einem Dieselmotor mit einem EGR-System und einem Turboladersystem, umfassend:

einen erste Zielparameter-Berechnungsschritt (S22) zum Berechnen eines EGR-Steuerungsparameters (Megr, Tqek, Tqec) auf der Grundlage eines erfassten Motorbetriebszustandes;
einen zweiten Zielparameter-Berechnungsschritt (S92) zum Berechnen eines Ansaugsteuerungsparameters, der eine Ziel-Ansaugluftmenge (tQac) oder einen Zielladedruck darstellt, auf der Grundlage des Motorbetriebszustandes;
einen ersten Steuerungsschritt (Fig. 5) zum Steuern der EGR-Menge auf der Grundlage des EGR-Steuerungsparameters (Megr);

**gekennzeichnet durch**
einen zweiten Steuerungsschritt (Fig. 15, Fig. 6) zum Steuern des Ladedrucks auf der Grundlage des EGR-Steuerungsparameters (Megr) und des Ansaugsteuerungsparameters (tQac).

## Revendications

**1.** Moteur diesel comprenant :

un passage de recirculation des gaz d'échappement (EGR) (4) reliant un passage d'échappement (2) à un passage d'admission (3) du moteur (1) ;
un moyen de régulation de la quantité de recirculation des gaz d'échappement (5, 6) pour réguler une quantité de gaz d'échappement remise en circulation dans le passage EGR du passage d'échappement vers le passage d'admission ;
un surpresseur (52) forçant de l'air supplémentaire, par le biais du passage d'admission, dans le moteur ;
un moyen de régulation de pression de suralimentation (53, 54) pour réguler une pression de suralimentation produite par le surpresseur ;
un moyen de détection de condition de fonctionnement (34, 33, 36) pour détecter une condition de fonctionnement (Ne, Cl, Tw) du moteur ;
un moyen de calcul d'un premier paramètre cible (41) pour calculer un paramètre de contrôle EGR cible (Megr, Tqek, Tqec) représentant une quantité EGR cible ou un taux EGR cible, sur la base de la condition de fonctionnement du moteur ;
un moyen de calcul d'un second paramètre cible (41) pour calculer un paramètre de contrôle d'admission (tQac) représentant une pression de suralimentation cible ou une quantité d'air d'admission cible, sur la base de la condition de fonctionnement du moteur ;
un premier moyen de contrôle (41) pour contrôler le moyen de régulation de la quantité de recirculation des gaz d'échappement sur la base du paramètre de contrôle EGR cible (Megr) ; **caractérisé par**
un second moyen de contrôle (41) pour contrôler le moyen de régulation de la pression de suralimentation sur la base du paramètre de contrôle EGR cible et du paramètre de contrôle d'admission cible (tQac).

2. Moteur diesel selon la revendication 1, dans lequel le paramètre de contrôle EGR cible est une quantité de recirculation des gaz d'échappement cible (Tgek) représentant une valeur souhaitée de la quantité de gaz d'échappement remise en circulation dans le passage EGR.

3. Moteur diesel selon la revendication 1, dans lequel le paramètre de contrôle EGR cible est un taux EGR cible (Megr) représentant un rapport souhaité entre la quantité de gaz d'échappement remise en circulation dans le passage EGR et la quantité d'air d'admission induite dans le moteur.

4. Moteur diesel selon l'une des revendications 1 à 3, dans lequel le moyen de régulation de la quantité de recirculation des gaz d'échappement comprend une vanne de régulation du débit de la recirculation des gaz d'échappement (6) disposée dans le passage EGR, et le premier moyen de contrôle comprend un moyen de calcul de zone cible d'ouverture de la vanne pour calculer une zone d'ouverture cible de la vanne (Aev) de la vanne de régulation de débit EGR (6) sur la base du paramètre de contrôle EGR cible (Megr), et un moyen de contrôle de vanne de recirculation de gaz d'échappement pour contrôler la vanne de régulation du débit EGR sur la base de la zone d'ouverture cible de la vanne (Aev).

5. Moteur diesel selon la revendication 4, dans lequel le premier moyen de contrôle comprend en outre un moyen de calcul de quantité réelle de EGR pour calculer une quantité EGR réelle (Qec) sur la base du paramètre de contrôle EGR cible qui est le taux EGR cible (Megr), un moyen de calcul de vitesse de débit EGR pour calculer une vitesse d'écoulement EGR (Cqe) des gaz d'échappement passant dans la vanne de régulation de débit EGR (6) sur la base du paramètre de contrôle EGR cible (Megr) et de la quantité EGR réelle (Qec-h), et un moyen de calcul de quantité EGR cible pour calculer une quantité EGR cible (Tqek) sur la base du paramètre de contrôle EGR cible (Megr) ; et le moyen de calcul de zone d'ouverture cible de la vanne comprend un moyen pour calculer la zone d'ouverture cible de la vanne (Aev) sur la base de la quantité EGR cible (Tqek) et de la vitesse d'écoulement EGR (Cqe).

6. Moteur diesel selon l'une des revendications 1 à 5, dans lequel le paramètre de contrôle d'admission cible est une pression de suralimentation cible représentant une valeur souhaitée de la pression de suralimentation produite par le surpresseur.

7. Moteur diesel selon l'une des revendications 1 à 5, dans lequel le paramètre de contrôle d'admission cible est une quantité d'air d'admission cible (tQac) représentant une valeur souhaitée de la quantité d'air d'admission induite dans le moteur.

8. Moteur diesel selon la revendication 7, dans lequel le moyen de détection de condition de fonctionnement comprend un moyen de détection de quantité d'air d'admission (39) pour détecter la quantité d'air d'admission induite dans le moteur afin de déterminer une quantité d'air d'admission réelle (Qac), et le moyen de calcul de quantité EGR cible calcule la quantité EGR cible (Tqek) sur la base du paramètre de contrôle EGR cible (Megr), de la quantité d'air d'admission réelle (Qac) et du paramètre de contrôle d'admission cible.

9. Moteur diesel selon la revendication 8, dans lequel le moyen de calcul de quantité EGR cible comprend un moyen de calcul de quantité EGR requise pour calculer une quantité EGR requise (Mqec) sur la base du paramètre de contrôle EGR cible, et un moyen de calcul de quantité de correction de retour pour calculer une quantité de correction de retour (Kqac00) selon une différence ou un rapport entre la quantité d'air d'admission réelle (Qac) et le paramètre de contrôle d'admission cible qui est la quantité d'air d'admission cible (Tqac) ; et le moyen de calcul de quantité EGR cible calcule la quantité EGR cible (Tqec, Tqek) en corrigeant la quantité EGR requise (Mqec) avec la quantité de correction de retour (Kqac00).

10. Moteur diesel selon la revendication 8, dans lequel le moyen de calcul de vitesse d'écoulement EGR comprend un moyen de calcul de quantité de correction de retour pour calculer une quantité de correction de retour (Kqac0) sur la base d'une différence ou d'un rapport entre la quantité d'air d'admission réelle (Qac) et le paramètre de contrôle d'admission cible qui est la quantité d'air d'admission cible (Tqac), et un moyen de calcul de quantité EGR modifiée pour calculer une quantité EGR modifiée (Qec_h) en corrigeant la quantité EGR réelle (Qec) avec la quantité de correction de retour (Kqac0) ; et le moyen de calcul de vitesse d'écoulement EGR calcule la vitesse d'écoulement EGR (Cqe) sur la base du paramètre de contrôle EGR cible (Megr) et de la quantité EGR modifiée (Qec_h).

11. Moteur diesel selon l'une des revendications 1 à 10, dans lequel le second moyen de calcul de paramètre cible calcule le paramètre de contrôle d'admission cible (tQac) sur la base du paramètre de contrôle EGR cible (Megr).

12. Moteur diesel selon l'une des revendications 1 à 11, dans lequel le surpresseur est un turbocompresseur comprenant une turbine d'échappement (52), le moyen de régulation de pression de suralimentation (53, 54) comprend un moyen de régulation de débit d'échappement (53) pour réguler le débit des gaz d'échappement s'écoulant dans la turbine d'échappement, le second moyen de contrôle comprend un moyen de calcul de variable de commande cible pour calculer une variable de commande cible (Rvnt) pour contrôler le moyen de régulation de pression de suralimentation (53, 54) sur la base du paramètre de contrôle EGR cible et du paramètre de contrôle d'admission cible, et un moyen de contrôle de débit d'échappement pour contrôler le moyen de régulation de débit d'échappement (53) sur la base de la variable de commande cible (Rvnt).

13. Moteur diesel selon la revendication 12, dans lequel le moyen de calcul de variable de commande cible calcule la variable de commande cible (Rvnt) sur la base de la quantité EGR réelle (Qec) basée sur le paramètre de contrôle EGR cible (Megr) et sur le paramètre de contrôle d'admission cible (tQac).

14. Moteur diesel selon la revendication 12, dans lequel le moyen de calcul de variable de commande cible calcule la variable de commande cible (Rvnt) sur la base d'un premier paramètre retardé (Megrd) obtenu en effectuant une opération de retardement sur le paramètre de contrôle EGR cible (Megr), et sur le paramètre de contrôle d'admission cible.

15. Moteur diesel selon la revendication 12, dans lequel le moyen de calcul de variable de commande cible comprend un moyen de calcul de variable de commande de base pour calculer une variable de commande de base (Rvntb) sur la base du paramètre de contrôle EGR cible (Megrd) et du paramètre de contrôle d'admission cible (tQas0), un moyen de calcul de quantité de correction pour calculer une quantité de correction (kRvnt) sur la base d'un paramètre lié à l'accélération (dPse) ; et dans lequel le moyen de calcul de variable de commande cible calcule la variable de commande cible (Rvnt) en corrigeant la variable de commande de base (Rvntb) avec la quantité de correction (kRvnt).

16. Moteur diesel selon la revendication 12, dans lequel le moyen de calcul de variable de commande cible comprend un premier moyen de calcul de variable (S522) pour calculer une première variable (Rvnt1) pour améliorer les performances d'émission sur la base du paramètre de contrôle EGR cible (Megrd) et du paramètre de contrôle d'admission cible (tQas0), un second moyen de calcul de variable pour calculer une seconde variable (Rvnth) pour améliorer la consommation de carburant sur la base du paramètre de contrôle EGR cible (Megrd) et du paramètre de contrôle d'admission cible (tQas0), et dans lequel le moyen de calcul de variable de commande cible calcule la variable de commande cible (Rvnt) sur la base de la première variable (Rvnt1), de la seconde variable (Rvnth) et d'un paramètre lié à la température (Tw, kRvnth) corrélé avec une condition de chauffage du moteur.

17. Moteur diesel selon la revendication 12, dans lequel le moyen de calcul de variable de commande cible calcule la variable de commande cible (Rvnt) sur la base du paramètre de contrôle EGR cible (Tqec), du paramètre de contrôle d'admission cible (tQac), d'une vitesse du moteur (Ne), et d'une charge du moteur (Qsol).

18. Moteur diesel selon la revendication 12, dans lequel le moyen de calcul de variable de commande cible calcule la variable de commande cible (Rvnt) sur la base d'une première variable retardée (Tqecd) obtenue en effectuant une opération de retardement sur le paramètre de contrôle EGR cible (Tqec), d'une seconde variable retardée (tQacd2) obtenue par une opération de retardement sur le paramètre de contrôle d'admission cible (tQac), d'une vitesse du moteur (Ne), et d'une charge du moteur (Qsol).

19. Moteur diesel selon l'une des revendications 1 à 18, dans lequel le moteur diesel comprend en outre un moyen de détection de pression d'injection de carburant (32) pour détecter une pression d'injection de carburant (rPrail1), et dans lequel le moyen de calcul d'un premier paramètre cible (41) comprend un premier moyen pour calculer un paramètre de base (Megrb) sur la base de la condition de fonctionnement, un second moyen pour calculer une pression cible (tPrail), et un troisième moyen pour calculer une quantité de correction de pression (Rdegr) sur la base d'une différence ou d'un rapport entre la pression d'injection de carburant (rPrail) et la pression cible (tPrail) ; et dans lequel le moyen de calcul d'un premier paramètre cible calcule le paramètre de contrôle EGR cible (Megr) en modifiant le paramètre de base (Megrb) avec la quantité de correction de pression (Rdegr).

20. Processus de contrôle pour contrôler une quantité EGR et une pression de suralimentation dans un moteur diesel possédant un système de recirculation des gaz d'échappement et un système de suralimentation, comprenant :

une première étape de calcul de paramètre cible (S22) consistant à calculer un paramètre de contrôle EGR (Megr, Tqek, Tqec) sur la base d'une condition de fonctionnement détectée d'un moteur ;

une seconde étape de calcul de paramètre cible (S92) consistant à calculer un paramètre de contrôle d'admission représentant l'une d'une quantité d'air d'admission cible (tQac) et d'une pression de suralimentation cible sur la base de la condition de fonctionnement du moteur ;

une première étape de contrôle (figure 5) consistant à contrôler la quantité EGR sur la base du paramètre de contrôle EGR (Megr) ;

**caractérisé par**

une seconde étape de contrôle (figure 15, figure 6) consistant à contrôler la pression de suralimentation sur la base du paramètre de contrôle EGR (Megr) et du paramètre de contrôle d'admission (tQac).

# FIG.1

COMPRESSOR

CONTROL UNIT

ATMOSPHERE

ATMOSPHERE

VACUUM PUMP

VACUUM PUMP

EP 1 077 320 B1

**FIG.2**

EP 1 077 320 B1

# FIG.3

CALCULATION OF TARGET
FUEL INJECTION QUANTITY Qsol — REF

READ ENGINE SPEED Ne — S1

READ ACCELERATOR
OPENING DEGREE Cl — S2

CALCULATE BASE FUEL
INJECTION QUANTITY Mqdrv — S3

CALCULATE TARGET FUEL
INJECTION QUANTITY Qsol
FROM Mqdrv BY
CORRECTIONS — S4

END

# FIG.4

GREATER

Mqdrv

GREATER

Cl

SMALLER

Ne          GREATER

EP 1 077 320 B1

# FIG.5

CALCULATION OF EGR
VALVE OPENING AREA Aev — REF

CALCULATE TARGET EGR
QUANTITY Tqek — S11

CALCULATE EGR FLOW
VELOCITY Cqe — S12

Aev=Tqek/Cqe — S13

END

# FIG.6

EGR VALVE DRIVE SIGNAL

Aev

39

# FIG.7

```
   ┌────────────────────────────┐
   │  CALCULATION OF TARGET     │
   │  EGR QUANTITY Tqek         │
   └────────────────────────────┘
                │
                ▼
   ┌────────────────────────────┐
   │      CALCULATE Qacn        │──── S21
   └────────────────────────────┘
                │
                ▼
   ┌────────────────────────────┐
   │      CALCULATE Megr        │──── S22
   └────────────────────────────┘
                │
                ▼
   ┌────────────────────────────┐
   │      Mqec=Qacn×Megr        │──── S23
   └────────────────────────────┘
                │
                ▼
   ┌────────────────────────────┐
   │  Rqec=Mqec×KIN×KVOL        │──── S24
   │  +Rqec_{n-1}×(1-KIN×KVOL)  │
   └────────────────────────────┘
                │
                ▼
   ┌────────────────────────────┐
   │  Tqec=GKQEC×Mqec           │──── S25
   │  -(GKQEC-1)×Rqec_{n-1}     │
   └────────────────────────────┘
                │
                ▼
   ┌────────────────────────────┐
   │  Tqek=Tqec×(Ne/KCON#)      │──── S26
   │  /Kqac00                   │
   └────────────────────────────┘
                │
                ▼
             ( END )
```

$$Mqec = Qacn \times Megr$$

$$Rqec = Mqec \times KIN \times KVOL + Rqec_{n-1} \times (1 - KIN \times KVOL)$$

$$Tqec = GKQEC \times Mqec - (GKQEC - 1) \times Rqec_{n-1}$$

$$Tqek = Tqec \times (Ne/KCON\#)/Kqac00$$

EP 1 077 320 B1

# FIG.8

CALCULATION OF CYLINDER
INTAKE AIR QUANTITY Qac    REF

READ ENGINE SPEED Ne    — S41

$Qac0 = (Qas0/Ne) \times KCON\#$    — S42

$Qacn = Qac0_{n-L}$    — S43

$Qac = Qac_{n-1} \times (1 - KIN \times KVOL) + Qacn \times KIN \times KVOL$    — S44

END

# FIG.9

DETECTION OF
INTAKE AIR QUANTITY

READ AIR FLOW METER
OUTPUT VOLTAGE (Us)    — S51

CONVERSION FROM
VOLTAGE TO FLOW
RATE(Qas0_d)    — S52

WEIGHTED AVERAGE
(Qas0)    — S53

END

41

# FIG.10

GREATER

INTAKE
AIR
QUANTITY

AIR FLOWMETER
OUTPUT VOLTAGE       GREATER

# FIG.11

```
        ╭─────────────────────────╮
        │      CALCULATION OF      │    REF
        │  TARGET EGR RATE Megr    │
        ╰─────────────────────────╯
                     │
                     ▼
        ┌─────────────────────────┐
        │   READ Ne, Qsol, Tw, tPrail  │──── S61
        │        AND rPrail        │
        └─────────────────────────┘
                     │
                     ▼
        ┌─────────────────────────┐
        │     CALCULATE Megrb      │──── S62
        └─────────────────────────┘
                     │
                     ▼
        ┌─────────────────────────┐
        │    CALCULATE Kegr_tw     │──── S63
        └─────────────────────────┘
                     │
                     ▼
        ┌─────────────────────────┐
        │     CALCULATE Rdegr      │──── S64
        └─────────────────────────┘
                     │
                     ▼
        ┌───────────────────────────────────┐
        │ Megr=Megrb×Kegr_tw×(1−Rdegr)      │──── S65
        └───────────────────────────────────┘
                     │
                     ▼
        ┌─────────────────────────┐
        │    DETECT COMPLETE       │──── S66
        │       EXPLOSION          │
        └─────────────────────────┘
                     │              ╱ S67
                     ▼
        ╱─────────────────────────╲    YES
        ╲   COMPLETE EXPLOSION?    ╱──────┐
                     │                    │
                    NO                    │
                     ▼                    │
        ┌─────────────────┐              │
        │     Megr=0      │──── S68      │
        └─────────────────┘              │
                     │◄──────────────────┘
                     ▼
              ╭─────────────╮
              │     END     │
              ╰─────────────╯
```

# FIG.12

GREATER

SMALLER

Qsol

GREATER

Ne          GREATER .

# FIG.13

1.0

Kegr_tw

0

TW          80°C     HIGHER

# FIG.14

DETECTION OF COMPLETE EXPLOSION ) REF

READ Ne — S81

S82
Ne > NRPMK ?    NO

YES  S83
Tmrkb > TMRKBP ?    NO

S86
Tmrkb = 0

YES

S85
$Tmrkb = Tmrkb_{n-1} + 1$

S87
INCOMPLETE

S84
COMPLETE EXPLOSION

END

# FIG.15

```
   ┌──────────────────────────────┐
   │  CALCULATION OF CONTROL      │   10msec JOB
   │  COMMAND Dtyvnt              │
   └──────────────────────────────┘
                 │
                 ▼
   ┌──────────────────────────────┐
   │  CALCULATE ACTUAL EGR RATE   │──── S91
   │  Megrd                       │
   └──────────────────────────────┘
                 │
                 ▼
   ┌──────────────────────────────┐
   │  CALCULATE TARGET INTAKE AIR │──── S92
   │  QUANTITY tQac               │
   └──────────────────────────────┘
                 │
                 ▼
   ┌──────────────────────────────┐
   │  CALCULATE ACTUAL EGR        │──── S93
   │  QUANTITY Qec                │
   └──────────────────────────────┘
                 │
                 ▼
   ┌──────────────────────────────┐
   │  READ TARGET OPENING RATIO Rvnt │──── S94
   └──────────────────────────────┘
                 │
                 ▼
   ┌──────────────────────────────┐
   │  ADVANCE (Avnt_f)            │──── S95
   └──────────────────────────────┘
                 │
                 ▼
   ┌──────────────────────────────┐
   │  CALCULATE F/B QUANTITY (Avnt_fb) │──── S96
   └──────────────────────────────┘
                 │
                 ▼
   ┌──────────────────────────────┐
   │  LINEARIZATION (Ratdty)      │──── S97
   └──────────────────────────────┘
                 │
                 ▼
   ┌──────────────────────────────┐
   │  SIGNAL TRANSFORMATION (Dtyvnt) │──── S98
   └──────────────────────────────┘
                 │
                 ▼
            ┌──────────┐
            │   END    │
            └──────────┘
```

# FIG.16

CALCULATION OF CONTROL COMMAND Dtyvnt    10msec JOB

CALCULATE ACTUAL EGR RATE Megrd — S91

CALCULATE TARGET INTAKE AIR QUANTITY tQac — S92

READ TARGET OPENING RATIO Rvnt — S99

ADVANCE (Avnt_f) — S95

CALCULATE F/B QUANTITY (Avnt_fb) — S96

LINEARIZATION (Ratdty) — S97

SIGNAL TRANSFORMATION (Dtyvnt) — S98

END

# FIG.17

CALCULATION OF ACTUAL EGR RATE Megrd — REF

READ TARGET EGR RATE Megr — S111

CALCULATE Kkin — S112

WEIGTED AVERAGE
$Megrd = Megr \times Kkin \times Ne \times KE2\#$
$+ Megrd_{n-1} \times (1 - Kkin \times Ne \times KE2\#)$ — S113

END

# FIG.18

CALCULATION OF Kkin — REF

READ Ne, Qsol AND $Megrd_{n-1}$ — S121

CALCULATE Kinb — S122

$Kin = Kinb \times \dfrac{1}{1 + Megrd_{n-1}/100}$ — S123

$Kkin = Kin \times KVOL$ — S124

END

# FIG.19

VOLUMETRIC EFFICIENCY
VARIABLE Kinb

GREATER

LOAD
(FUEL
INJECTION
QUANTITY)

Kinb

SMALLER

ENGINE SPEED

# FIG.20

CALCULATION OF TARGET
INTAKE AIR QUANTITY tQac      ) 10msec JOB

READ Ne, Qsol AND Megrd      ~S141

S142

Megrd > MEGRLV# ?      NO

YES  S143

CALCULATE tQacb

S146

CALCULATE tQac FROM
Ne AND Qsol

S144

CALCULATE ktQac

S145

tQac = tQacb × ktQac

END

49

# FIG.21

**BASE TARGET INTAKE QUANTITY tQacb**

GREATER

Megrd

tQacb

SMALLER

ENGINE SPEED

# FIG.22

**TARGET INTAKE QUANTITY CORRECTION COEFFICIENT ktQac**

GREATER

Qsol

ktQac

SMALLER

ENGINE SPEED

EP 1 077 320 B1

# FIG.23

## TARGET INTAKE AIR QUANTITY

GREATER

Qsol

tQac

SMALLER

ENGINE SPEED

# FIG.24

CALCULATION OF ACTUAL EGR QUANTITY Qec — REF

READ Qacn, Megr AND Kkin — S151

$Qec0 = Qacn \times Megr$ — S152

WEIGHTED AVERAGE
$Qec = Qec0 \times Kkin \times Ne \times KE\# + Qec_{n-1} \times (1 - Kkin \times Ne \times KE\#)$ — S153

END

51

# FIG.25

CALCULATION OF TARGET
OPENING RATIO Rvnt

READ tQac, Qec, Ne AND Qsol — *S161*

$tQas0 = (tQac + Qsol \times QFGAN\#) \times Ne/KCON\#$ — *S162*

$Qes0 = (Qec + Qsol \times QFGAN\#) \times Ne/KCON\#$ — *S163*

SET Rvnt — *S164*

END

# FIG.26

**TARGET OPENING RATIO**

# FIG.27

$$( \text{CALCULATION OF TARGET OPENING RATIO Rvnt} ) \quad \text{REF}$$

READ tQac, Megrd, Ne AND Qsol ~ S171

$$tQas0 = (tQac + Qsol \times QFGAN\#) \times Ne/KCON\#$$ ~ S172

SET Rvnt ~ S173

END

# FIG.28

## TARGET OPENING RATIO

# FIG.29

CALCULATION OF Avnt_f (ADVANCE)   10msec JOB

READ Rvnt — S181

S182
Rvnt > $Cavnt_{n-1}$ ?  → NO

YES

S183
Gkvnt = GKVNTO#

S184
Tcvnt=TCVNTO#

S185
Rvnt < $Cavnt_{n-1}$ ?  → NO

YES

S186
Gkvnt = GKVNTC#

S187
Tcvnt=TCVNTC#

S188
Gkvnt=$Gkvnt_{n-1}$

S189
Tcvnt=$Tcvnt_{n-1}$

S190
Cavnt=Rvnt×Tcvnt +$Cavnt_{n-1}$×(1−Tcvnt)

S191
Avnt_f=Gkvnt×Rvnt −(Gkvnt−1)×$Cavnt_{n-1}$

END

EP 1 077 320 B1

EP 1 077 320 B1

# FIG.30

CALCULATION OF TARGET
OPENING RATIO
F/B QUANTITY — 10msec JOB

READ tQac, Megr, Ne, Qsol AND Qac — S821

Megr < MEGRLV# ? — S822

dQac = 0 — S823

dQac = tQac/Qac − 1 — S824

SET F/B GAIN CORRECTION
COEFFICIENT (Kh)
FROM Ne AND Qsol — S825

Kp = KPB#×Kh
Ki = KIB#×Kh
Kd = KDB#×Kh — S826

PID F/B (Avnt_fb) — S827

END

57

# FIG.31

```
        ( LINEARIZATION )  10msec JOB
                 │
                 ▼
   ┌─────────────────────────┐
   │ READ Avnt_f AND Avnt_fb │ ── S831
   └─────────────────────────┘
                 │
                 ▼
   ┌─────────────────────────┐
   │   Avnt=Avnt_f+Avnt_fb   │ ── S832
   └─────────────────────────┘
                 │
                 ▼
   ┌─────────────────────────┐
   │       SET Ratdty        │ ── S833
   └─────────────────────────┘
                 │
                 ▼
           (    END    )
```

# FIG.32

## LINEARIZATION TABLE

Ratdty vs Avnt

# FIG.33

# FIG.34

SIGNAL TRANSFORMATION
(DUTY SETTING)  10 msec JOB

READ Ne, Qsol, Ratdty, Tcvnt AND Tw — S851

SET DUTY SELECT SIGNAL FLAG — S852

CALCULATE TEMPERATURE
CORRECTION QUANTITY Dty_t — S853

S854
fvnt = 1 ?

S855
SET Duty_h BY MAP
Duty_h_p

S856
SET Duty_l BY MAP
Duty_l_p

S857
SET Duty_h BY MAP
Duty_h_n

S858
SET Duty_l BY MAP
Duty_l_n

$Dty\_h = (Duty\_h - Duty\_l) \times Ratdty + Duty\_l + Dty\_t$ — S859

S860
fvnt2 = 1 ?  NO

YES  S861
$Dtyv = Dtyvnt_{n-1}$

S862
$Dtyv = Dty\_h$

VERIFICATION CONTROL
(Dtyvnt) — S863

END

# FIG.35

SETTING OF DUTY
SELECT SIGNAL FLAG    10msec JOB

READ Avnt AND Tcvnt — S881

$$Adlyvnt = Avnt \times Tcvnt + Adlyvnt_{n-1} \times (1 - Tcvnt)$$ — S882

$Adlyvnt \geqq Adlyvnt_{n-M}$ ? — S883

NO → fvnt1 = 0 — S885

YES

fvnt1 = 1 — S884

$Adlyvnt = Adlyvnt_{n-M}$ ? — S886

NO →

YES

fvnt2 = 1 — S887    fvnt2 = 0 — S888

END

# FIG.36

$$\text{CALCULATION OF} \\ \text{TEMPERATURE CORRECTION} \\ \text{QUANTITY Dty\_t}$$  REF

READ Ne, Qsol AND Tw  ~S891

CALCULATE BASE EXHAUST TEMPERATURE Texhb  ~S892

CALCULATE Ktexh_tw  ~S893

Texhi = Texhb×Ktexh_tw  ~S894

FIRST ORDER LAG
$$\text{Texhdly} = \text{Texhi} \times \text{KEXH\#} \\ + \text{Texhdly}_{n-1} \times (1 - \text{KEXH\#})$$  ~S895

dTexh = Texhb−Texhdly  ~S896

CALCULATE Dty_t  ~S897

END

# FIG.37

**BASE EXHAUST TEMPERATURE**

# FIG.38

# FIG.39

**TEMPERATURE
CORRECTION QUANTITY**

# FIG.40

# FIG.41

Duty_h_p

LOAD
(FUEL
INJECTION
QUANTITY)

ENGINE SPEED

# FIG.42

Duty_l_p

LOAD
(FUEL
INJECTION
QUANTITY)

ENGINE SPEED

# FIG.43

Duty_h_n

LOAD
(FUEL
INJECTION
QUANTITY)

ENGINE SPEED

# FIG.44

Duty_l_n

LOAD
(FUEL
INJECTION
QUANTITY)

ENGINE SPEED

# FIG.45

# FIG.46

VERIFICATION CONTROL (Dtyvnt) — 10msec JOB

READ Dtyv, Ne, Qsol AND Tw — *S211*

*S212*
Qsol < QSOLDIZ# ? — NO

YES *S213*
Ne < NEDIZ# ? — NO

YES *S214*
Tw < TWDIZ# ? — NO

*S213*
fdiz = 0

YES
*S215*
fdiz = 1 ? — YES

NO *S216*
$Ctrdiz = Ctrdiz_{n-1} + 1$ ?

*S217*
Ctrdiz < CTRDIZH# ? — NO

YES

*S220*
$Ctrdiz_{n-1} < CTRDIZH#$ ? — NO

YES *S221*
Dtyvnt = 0

*S224*
Ctrdiz = 0

*S218*
Ctrdiz ≧ CTRDIZL# ? — NO

YES *S219*

*S222*
fdiz = 1

*S225*
Dtyvnt = Dtyv

SET VERIFICATION CONTROL COMMAND

END

# FIG.47

SETTING OF VERIFICATION
CONTROL COMMAND    10msec JOB

READ Ctrdiz AND Ne — *S231*

SET Duty_pu FROM
Ctrdiz_CTRDIZL# — *S232*

SET Duty_p_ne FROM Ne — *S233*

Dtyvnt =Duty_pu
×Duty_p_ne — *S234*

END

# FIG.48

**CONTROL PATTERN**

Duty_pu

Ctrdiz-CTRDIZL#

# FIG.49

**Duty_p_ne**

Duty_p_ne

0

Ne

# FIG.50

CALCULATION OF F/B QUANTITY   REF

READ tQac, Qac, Ne, AND Qsol ~S241

WEIGHTED AVERAGE OF tQac
$tQacd = tQac \times KIN \times KVOL \times KQA\#$
$+ tQacd_{n-1} \times (1 - KIN \times KVOL \times KQA\#)$  ~S242

READ fefb, felrn, AND felrn2 ~S243

S244 — fefb = 1 ?  —NO→

YES
S245 CALCULATE Kqac00

S246 CALCULATE Kqac0

S247 Kqac00 = 0
S248 Kqac0 = 0

S249 — felrn2 = 1 ?  —NO→

YES
READ Rqac ~S250

Kqac = Rqac+1 ~S251

S252 Kqac = 1

S253 — felrn = 1 ?  —NO→

YES
Rqacn = Kqac0−1 ~S254

S255 Rqacn = 0

UPDATE LEARN VALUE ~S256

END

# FIG.51

**SETTING OF F/B PERMISSION FLAG fefb**

READ Ne, Qsol, Megrd AND Tw — S261

Megrd > MEGRFB# ? — S262

Tw > TWFBL# ? — S263

Qsol > QSOLFBL# ? — S264

Ne > NEFBL# ? — S265

$Ctrfb = Ctrfb_{n-1} + 1$ — S266

Ctrfb = 0 — S267

Ctrfb > TMRFB# ? — S268

fefb = 1 — S269

ferb = 0 — S270

END

72

EP 1 077 320 B1

# FIG.52

SETTING OF LEARN VALUE
REFLECTION PERMISSION
FLAG felrn2

READ Ne, Qsol, Megrd AND Tw — S281

S282
Megrd > MEGRLN2# ? — NO

YES — S283
Tw > TWLNL2# ? — NO

YES — S284
Qsol > QSOLLNL2# ? — NO

YES — S285
Ne > NELNL2# ? — NO

YES — S286
$Ctrln2 = Ctrln2_{n-1} + 1$

S288
Ctrln2 > TMRLN2# ? — NO

YES — S289
feln2 = 1

S287
Ctrln2 = 0

S290
feln2 = 0

END

73

EP 1 077 320 B1

# FIG.53

SETTING OF LEARNING
PERMISSION FLAG felrn ) 10msec JOB

READ Ne, Qsol, Megrd AND Tw — S311

S312
Megrd > MEGRLN# ? — NO

YES S313
Tw > TWLNL# ? — NO

YES S314
Qsol > QSOLLNL# ? — NO

YES S315
Ne > NELNL# ? — NO

YES S316
fefb = 1 ? — NO

YES S317
felrn2 = 1 ? — NO

YES S318
$Ctrln = Ctrln_{n-1} + 1$

S319
Ctrln = 0

S320
Ctrln > TMRLN# ? — NO

YES S321
feln = 1

S322
feln = 0

END

74

# FIG.54

```
        ╭─────────────────────╮
        │  CALCULATION OF      │  REF
        │      Kqac00          │
        ╰─────────────────────╯
                  │
        ┌─────────────────────┐
        │ READ tQacd, Qac, Ne, │ ~ S331
        │    Qsol AND Tw       │
        └─────────────────────┘
                  │
        ┌─────────────────────┐
        │   CALCULATE Gkfb     │ ~ S332
        └─────────────────────┘
                  │
        ┌─────────────────────┐
        │  CALCULATE Kgfbtw    │ ~ S333
        └─────────────────────┘
                  │                    S334
        ┌───────────────────────────────────┐
        │ Kqac00 = (tQacd/Qac−1)×Gkfb×Kgfbtw+1 │
        └───────────────────────────────────┘
                  │
             ╭─────────╮
             │   END   │
             ╰─────────╯
```

EP 1 077 320 B1

# FIG.55

**EGR FLOW RATE
CORRECTION GAIN**

Qsol

GKfb

Ne

# FIG.56

**TEMPERATURE
CORRECTION COEFFICIENT**

1.0

Kgfbtw

0

Tw

80°C

EP 1 077 320 B1

# FIG.57

```
        ┌─────────────────────┐
        │   CALCULATION OF     │
        │       Kqac0          │
        └─────────────────────┘
                   │
                   ▼
        ┌─────────────────────┐
        │  READ tQacd, Qac, Ne, │──── S341
        │    Qsol AND Tw       │
        └─────────────────────┘
                   │
                   ▼
        ┌─────────────────────┐
        │   CALCULATE Gkfbi    │──── S342
        └─────────────────────┘
                   │
                   ▼
        ┌─────────────────────┐
        │  CALCULATE Kgfbitw   │──── S343
        └─────────────────────┘
                   │                      S344
                   ▼
┌───────────────────────────────────────────────┐
│ Rqac0 = (tQacd/Qac−1)×Gkfbi×Kgfbitw+Rqac0_{n−1} │
└───────────────────────────────────────────────┘
                   │
                   ▼
        ┌─────────────────────┐
        │   Kqac0 = Rqac0+1    │──── S345
        └─────────────────────┘
                   │
                   ▼
             ┌───────────┐
             │    END    │
             └───────────┘
```

$$Rqac0 = (tQacd/Qac - 1) \times Gkfbi \times Kgfbitw + Rqac0_{n-1}$$

$$Kqac0 = Rqac0 + 1$$

# FIG.58

**EGR FLOW VELOCITY
CORRECTION GAIN**

Qsol

GKfbi

Ne

# FIG.59

**TEMPERATURE
CORRECTION COEFFICIENT**

1.0

Kgfbitw

0

Tw          80°C

# FIG.60

**LEARNING MAP**

| | | | |
|---|---|---|---|
| Rqac14 | • • • | • • • | Rqac44 |
| • • • | • • • | • • • | • • • |
| • • • | • • • | • • • | • • • |
| Rqac11 | • • • | • • • | Rqac41 |

**FUEL INJECTION QUANTITY Qsol** (vertical axis)

**ENGINE SPEED Ne**

EP 1 077 320 B1

# FIG.61

.                                    .                          .

.

.

```
        ┌─────────────────────┐
        │      UPDATE OF       │
        │     LEARN VALUE      │
        └─────────┬───────────┘
                  ↓
   ┌──────────────────────────────┐
   │  READ Rqacn, Ne AND Qsol     │──── S361
   └──────────────┬───────────────┘
                  ↓
   ┌──────────────────────────────┐
   │      CALCULATE Tclrn          │──── S362
   └──────────────┬───────────────┘
                  ↓
   ┌──────────────────────────────┐
   │        READ Rqac              │──── S363
   └──────────────┬───────────────┘
                  ↓
   ┌──────────────────────────────┐
   │     WEIGHTED AVERAGE          │──── S364
   └──────────────┬───────────────┘
                  ↓
   ┌──────────────────────────────┐
   │  STORE LEARNING MAP VALUE     │──── S365
   └──────────────┬───────────────┘
                  ↓
             (   END   )
```

WEIGHTED AVERAGE
$$Rqac_n = Rqacn \times Tclrn + Rqac_{n-1} \times (1 - Tclrn)$$

80

# FIG.62

## LEARNING SPEED

Qsol

Tclrn

Ne

# FIG.63

```
    ┌─────────────────────────┐
    │  CALCULATION OF EGR     │  REF
    │  FLOW VELOCITY Cqe      │
    └─────────────────────────┘
                │
                ▼
    ┌─────────────────────────┐
    │  READ Qec, Megrd AND Qac│──── S381
    └─────────────────────────┘
                │
                ▼
    ┌─────────────────────────┐
    │  READ Kqac0 AND Kqac    │──── S382
    └─────────────────────────┘
                │
                ▼
    ┌─────────────────────────┐
    │  Qec_h = Qec×Kqac×Kqac0 │──── S383
    └─────────────────────────┘
                │        S384
                ▼
         ╱─────────────╲          NO
        ⟨  Qec_h = 0 ?  ⟩──────────┐
         ╲─────────────╱           │
                │ YES   S385        │
                ▼                   │
    ┌─────────────────────────┐    │
    │  Qec_h = Qac×MEGRL#     │    │
    └─────────────────────────┘    │
                │        S386       │
                ▼◄──────────────────┘
         ╱─────────────╲          NO
        ⟨  Megrd = 0 ?  ⟩─────────┐
         ╲─────────────╱          │
                │ YES   S387       │
                ▼                  │
    ┌─────────────────────────┐   │
    │  Megrd = MEGRL#         │   │
    └─────────────────────────┘   │
                │        S388      │
                ▼◄─────────────────┘
    ┌─────────────────────────┐
    │  CALCULATE Cqe          │
    └─────────────────────────┘
                │
                ▼
         ┌───────────┐
         │    END    │
         └───────────┘
```

# FIG.64

**EGR FLOW VELOCITY**

EGR RATE
Megrd

EGR QUANTITY
Qec_h

EP 1 077 320 B1

# FIG.65

ACCELERATOR
OPENING DEGREE

Qsol

EGR RATE

Megrd

Megr

INTAKE AIR
QUANTITY

tQac

Qac

TARGET
OPENING RATIO

Rvnt

DUTY RATIO

Dtyvnt

84

# FIG.66

ACCELERATOR
OPENING DEGREE

Qsol

EGR RATE

Megrd

Megr

INTAKE AIR
QUANTITY

tQac

Qac

TARGET
OPENING RATIO

Rvnt

DUTY RATIO

Dtyvnt

EP 1 077 320 B1

# FIG.67

CALCULATION OF TARGET
OPENING RATIO Rvnt ) REF

READ tQac, Megrd, Ne AND Qsol —S171

$tQas0 = (tQac + Qsol \times QFGAN\#) \times Ne/KCON\#$ —S172

SET Rvntb —S511

$Pse = Ne \times Qsol$ —S512

$dPse = Pse - Pse_{n-1}$ —S513

SET kRvnt —S514

$Rvnt = Rvntb \times kRvnt$ —S515

END

86

# FIG.68

**OPENING RATIO
CORRECTION COEFFICIENT**

EP 1 077 320 B1

# FIG.69

CALCULATION OF TARGET
OPENING RATIO Rvnt      REF

READ tQac, Megrd, Ne AND Qsol —S171

tQas0 = (tQac+Qsol×QFGAN#)
×Ne/KCON# —S172

SET Rvnth —S521

SET Rvntl —S522

SET kRvnth —S523

Rvnt = (Rvnth−Rvntl)×kRvnth+Rvntl —S524

END

88

# FIG.70

TARGET OPENING RATIO

# FIG.71

**INTERPOLATION RATIO**

# FIG.72

## TARGET OPENING RATIO

# FIG.73

# FIG.74

EP 1 077 320 B1

# FIG.75

CALCULATION OF TARGET OPENING RATIO Rvnt ) REF

↓

READ Megr — S541

↓

S542
Megr = 0 ?  —YES→

NO  S543

READ Ne, Qsol, tQac AND Tqec

↓ S544

DETERMINE SPEED SECTION (RN1~RN3)

↓ S545

DETERMINE INJECTION QUANTITY SECTION (RQ1~RQ3)

↓ S546

SET DY1~DY4 BY RETRIEVING 4 SURROUNDING MAP VALUES

↓ S547

CALCULATE Rvnt3

↓ S548

Rvnt = Rvnt3

S549
READ tQac AND Qsol

↓ S550

$tQa = tQac \times Ne/KCON\#$

↓ S551

CALCULATE Rvnt4

↓ S552

Rvnt = Rvnt4

↓

END

# FIG.76

EP 1 077 320 B1

# FIG.77

OP : OPEN
CL : CLOSED
GR : GREATER
SM : SMALLER

96

EP 1 077 320 B1

# FIG.78

MAP

MAP

MAP

MAP

TURBINE
EFFICIENCY
η

Ne1        Ne2        Ne3        Ne4

EXHAUST FLOW RATE [kg/s]
ENGINE SPEED

# FIG.79

MAP

MAP

MAP

MAP

MAP

TURBINE
EFFICIENCY
η

EXHAUST FLOW RATE [kg/s]
ENGINE SPEED

97

# FIG.80

MAP

MAP

MAP

TURBINE
EFFICIENCY
η

EXHAUST FLOW RATE [kg/s]
ENGINE SPEED

# FIG.81

BAD

—●— 2000rpm 60Nm EGR0%
—▲— 2000rpm 60Nm EGR20%
—■— 2000rpm 60Nm EGR30%

FUEL
CONSUMPTION
g/kWh

ABOUT
10%

GOOD

0.0        25.0        50.0        75.0        100.0

OPENING RATIO %

# FIG.82

# FIG.83

EP 1 077 320 B1

# FIG.84

**TARGET OPENING RATIO**

101

EP 1 077 320 B1

# FIG.85

CALCULATION OF TARGET
OPENING RATIO Rvnt        REF

READ Megr ── S541

Megr = 0 ?  S542

YES

NO   S543

READ Ne, Qsol,
tQac AND Tqec

S561

WEIGHTED AVERAGE
OF tQac(tQacd2)

S562

WEIGHTED AVERAGE
OF Tqec(Tqecd)

S544

DETERMINE SPEED
SECTION (RN1~RN3)

S545

DETERMINE INJECTION
QUANTITY SECTION
(RQ1~RQ3)

S546

SET DY1~DY4
BY RETRIEVING
4 SURROUNDING
MAP VALUES

S563

CALCULATE Rvnt3

S548

Rvnt0 = Rvnt3

S565

WEIGHTED AVERAGE
OF Rvnt0(Rvnt)

END

S549

READ tQac AND Qsol

S550

tQa = tQac×Ne/KCON#

S551

CALCULATE Rvnt4

S564

Rvnt0 = Rvnt4

102

# FIG.86

OP : OPEN
CL : CLOSED
GR : GREATER
SM : SMALLER

# FIG.87

**TARGET COMMON RAIL PRESSURE**

# FIG.88

$$\text{CALCULATION OF Rdegr} \quad \text{REF}$$

| | |
|---|---|
| Dprail = tPrail−rPrail | ~ S581 |

| | |
|---|---|
| CALCULATE Degr | ~ S582 |

| | |
|---|---|
| Rdegr = Degr×Qsol×KERAIL# | ~ S583 |

| | |
|---|---|
| $0 \leqq \text{Rdegr} \leqq 1$ | ~ S584 |

$$\text{END}$$

# FIG.89

**COMMON RAIL
PRESSURE DEVIATION
CORRECTION COEFFICIENT**

# FIG.90

FIG.91A  Vsp km/h

FIG.91B  Ne rpm

FIG.91C  Qsol mg/st

FIG.91D  ACTUAL EGR RATE %

EP 1 077 320 B1

FIG.92A    Qac mg/st

FIG.92B    Cqe kg/s/m²

FIG.92C    Kqac

FIG.92D    EXAHAUST PRESSURE mmHg

HIGH EXHAUST PRESSURE

BASE

EP 1 077 320 B1

# FIG.93

CALCULATION OF EGR
FLOW VELOCITY Cqe    REF

S601 — READ Mqec, Megr AND Qac

S602 — $Qec = Mqec \times KIN \times KVOL \times KQE\#$
$+ Qec_{n-1} \times (1 - KIN \times KVOL \times KQE\#)$

S603 — $Regr = Megr \times KIN \times KVOL \times KME\#$
$+ Regr_{n-1} \times (1 - KIN \times KVOL \times KME\#)$

S604 — READ Kqac

S605 — $Qec\_h = Qec \times Kqac$

S606 — $Qec\_h = 0$ ?  NO

YES

S607 — $Qec\_h = Qac \times MEGRL\#$

S608 — $Regr = 0$ ?  NO

YES

S609 — $Regr = MEGRL\#$

S610 — CALCULATE Cqe

END

# FIG.94

```
                    ( CALCULATE OF Kqak )  REF
                              │
S621 ──   READ Megr, Qac, Ne, AND Qsol
                              │
S622 ──        CALCULATE tQacb
                              │
S623 ──        CALCULATE Kqaqf
                              │
S624 ──       Qact0 = tQacb×Kqaqf
                              │
S625 ──   Qact  = Qact0×KIN×KVOL×KQA#
              +Qact n−1 ×(1−KIN×KVOL
                                ×KQA#)
                              │
S626 ──         Regr = 0 ?  ───── NO ─────┐
                    │                       │
                   YES        S627 ──  Rqac0 = Qact/Qac−1
                    │                       │
                    │         S628 ──  WEIGHTED AVERAGING
                    │                  OPERATION (Rqac1)
                    │                       │
S630 ──  Kqac = 1              S629 ──  Kqac = Rqac+1
                    │                       │
                    └───────────┬──────────┘
                              │
                            ( END )
```

EP 1 077 320 B1

# FIG.95

**BASE TARGET INTAKE QUANTITY tQacb**

GREATER    SMALLER

TARGET EGR
RATE Megr

tQacb

GREATER

ENGINE SPEED Ne    GREATER

# FIG.96

**TARGET INTAKE QUANTITY
CORRECYION COEFFICIENT Kqaqf**

Kqaqf

FUEL INJECTION QUANTITY Qsol

112

# FIG.97

CALCULATE OF Kqac    REF

S641 — READ Megr, Ne, AND Qsol

S626 — Regr = 0 ?    NO

YES

S642 — READ Rqac2

S630 — Kqac = 1

S643 — Kqac = Rqac2+1

END

# FIG.98

LEARNING AND UPDATING ) REF

READ Megr,Qac,Ne,Qsol —S621

CALCULATE Qacb —S622

CALCULATE Kqaqf —S623

$Qact0 = Qacb \times Kqaqf$ —S624

$Qact = Qact0 \times KIN \times KVOL \times KQA\# + Qact_{n-1} \times (1 - KIN \times KVOL \times KQA\#)$ —S625

S626
Regr = 0 ?

NO

YES

$Rqac0 = Qact / Qac - 1$ —S627

READ Rqac2 —S658

WEIGHTET AVERAGE —S659

STORE VALUE IN LEARNING MAP —S660

END

# FIG.99

**LEARNING MAP**

| Rqac14 | ... | ... | Rqac44 |
|--------|-----|-----|--------|
| ... | ... | ... | ... |
| ... | ... | ... | ... |
| Rqac11 | ... | ... | Rqac41 |

**FUEL INJECTION QUANTITY Qsol** (vertical axis label)

**ENGINE SPEED Ne**